(19) Europäisches Patentamt
European Patent Office
Office européen des brevets

(11) **EP 4 518 236 A1**

(12) **EUROPEAN PATENT APPLICATION**

(43) Date of publication:
**05.03.2025 Bulletin 2025/10**

(21) Application number: **25152222.3**

(22) Date of filing: **13.12.2022**

(51) International Patent Classification (IPC):
**H04L 5/00** *(2006.01)*    **H04B 7/022** *(2017.01)*
**H04B 7/06** *(2006.01)*

(52) Cooperative Patent Classification (CPC):
**H04B 7/022; H04B 7/06952; H04L 5/0023;**
**H04L 5/0044; H04L 5/0053;** H04L 5/0094

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.12.2021 US 202163288993 P**
**16.12.2021 US 202163290494 P**
**06.12.2022 US 202218062521**

(62) Document number(s) of the earlier application(s) in
accordance with Art. 76 EPC:
**22907890.2 / 4 442 062**

(71) Applicant: **Samsung Electronics Co., Ltd.**
**Suwon-si, Gyeonggi-do 16677 (KR)**

(72) Inventors:
• **Zhu, Dalin**
  **Mountain View, California, 94043 (US)**
• **Farag, Emad N.**
  **Mountain View, California, 94043 (US)**
• **Onggosanusi, Eko**
  **Mountain View, California, 94043 (US)**

(74) Representative: **Gulde & Partner**
**Patent- und Rechtsanwaltskanzlei mbB**
**Berliner Freiheit 2**
**10785 Berlin (DE)**

Remarks:
This application was filed on 16-01-2025 as a
divisional application to the application mentioned
under INID code 62.

(54) **METHOD AND APPARATUS FOR UPLINK CHANNEL AND SIGNAL REPETITION IN WIRELESS COMMUNICATION SYSTEM**

(57) The disclosure relates to a 5G or 6G communication system for supporting a higher data transmission rate. Specifically, the disclosure related to a method performed by a user equipment (UE) in a wireless communication system, the method comprising: receiving, from a base station (BS), first information indicating at least one of a first transmission configuration indication (TCI) state, a second TCI state, or both of the first TCI state and the second TCI state for a physical uplink shared channel (PUSCH) transmission via a radio resource control (RRC) signaling; identifying one among the first TCI state, the second TCI state, or both or the first TCI state and the second TCI state for the PUSCH transmission, based on the first information; and transmitting, to the BS, the PUSCH based on the identification..

**Description**

[Technical Field]

The present disclosure relates generally to wireless communication systems and, more specifically, the present disclosure relates to method and apparatus for uplink channel and signal transmission in a wireless communication system. This application is based on and derives the benefit of U.S. Provisional Patent Application No. 63/288,993, filed on December 13, 2021, U.S. Provisional Patent Application No. 63/290,494, filed on December 16, 2021, and U.S. Non-Provisional Patent Application No. 18/062,521 filed on December 06, 2022. The contents of the above-identified patent documents are incorporated herein by reference.

[Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

[Disclosure of Invention J

[Technical Problem]

The present disclosure relates to wireless communication systems and, more specifically, the present disclosure relates to uplink channel and signal transmission in a wireless communication system.

[Solution to Problem]

The present invention is directed to subject matter as defined in the claims. In one embodiment, a user equipment (UE) is provided. The UE includes a transceiver configured to receive information including a set of transmission configuration indication (TCI) states and a configuration for a first physical uplink shared channel (PUSCH). The UE further includes a processor operably coupled to the transceiver. The processor is configured to identify, according to the information, a set of uplink (UL) TCI states in a beam indication instance; identify, according to the configuration, a mapping configuration and a set of consecutive slots for transmitting on the first PUSCH; and associate TCI states in the set of UL TCI states with consecutive slots in the set of consecutive slots, respectively, based on the mapping configuration. The transceiver is further configured to transmit on the first PUSCH in the consecutive slots according to the respectively associated TCI states.

In another embodiment, a base station (BS) is provided. The BS includes a transceiver configured to transmit information including a set of TCI states and a configuration for a first PUSCH. The BS also includes a processor operably coupled to the transceiver. The processor is configured to identify, according to the information, a set of UL TCI states in a beam indication instance; and identify, according to the configuration, a mapping configuration and a set of consecutive slots for receiving on the first PUSCH. The mapping configuration indicates association of TCI states in the set of UL TCI states with consecutive slots in the set of consecutive slots. The transceiver is further configured to receive on the first PUSCH in the consecutive slots.

In yet another embodiment, a method for operating a UE is provided. The method includes receiving information including a set of TCI states; receiving a configuration for a first PUSCH; and identifying, according to the information, a set of UL TCI states in a beam indication instance. The method further includes identifying, according to the configuration, a mapping configuration and a set of consecutive slots for transmitting on the first PUSCH; associating TCI states in the set of UL TCI states with consecutive slots in the set of consecutive slots, respectively, based on the mapping configuration; and transmitting on the first PUSCH in the consecutive slots according to the respectively associated TCI states.

Other technical features may be readily apparent to one skilled in the art from the following figures, descriptions, and claims.

[Advantageous Effects of Invention]

Aspects of the present disclosure provide efficient communication methods in a wireless communication system.

[Brief Description of Drawings]

For a more complete understanding of the present disclosure and its advantages, reference is now made to the following description taken in conjunction with the accompanying drawings, in which like reference numerals represent like parts:

FIGURE 1 illustrates an example of wireless network according to embodiments of the present disclosure;
FIGURE 2 illustrates an example of gNB according to embodiments of the present disclosure;
FIGURE 3 illustrates an example of UE according to embodiments of the present disclosure;
FIGURE 4 illustrates an example of wireless transmit and receive paths according to this disclosure;
FIGURE 5 illustrates an example of wireless transmit and receive paths according to this disclosure;
FIGURE 6A illustrates an example of wireless system beam according to embodiments of the present disclosure;
FIGURE 6B illustrates an example of multi-beam operation according to embodiments of the present disclosure;
FIGURE 7 illustrates an example of antenna structure according to embodiments of the present disclosure;

FIGURE 8 illustrates an example of multiple transmit receive point (TRP) system according to embodiments of the present disclosure;

FIGURE 9 illustrates an example of media access control-control element (MAC CE) based unified TCI state/beam indication for a multiple TRP operation according to embodiments of the present disclosure;

FIGURE 10 illustrates an example of downlink control information (DCI) based unified TCI state/beam indication for a multiple TRP operation according to embodiments of the present disclosure;

FIGURE 11 illustrates an example of DCI based TCI state/beam indication (with MAC CE activated TCI states) for a multiple TRP operation according to embodiments of the present disclosure.

FIGURE 12 illustrates a block diagram of a terminal (or a user equipment (UE), according to embodiments of the present disclosure; and

FIGURE 13 illustrates a block diagram of a base station, according to embodiments of the present disclosure.

[Best Mode for Carrying out the Invention]

Accordingly, the embodiment herein is to provide a user equipment (UE) in a wireless communication system, the UE includes a transceiver configured to receive information including a set of transmission configuration indication (TCI) states, and a configuration for a first physical uplink shared channel (PUSCH). Further, the UE includes a processor operably coupled to the transceiver, the processor configured to identify, according to the information, a set of uplink (UL) TCI states in a beam indication instance, identify, according to the configuration, a mapping configuration and a set of consecutive slots for transmitting on the first PUSCH, and associate TCI states in the set of UL TCI states with consecutive slots in the set of consecutive slots, respectively, based on the mapping configuration. The transceiver is further configured to transmit on the first PUSCH in the consecutive slots according to the respectively associated TCI states.

In an embodiment, the processor is further configured to associate first and second TCI states in the set of UL TCI states with first and second consecutive slots of two consecutive slots in the set of slots. The transceiver is further configured to transmit on the first PUSCH in the first and second consecutive slots according to the first and second TCI states, respectively.

In an embodiment, a number of slots in the set of consecutive slots is K>2, for the mapping configuration including a cyclic mapping pattern, the processor is further configured to associate first and second TCI states in the set of UL TCI states with first and second consecutive slots in the set of K consecutive slots and continue the cyclic mapping pattern for remaining slots in the set of K consecutive slots. the transceiver is further configured to transmit on the first PUSCH in the set of K consecutive slots according to the cyclically mapped TCI states.

In an embodiment, a number of slots in the set of consecutive slots is K>2, or the mapping configuration including a sequential mapping pattern, the processor is further configured to associate a first TCI state in the set of UL TCI states with first and second consecutive slots in the set of K consecutive slots, associate a second TCI state in the set of UL TCI states with third and fourth consecutive slots in the set of K consecutive slots, and continue the sequential mapping pattern for remaining slots in the set of K consecutive slots, and the transceiver is further configured to transmit on the first PUSCH in the set of K consecutive slots according to the sequentially mapped TCI states.

In an embodiment, the transceiver is further configured to receive a second configuration for a second PUSCH. Further, the processor is further configured to identify, according to the second configuration, a second mapping configuration and a set of nominal PUSCH repetitions for transmitting on the second PUSCH, and associate TCI states in the set of UL TCI states with the set of nominal PUSCH repetitions, respectively, based on the second mapping configuration, the transceiver is further configured to transmit on the second PUSCH in the set of nominal PUSCH repetitions according to the respectively associated TCI states.

In an embodiment, the transceiver is further configured to receive a second configuration for a number of slots for repetitions of a physical uplink control channel (PUCCH) transmission. Further, the processor is further configured to use first and second TCI states in the set of UL TCI states for first and second repetitions of the PUCCH transmission, respectively, or alternate between the first and second TCI states in the set of UL TCI states for a number of repetitions of the PUCCH transmission.

In an embodiment, the processor is further configured to identify a reference signal (RS) based on a TCI state in the set of UL TCI states. The processor is further configured to identify a slot in the set of consecutive slots associated with the TCI state. The processor is further configured to estimate, based on the RS, a downlink (DL) pathloss for the slot.

In an embodiment, the processor is further configured to identify a reference signal (RS) based on a TCI state in the set of UL TCI states. The processor is further configured to identify a nominal PUSCH repetition in a set of nominal PUSCH repetitions associated with the TCI state. The processor is further configured to estimate, based on the RS, a downlink (DL) pathloss for the nominal PUSCH repetition.

Accordingly, the embodiment herein is to provide a base station (BS) in a wireless communication system. The BS includes a transceiver configured to transmit information including a set of transmission configuration indication (TCI) states and a configuration for a first physical uplink shared channel (PUSCH). The BS includes a processor operably coupled to the transceiver, the processor configured to identify, according to the information, a set of uplink (UL) TCI states in a beam indication instance. The processor configured to identify, according to the configuration, a mapping configuration and a set of consecutive slots for receiving on the first PUSCH. Further, the mapping configuration indicates association of TCI states in the set of UL TCI states with consecutive slots in the set of consecutive slots. Further, the transceiver is further configured to receive on the first PUSCH in the consecutive slots.

In an embodiment, the mapping configuration indicates association of first and second TCI states in the set of UL TCI states with first and second consecutive slots of two consecutive slots in the set of slots. Further, the transceiver is further configured to receive on the first PUSCH in the first and second consecutive slots.

In an embodiment, a number of slots in the set of consecutive slots is K>2, for the mapping configuration including a cyclic mapping pattern, the mapping configuration indicates association of first and second TCI states in the set of UL TCI states with first and second consecutive slots in the set of K consecutive slots and to continue the cyclic mapping pattern for remaining slots in the set of K consecutive slots. The transceiver is further configured to receive on the first PUSCH in the set of K consecutive slots.

In an embodiment, a number of slots in the set of consecutive slots is K>2, for the mapping configuration including a sequential mapping pattern, the mapping configuration indicates association of a first TCI state in the set of UL TCI states with first and second consecutive slots in the set of K consecutive slots, association of a second TCI state in the set of UL TCI states with third and fourth consecutive slots in the set of K consecutive slots, and to continue the sequential mapping pattern for remaining slots in the set of K consecutive slots. The transceiver is further configured to receive on the first PUSCH in the set of K consecutive slots.

In an embodiment, the transceiver is further configured to transmit a second configuration for a second PUSCH. the processor is further configured to identify, according to the second configuration, a second mapping configuration and a set of nominal PUSCH repetitions for receiving on the second PUSCH. the second mapping configuration indicates association of TCI states in the set of UL TCI states with the set of nominal PUSCH repetitions, respectively, the transceiver is further configured to receive on the second PUSCH in the set of nominal PUSCH repetitions.

In an embodiment, the transceiver is further configured to transmit a second configuration for a number of slots for repetitions of a physical uplink control channel (PUCCH) transmission. The transceiver is further configured to receive the repetitions of the PUCCH transmission according to the second configuration.

In an embodiment, a TCI state in the set of UL TCI states indicates a reference signal (RS) to estimate downlink (DL) pathloss for a slot in the set of consecutive slots associated with the TCI state.

In an embodiment, a TCI state in the set of UL TCI states indicates a reference signal (RS) to estimate downlink (DL) pathloss for a nominal PUSCH repetition in a set of nominal PUSCH repetitions associated with the TCI state.

Accordingly, the embodiment herein is to provide a method for operating a user equipment (UE). The UE includes receiving information including a set of transmission configuration indication (TCI) states. Further, the UE includes receiving a configuration for a first physical uplink shared channel (PUSCH). Further, the UE includes identifying, according to the information, a set of uplink (UL) TCI states in a beam indication instance. Further, the UE includes identifying, according to the configuration, a mapping configuration and a set of consecutive slots for transmitting on the first PUSCH. Further, the UE includes associating TCI states in the set of UL TCI states with consecutive slots in the set of consecutive slots, respectively, based on the mapping configuration. Further, the UE includes transmitting on the first PUSCH in the consecutive slots according to the respectively associated TCI states.

In an embodiment, associating TCI states in the set of UL TCI states with consecutive slots in the set of consecutive slots, respectively, comprises associating first and second TCI states in the set of UL TCI states with first and second consecutive slots of two consecutive slots in the set of slots. Further, transmitting on the first PUSCH in the consecutive slots according to the respectively associated TCI states comprises transmitting on the first PUSCH in the first and second consecutive slots according to the first and second TCI states, respectively.

In an embodiment, a number of slots in the set of consecutive slots is K>2, for the mapping configuration including a cyclic mapping pattern, associating TCI states in the set of UL TCI states with consecutive slots in the set of consecutive slots, respectively, comprises associating first and second TCI states in the set of UL TCI states with first and second consecutive slots in the set of K consecutive slots and continuing the cyclic mapping pattern for remaining slots in the set of K consecutive slots. Further, transmitting on the first PUSCH in the consecutive slots according to the respectively associated TCI states comprises transmitting on the first PUSCH in the set of K consecutive slots according to the cyclically mapped TCI states.

In an embodiment, the UE includes receiving a second configuration for a second PUSCH. Further, the UE includes identifying, according to the second configuration, a second mapping configuration and a set of nominal PUSCH repetitions for transmitting on the second PUSCH. Further, the UE includes associating TCI states in the set of UL TCI states with the set of nominal PUSCH repetitions, respectively, based on the second mapping configuration. Further, the UE includes transmitting on the second PUSCH in the set of nominal PUSCH repetitions according to the respectively associated TCI states.

[Mode for Invention]

5th generation (5G) or new radio (NR) mobile communications is recently gathering increased momentum with all the worldwide technical activities on the various candidate technologies from industry and academia. The candidate enablers for the 5G/NR mobile communications include massive antenna technologies, from legacy cellular frequency bands up to high frequencies, to provide beamforming gain and support increased capacity, new waveform (e.g., a new radio access technology (RAT)) to flexibly accommodate various services/applications with different requirements, new multiple access schemes to support massive connections, and so on.

Before undertaking the DETAILED DESCRIPTION below, it may be advantageous to set forth definitions of certain words and phrases used throughout this patent document. The term "couple" and its derivatives refer to any direct or indirect communication between two or more elements, whether or not those elements are in physical contact with one another. The terms "transmit", "receive", and "communicate", as well as derivatives thereof, encompass both direct and indirect communication. The terms "include" and "comprise", as well as derivatives thereof, mean inclusion without limitation. The term "or" is inclusive, meaning and/or. The phrase "associated with", as well as derivatives thereof, means to include, be included within, interconnect with, contain, be contained within, connect to or with, couple to or with, be communicable with, cooperate with, interleave, juxtapose, be proximate to, be bound to or with, have, have a property of, have a relationship to or with, or the like. The term "controller" means any device, system, or part thereof that controls at least one operation. Such a controller may be implemented in hardware or a combination of hardware and software and/or firmware. The functionality associated with any particular controller may be centralized or distributed, whether locally or remotely. The phrase "at least one of", when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

Definitions for other certain words and phrases are provided throughout this patent document. Those of ordinary skill in the art should understand that in many if not most instances, such definitions apply to prior as well as future uses of such defined words and phrases.

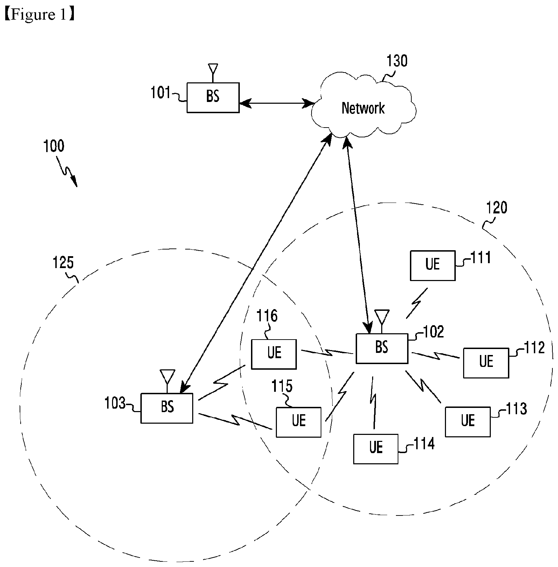

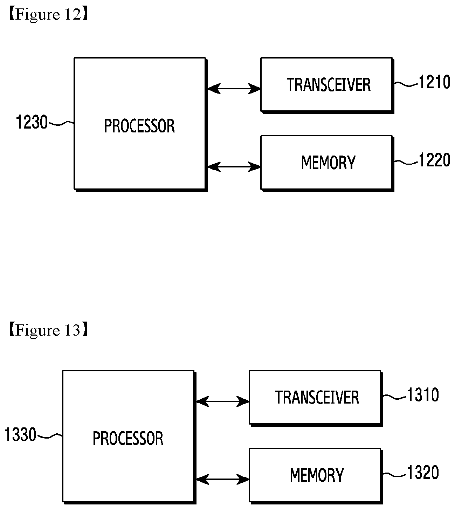

FIGURE 1 through FIGURE 13, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or device.

The following documents are hereby incorporated by reference into the present disclosure as if fully set forth herein: 3GPP TS 38.211 v16.1.0, "NR; Physical channels and modulation"; 3GPP TS 38.212 v16.1.0, "NR; Multiplexing and Channel coding"; 3GPP TS 38.213 v16.1.0, "NR; Physical Layer Procedures for Control"; 3GPP TS 38.214 v16.1.0, "NR; Physical Layer Procedures for Data"; 3GPP TS 38.321 v16.1.0, "NR; Medium Access Control (MAC) protocol specification"; and 3GPP TS 38.331 v16.1.0, "NR; Radio Resource Control (RRC) Protocol Specification".

FIGURES 1-3 below describe various embodiments implemented in wireless communications systems and with the use of orthogonal frequency division multiplexing (OFDM) or orthogonal frequency division multiple access (OFDMA) communication techniques. The descriptions of FIGURES 1-3 are not meant to imply physical or architectural limitations to the manner in which different embodiments may be implemented. Different embodiments of the present disclosure may be implemented in any suitably-arranged communications system.

FIGURE 1 illustrates an example wireless network according to embodiments of the present disclosure. The embodiment of the wireless network shown in FIGURE 1 is for illustration only. Other embodiments of the wireless network 100 could be used without departing from the scope of this disclosure.

As shown in FIGURE 1, the wireless network includes a gNB 101 (e.g., base station, BS), a gNB 102, and a gNB 103. The gNB 101 communicates with the gNB 102 and the gNB 103. The gNB 101 also communicates with at least one network 130, such as the Internet, a proprietary Internet Protocol (IP) network, or other data network.

The gNB 102 provides wireless broadband access to the network 130 for a first plurality of user equipments (UEs) within a coverage area 120 of the gNB 102. The first plurality of UEs includes a UE 111, which may be located in a small business; a UE 112, which may be located in an enterprise (E); a UE 113, which may be located in a WiFi hotspot (HS); a UE 114, which may be located in a first residence (R); a UE 115, which may be located in a second residence (R); and a UE 116, which may be a mobile device (M), such as a cell phone, a wireless laptop, a wireless PDA, or the like. The gNB 103 provides wireless broadband access to the network 130 for a second plurality of UEs within a coverage area 125 of the gNB 103. The second plurality of UEs includes the UE 115 and the UE 116. In some embodiments, one or more of the gNBs 101-103 may communicate with each other and with the UEs 111-116 using 5G/NR, long term evolution (LTE), long term evolution-advanced (LTE-A), WiMAX, WiFi, or other wireless communication techniques.

Depending on the network type, the term "base station" or "BS" can refer to any component (or collection of components) configured to provide wireless access to a network, such as transmit point (TP), transmit-receive point (TRP), an enhanced base station (eNodeB or eNB), a 5G/NR base station (gNB), a macrocell, a femtocell, a WiFi access point (AP), or other wirelessly enabled devices. Base stations may provide wireless access in accordance with one or more wireless communication protocols, e.g., 5G/NR 3rd generation partnership project (3GPP) NR, long term evolution (LTE), LTE advanced (LTE-A), high speed packet access (HSPA), Wi-Fi 802.11a/b/g/n/ac, etc. For the sake of convenience, the terms "BS" and "TRP" are used interchangeably in this patent document to refer to network infrastructure components that provide wireless access to remote terminals. Also, depending on the network type, the term "user equipment" or "UE" can refer to any component such as "mobile station", "subscriber station", "remote terminal", "wireless terminal", "receive point", or "user device". For the sake of convenience, the terms "user equipment" and "UE" are used in this patent document to refer to remote wireless equipment that wirelessly accesses a BS, whether the UE is a mobile device (such as a mobile telephone or smartphone) or is normally considered a stationary device (such as a desktop computer or vending machine).

Dotted lines show the approximate extents of the coverage areas 120 and 125, which are shown as approximately circular for the purposes of illustration and explanation only. It should be clearly understood that the coverage areas associated with gNBs, such as the coverage areas 120 and 125, may have other shapes, including irregular shapes, depending upon the configuration of the gNBs and variations in the radio environment associated with natural and man-made obstructions.

As described in more detail below, one or more of the UEs 111-116 include circuitry, programing, or a combination thereof, for uplink channels and signals repetition in a wireless communication system. In certain embodiments, and one or more of the gNBs 101-103 includes circuitry, programing, or a combination thereof, for uplink channels and signals repetition in a wireless communication system.

Although FIGURE 1 illustrates one example of a wireless network, various changes may be made to FIGURE 1. For example, the wireless network could include any number of gNBs and any number of UEs in any suitable arrangement. Also, the gNB 101 could communicate directly with any number of UEs and provide those UEs with wireless broadband access to the network 130. Similarly, each gNB 102-103 could communicate directly with the network 130 and provide UEs with direct wireless broadband access to the network 130. Further, the gNBs 101, 102, and/or 103 could provide access to other or additional external networks, such as external telephone networks or other types of data networks.

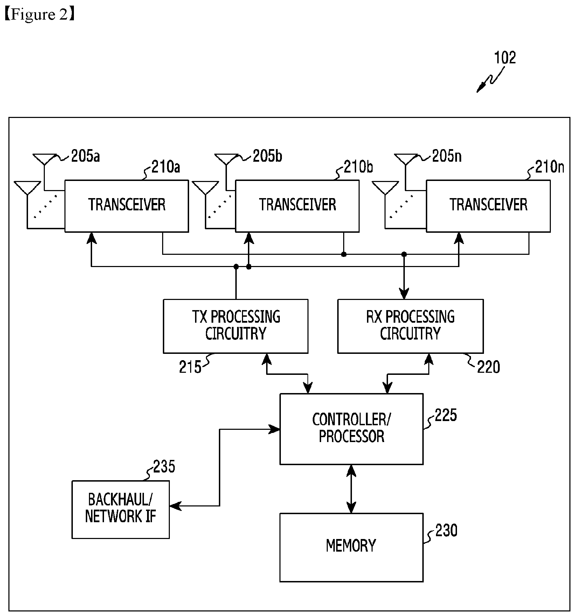

FIGURE 2 illustrates an example gNB 102 according to embodiments of the present disclosure. The embodiment of the gNB 102 illustrated in FIGURE 2 is for illustration only, and the gNBs 101 and 103 of FIGURE 1 could have the same or similar configuration. However, gNBs come in a wide variety of configurations, and FIGURE 2 does not limit the scope of this disclosure to any particular implementation of a gNB.

As shown in FIGURE 2, the gNB 102 includes multiple antennas 205a-205n, multiple transceivers 210a-210n, a controller/processor 225, a memory 230, and a backhaul or network interface 235.

The transceivers 210a-210n receive, from the antennas 205a-205n, incoming radio frequency (RF) signals, such as signals transmitted by UEs in the network 100. The transceivers 210a-210n down-convert the incoming RF signals to generate IF or baseband signals. The IF or baseband signals are processed by receive (RX) processing circuitry in the transceivers 210a-210n and/or controller/processor 225, which generates processed baseband signals by filtering, decoding, and/or digitizing the baseband or IF signals. The controller/processor 225 may further process the baseband signals.

Transmit (TX) processing circuitry in the transceivers 210a-210n and/or controller/processor 225 receives analog or digital data (such as voice data, web data, e-mail, or interactive video game data) from the controller/processor 225. The TX processing circuitry encodes, multiplexes, and/or digitizes the outgoing baseband data to generate processed baseband or IF signals. The transceivers 210a-210n up-converts the baseband or IF signals to RF signals that are transmitted via the antennas 205a-205n.

The controller/processor 225 can include one or more processors or other processing devices that control the overall operation of the gNB 102. For example, the controller/processor 225 could control the reception of UL channel signals and the transmission of DL channel signals by the transceivers 210a-210n in accordance with well-known principles. The controller/processor 225 could support additional functions as well, such as more advanced wireless communication functions. For instance, the controller/processor 225 could support beam forming or directional routing operations in which outgoing/incoming signals from/to multiple antennas 205a-205n are weighted differently to effectively steer the outgoing signals in a desired direction. Any of a wide variety of other functions could be supported in the gNB 102 by the controller/processor 225.

The controller/processor 225 is also capable of executing programs and other processes resident in the memory 230, such as an OS. The controller/processor 225 can move data into or out of the memory 230 as required by an executing process.

The controller/processor 225 is also coupled to the backhaul or network interface 235. The backhaul or network interface 235 allows the gNB 102 to communicate with other devices or systems over a backhaul connection or over a network. The interface 235 could support communications over any suitable wired or wireless connection(s). For example, when the gNB 102 is implemented as part of a cellular communication system (such as one supporting 5G/NR, LTE, or LTE-A), the interface 235 could allow the gNB 102 to communicate with other gNBs over a wired or wireless backhaul connection. When the gNB 102 is implemented as an access point, the interface 235 could allow the gNB 102 to communicate over a wired or wireless local area network or over a wired or wireless connection to a larger network (such as the Internet). The interface 235 includes any suitable structure supporting communications over a wired or wireless connection, such as an Ethernet or RF transceiver.

The memory 230 is coupled to the controller/processor 225. Part of the memory 230 could include a RAM, and another part of the memory 230 could include a Flash memory or other ROM.

Although FIGURE 2 illustrates one example of gNB 102, various changes may be made to FIGURE 2. For example, the gNB 102 could include any number of each component shown in FIGURE 2. Also, various components in FIGURE 2 could be combined, further subdivided, or omitted and additional components could be added according to particular needs.

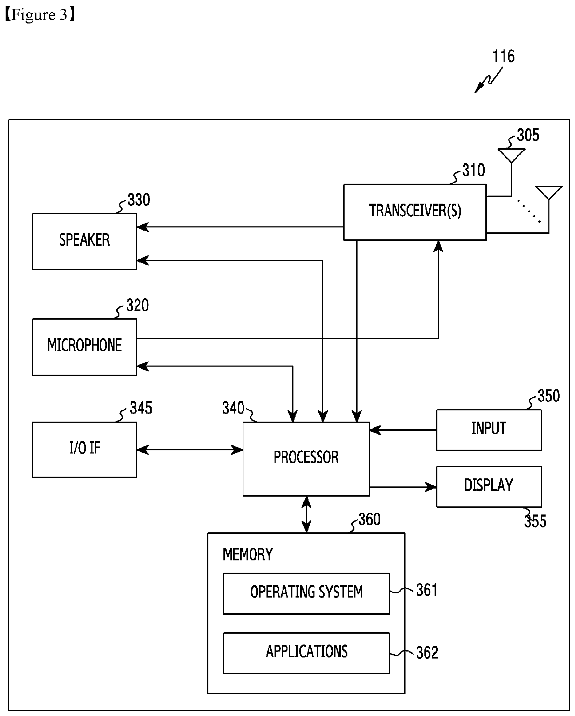

FIGURE 3 illustrates an example UE 116 according to embodiments of the present disclosure. The embodiment of the UE 116 illustrated in FIGURE 3 is for illustration only, and the UEs 111-115 of FIGURE 1 could have the same or similar configuration. However, UEs come in a wide variety of configurations, and FIGURE 3 does not limit the scope of this disclosure to any particular implementation of a UE.

As shown in FIGURE 3, the UE 116 includes antenna(s) 305, a transceiver(s) 310, and a microphone 320. The UE 116 also includes a speaker 330, a processor 340, an input/output (I/O) interface (IF) 345, an input 350, a display 355, and a memory 360. The memory 360 includes an operating system (OS) 361 and one or more applications 362.

The transceiver(s) 310 receives, from the antenna(s) 305, an incoming RF signal transmitted by a gNB of the network 100. The transceiver(s) 310 down-converts the incoming RF signal to generate an intermediate frequency (IF) or baseband signal. The IF or baseband signal is processed by RX processing circuitry in the transceiver(s) 310 and/or processor 340, which generates a processed baseband signal by filtering, decoding, and/or digitizing the baseband or IF signal. The RX processing circuitry sends the processed baseband signal to the speaker 330 (such as for voice data) or is processed by the processor 340 (such as for web browsing data).

TX processing circuitry in the transceiver(s) 310 and/or processor 340 receives analog or digital voice data from the microphone 320 or other outgoing baseband data (such as web data, e-mail, or interactive video game data) from the processor 340. The TX processing circuitry encodes, multiplexes, and/or digitizes the outgoing baseband data to generate a processed baseband or IF signal. The transceiver(s) 310 up-converts the baseband or IF signal to an RF signal that is transmitted via the antenna(s) 305.

The processor 340 can include one or more processors or other processing devices and execute the OS 361 stored in the memory 360 in order to control the overall operation of the UE 116. For example, the processor 340 could control the reception of DL channel signals and the transmission of UL channel signals by the transceiver(s) 310 in accordance with well-known principles. In some embodiments, the processor 340 includes at least one microprocessor or microcontroller.

The processor 340 is also capable of executing other processes and programs resident in the memory 360. The processor 340 can move data into or out of the memory 360 as required by an executing process. In some embodiments, the processor 340 is configured to execute the applications 362 based on the OS 361 or in response to signals received from gNBs or an operator. The processor 340 is also coupled to the I/O interface 345, which provides the UE 116 with the ability to connect to other devices, such as laptop computers and handheld computers. The I/O interface 345 is the communication path between these accessories and the processor 340.

The processor 340 is also coupled to the input 350, which includes for example, a touchscreen, keypad, etc., and the display 355. The operator of the UE 116 can use the input 350 to enter data into the UE 116. The display 355 may be a liquid crystal display, light emitting diode display, or other display capable of rendering text and/or at least limited graphics, such as from web sites.

The memory 360 is coupled to the processor 340. Part of the memory 360 could include a random-access memory (RAM), and another part of the memory 360 could include a Flash memory or other read-only memory (ROM).

Although FIGURE 3 illustrates one example of UE 116, various changes may be made to FIGURE 3. For example, various components in FIGURE 3 could be combined, further subdivided, or omitted and additional components could be added according to particular needs. As a particular example, the processor 340 could be divided into multiple processors, such as one or more central processing units (CPUs) and one or more graphics processing units (GPUs). Also, while FIGURE 3 illustrates the UE 116 configured as a mobile telephone or smartphone, UEs could be configured to operate as other types of mobile or stationary devices.

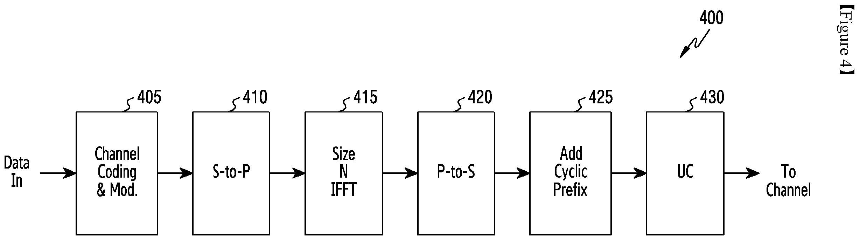

FIGURE 4 illustrates an example wireless transmit path according to this disclosure. In the following description, a transmit path 400 may be described as being implemented in a gNB (such as the gNB 102). However, it may be understood that the transmit path 400 can be implemented in a UE.

The transmit path 400 as illustrated in FIGURE 4 includes a channel coding and modulation block 405, a serial-to-parallel (S-to-P) block 410, a size N inverse fast Fourier transform (IFFT) block 415, a parallel-to-serial (P-to-S) block 420, an add cyclic prefix block 425, and an up-converter (UC) 430.

As illustrated in FIGURE 4, the channel coding and modulation block 405 receives a set of information bits, applies coding (such as a low-density parity check (LDPC) coding), and modulates the input bits (such as with quadrature phase shift keying (QPSK) or quadrature amplitude modulation (QAM)) to generate a sequence of frequency-domain modulation symbols.

The serial-to-parallel block 410 converts (such as de-multiplexes) the serial modulated symbols to parallel data in order to generate N parallel symbol streams, where N is the IFFT/FFT size used in the gNB 102 and the UE 116. The size N IFFT block 415 performs an IFFT operation on the N parallel symbol streams to generate time-domain output signals. The parallel-to-serial block 420 converts (such as multiplexes) the parallel time-domain output symbols from the size N IFFT block 415 in order to generate a serial time-domain signal. The add cyclic prefix block 425 inserts a cyclic prefix to the time-domain signal. The up-converter 430 modulates (such as up-converts) the output of the add cyclic prefix block 425 to an RF frequency for transmission via a wireless channel. The signal may also be filtered at baseband before conversion to the RF frequency.

A transmitted RF signal from the gNB 102 arrives at the UE 116 after passing through the wireless channel, and reverse operations to those at the gNB 102 are performed at the UE 116.

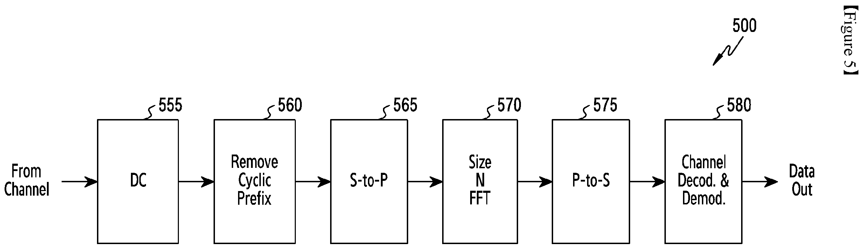

FIGURE 5 illustrates an example wireless receive path according to this disclosure. In the following description, a receive path 500 may be described as being implemented in a UE (such as a UE 116). However, it may be understood that the receive path 500 can be implemented in a gNB. In some embodiments, the receive path 500 is configured to support the codebook design and structure for systems having 2D antenna arrays as described in embodiments of the present disclosure.

The receive path 500 as illustrated in FIGURE 5 includes a down-converter (DC) 555, a remove cyclic prefix block 560, a serial-to-parallel (S-to-P) block 565, a size N fast Fourier transform (FFT) block 570, a parallel-to-serial (P-to-S) block 575, and a channel decoding and demodulation block 580.

As illustrated in FIGURE 5, the downconverter 555 down-converts the received signal to a baseband frequency, and the remove cyclic prefix block 560 removes the cyclic prefix to generate a serial time-domain baseband signal. The serial-to-parallel block 565 converts the time-domain baseband signal to parallel time domain signals. The size N FFT block 570 performs an FFT algorithm to generate N parallel frequency-domain signals. The parallel-to-serial block 575 converts the parallel frequency-domain signals to a sequence of modulated data symbols. The channel decoding and demodulation block 580 demodulates and decodes the modulated symbols to recover the original input data stream.

Each of the gNBs 101-103 may implement a transmit path 400 as illustrated in FIGURE 4 that is analogous to transmitting in the downlink to UEs 111-116 and may implement a receive path 500 as illustrated in FIGURE 5 that is analogous to receiving in the uplink from UEs 111-116. Similarly, each of UEs 111-116 may implement the transmit path 400 for transmitting in the uplink to the gNBs 101-103 and may implement the receive path 500 for receiving in the downlink from the gNBs 101-103.

Each of the components in FIGURE 4 and FIGURE 5 can be implemented using only hardware or using a combination of hardware and software/firmware. As a particular example, at least some of the components in FIGURES 4 and FIGURE 5 may be implemented in software, while other components may be implemented by configurable hardware or a mixture of software and configurable hardware. For instance, the FFT block 570 and the IFFT block 515 may be implemented as configurable software algorithms, where the value of size N may be modified according to the implementation.

Furthermore, although described as using FFT and IFFT, this is by way of illustration only and may not be construed to limit the scope of this disclosure. Other types of transforms, such as discrete Fourier transform (DFT) and inverse discrete Fourier transform (IDFT) functions, can be used. It may be appreciated that the value of the variable N may be any integer number (such as 1, 2, 3, 4, or the like) for DFT and IDFT functions, while the value of the variable N may be any integer number that is a power of two (such as 1, 2, 4, 8, 16, or the like) for FFT and IFFT functions.

Although FIGURE 4 and FIGURE 5 illustrate examples of wireless transmit and receive paths, various changes may be made to FIGURE 4 and FIGURE 5. For example, various components in FIGURE 4 and FIGURE 5 can be combined, further subdivided, or omitted and additional components can be added according to particular needs. Also, FIGURE 4 and FIGURE 5 are meant to illustrate examples of the types of transmit and receive paths that can be used in a wireless network. Any other suitable architectures can be used to support wireless communications in a wireless network.

A unit for DL signaling or for UL signaling on a cell is referred to as a slot and can include one or more symbols. A bandwidth (BW) unit is referred to as a resource block (RB). One RB includes a number of sub-carriers (SCs). For example, a slot can have duration of one millisecond and an RB can have a bandwidth of 180 KHz and include 12 SCs with inter-SC spacing of 15 KHz. A slot can be either full DL slot, or full UL slot, or hybrid slot similar to a special subframe in time division duplex (TDD) systems.

DL signals include data signals conveying information content, control signals conveying DL control information (DCI), and reference signals (RS) that are also known as pilot signals. A gNB transmits data information or DCI through respective physical DL shared channels (PDSCHs) or physical DL control channels (PDCCHs). A PDSCH or a PDCCH can be transmitted over a variable number of slot symbols including one slot symbol. A UE can be indicated a spatial setting for a PDCCH reception based on a configuration of a value for a transmission configuration indication state (TCI state) of a control resource set (CORESET) where the UE receives the PDCCH. The UE can be indicated a spatial setting for a PDSCH reception based on a configuration by higher layers or based on an indication by a DCI format scheduling the PDSCH reception of a value for a TCI state. The gNB can configure the UE to receive signals on a cell within a DL bandwidth part (BWP) of the cell DL BW.

A gNB transmits one or more of multiple types of RS including channel state information RS (CSI-RS) and demodulation RS (DMRS). A CSI-RS is primarily intended for UEs to perform measurements and provide channel state information (CSI) to a gNB. For channel measurement, non-zero power CSI-RS (NZP CSI-RS) resources are used. For interference measurement reports (IMRs), CSI interference measurement (CSI-IM) resources associated with a zero power CSI-RS (ZP CSI-RS) configuration are used. A CSI process consists of NZP CSI-RS and CSI-IM resources. A UE can determine CSI-RS transmission parameters through DL control signaling or higher layer signaling, such as an RRC signaling from a gNB. Transmission instances of a CSI-RS can be indicated by DL control signaling or configured by higher layer signaling. A DMRS is transmitted only in the BW of a respective PDCCH or PDSCH and a UE can use the DMRS to demodulate data or control information.

UL signals also include data signals conveying information content, control signals conveying UL control information (UCI), DMRS associated with data or UCI demodulation, sounding RS (SRS) enabling a gNB to perform UL channel measurement, and a random access (RA) preamble enabling a UE to perform random access. A UE transmits data information or UCI through a respective physical UL shared channel (PUSCH) or a physical UL control channel (PUCCH). A PUSCH or a PUCCH can be transmitted over a variable number of slot symbols including one slot symbol. The gNB can configure the UE to transmit signals on a cell within an UL BWP of the cell UL BW.

UCI includes hybrid automatic repeat request acknowledgement (HARQ-ACK) information, indicating correct or incorrect detection of data transport blocks (TBs) in a PDSCH, scheduling request (SR) indicating whether a UE has data in the buffer of UE, and CSI reports enabling a gNB to select appropriate parameters for PDSCH or PDCCH transmissions to a UE. HARQ-ACK information can be configured to be with a smaller granularity than per TB and can be per data code block (CB) or per group of data CBs where a data TB includes a number of data CBs.

A CSI report from a UE can include a channel quality indicator (CQI) informing a gNB of a largest modulation and coding scheme (MCS) for the UE to detect a data TB with a predetermined block error rate (BLER), such as a 10% BLER, of a precoding matrix indicator (PMI) informing a gNB how to combine signals from multiple transmitter antennas in accordance with a multiple input multiple output (MIMO) transmission principle, and of a rank indicator (RI) indicating a transmission rank for a PDSCH. UL RS includes DMRS and SRS. DMRS is transmitted only in a BW of a respective PUSCH or PUCCH transmission. A gNB can use a DMRS to demodulate information in a respective PUSCH or PUCCH. SRS is transmitted by a UE to provide a gNB with an UL CSI and, for a TDD system, an SRS transmission can also provide a PMI for DL transmission. Additionally, in order to establish synchronization or an initial higher layer connection with a gNB, a UE can transmit a physical random-access channel.

In the present disclosure, a beam is determined by either of: (1) a TCI state, which establishes a quasi-colocation (QCL) relationship between a source reference signal (e.g., synchronization signal/physical broadcasting channel (PBCH) block (SSB) and/or CSI-RS) and a target reference signal; or (2) spatial relation information that establishes an association to a source reference signal, such as SSB or CSI-RS or SRS. In either case, the ID of the source reference signal identifies the beam.

The TCI state and/or the spatial relation reference RS can determine a spatial Rx filter for reception of downlink channels at the UE, or a spatial Tx filter for transmission of uplink channels from the UE.

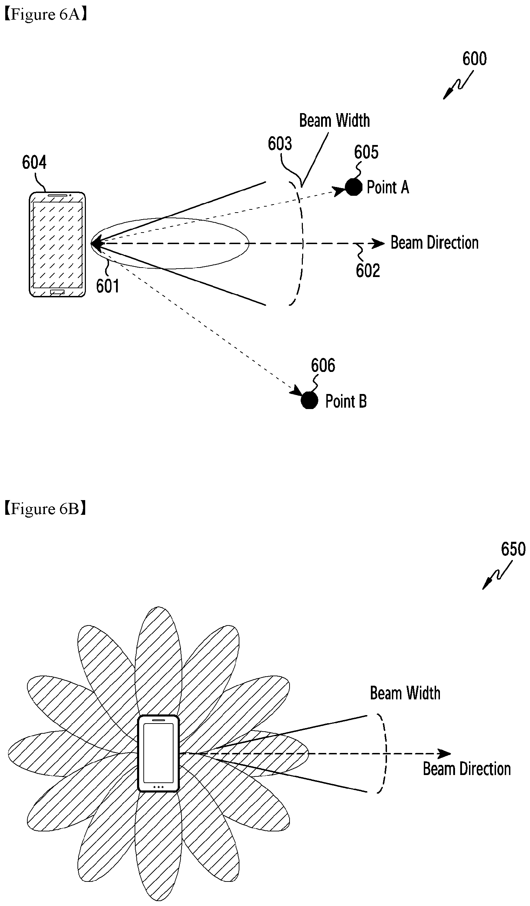

FIGURE 6A illustrates an example wireless system beam 600 according to embodiments of the present disclosure. An embodiment of the wireless system beam 600 shown in FIGURE 6A is for illustration only.

As illustrated in FIGURE 6A, in a wireless system a beam 601, for a device 604, can be characterized by a beam direction 602 and a beam width 603. For example, a device 604 with a transmitter transmits radio frequency (RF) energy in a beam direction and within a beam width. The device 604 with a receiver receives RF energy coming towards the device in a beam direction and within a beam width. As illustrated in FIGURE 6A, a device at point A 605 can receive from and transmit to the device 604 as point A is within a beam width of a beam traveling in a beam direction and coming from the device 604.

As illustrated in FIGURE 6A, a device at point B 606 cannot receive from and transmit to the device 604 as point B is outside a beam width of a beam traveling in a beam direction and coming from the device 604. While FIGURE 6A, for illustrative purposes, shows a beam in 2-dimensions (2D), it may be apparent to those skilled in the art, that a beam can be in 3-dimensions (3D), where the beam direction and beam width are defined in space.

FIGURE 6B illustrates an example multi-beam operation 650 according to embodiments of the present disclosure. An embodiment of the multi-beam operation 650 shown in FIGURE 6B is for illustration only.

In a wireless system, a device can transmit and/or receive on multiple beams. This is known as "multi-beam operation" and is illustrated in FIGURE 6B. While FIGURE 6B, for illustrative purposes, is in 2D, it may be apparent to those skilled in the art, that a beam can be 3D, where a beam can be transmitted to or received from any direction in space.

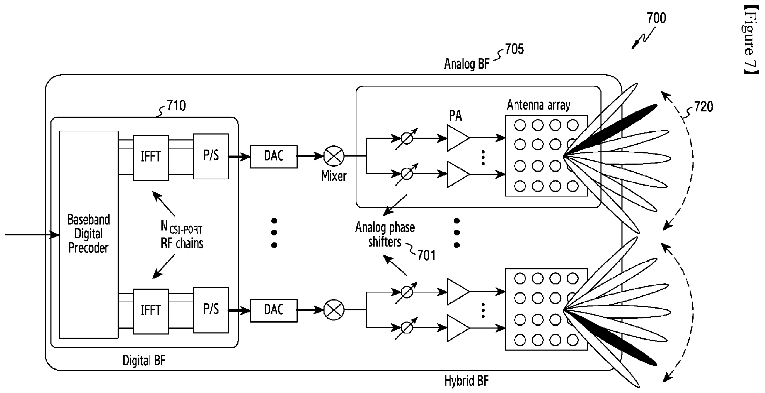

Rel. 14 LTE and Rel.15 NR support up to 32 CSI-RS antenna ports which enable an eNB to be equipped with a large number of antenna elements (such as 64 or 128). In this case, a plurality of antenna elements is mapped onto one CSI-RS port. For mmWave bands, although the number of antenna elements can be larger for a given form factor, the number of CSI-RS ports - which can correspond to the number of digitally precoded ports - tends to be limited due to hardware constraints (such as the feasibility to install a large number of ADCs/DACs at mmWave frequencies) as illustrated in FIGURE 7.

FIGURE 7 illustrates an example antenna structure 700 according to embodiments of the present disclosure. An embodiment of the antenna structure 700 shown in FIGURE 7 is for illustration only.

In this case, one CSI-RS port is mapped onto a large number of antenna elements which can be controlled by a bank of analog phase shifters 701. One CSI-RS port can then correspond to one sub-array which produces a narrow analog beam through analog beamforming 705. This analog beam can be configured to sweep across a wider range of angles 720 by varying the phase shifter bank across symbols or subframes. The number of sub-arrays (equal to the number of RF chains) is the same as the number of CSI-RS ports $N_{CSI\text{-}PORT}$. A digital beamforming unit 710 performs a linear combination across $N_{CSI\text{-}PORT}$ analog beams to further increase precoding gain. While analog beams are wideband (hence not frequency-selective), digital precoding can be varied across frequency sub-bands or resource blocks. Receiver operation can be conceived analogously.

Since the aforementioned system utilizes multiple analog beams for transmission and reception (wherein one or a small number of analog beams are selected out of a large number, for instance, after a training duration - to be performed from time to time), the term "multi-beam operation" is used to refer to the overall system aspect. This includes, for the purpose of illustration, indicating the assigned DL or UL TX beam (also termed "beam indication"), measuring at least one reference signal for calculating and performing beam reporting (also termed "beam measurement" and "beam reporting", respectively), and receiving a DL or UL transmission via a selection of a corresponding RX beam.

The aforementioned system is also applicable to higher frequency bands such as >52.6GHz. In this case, the system can employ only analog beams. Due to the O2 absorption loss around 60GHz frequency (up to 10dB additional loss per 100m distance), larger number of and sharper analog beams (hence larger number of radiators in the array) may be needed to compensate for the additional path loss.

In a wireless communications system, a radio link failure (RLF) could occur if a significant/sudden link quality drop is observed at the UE side. If a RLF occurs, fast RLF recovery mechanisms, therefore, become essential to promptly re-establish the communication link(s) and avoid severe service interruption. At higher frequencies, e.g., millimeter-wave (mmWave) frequencies or FR2 in the 3GPP NR, both the transmitter and receiver could use directional (analog) beams to transmit and receive various RSs/channels such as SSBs, CSI-RSs, PDCCHs or PDSCHs. Hence, prior to declaring a full RLF, the UE could first detect and recover a potential beam failure if the signal qualities/strengths of certain beam pair links (BPLs) are below a certain threshold for a certain period of time.

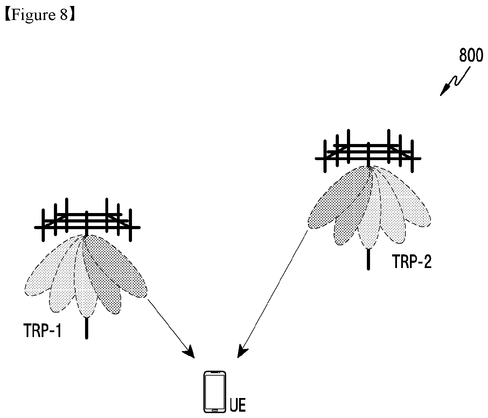

FIGURE 8 illustrates an example of multiple TRP system 8000 according to embodiments of the present disclosure. An embodiment of the multiple TRP system 8000 shown in FIGURE 8 is for illustration only.

In a multiple TRP system depicted in FIGURE 8, the UE could simultaneously receive from multiple physically non-co-located TRPs various channels/RSs such as PDCCHs and/or PDSCHs using either a single receive (RX) panel or multiple RX panels. In this disclosure, a RX panel could correspond to a set of RX antenna elements/ports at the UE, a set of measurement RS resources such as SRS resources, a spatial domain RX filter or etc. Further, a TRP in the multi-TRP system can represent a collection of measurement antenna ports, measurement RS resources and/or control resource sets (CORESETs). For example, a TRP could be associated with one or more of: (1) a plurality of CSI-RS resources; (2) a plurality of CRIs (CSI-RS resource indices/indicators); (3) a measurement RS resource set, for example, a CSI-RS resource set along with its indicator; (4) a plurality of CORESETs associated with a CORESETPoolIndex; and (5) a plurality of CORESETs associated with a TRP-specific index/indicator/identity.

A cell/TRP could be a non-serving cell/TRP. In this disclosure, the non-serving cell(s) or the non-serving cell TRP(s) could have/broadcast different physical cell IDs (PCIs) and/or other higher layer signaling index values from that of the serving cell or the serving cell TRP (i.e., the serving cell PCI). In one example, the serving cell or the serving cell TRP could be associated with the serving cell ID (SCI) and/or the serving cell PCI. That is, for the inter-cell operation considered in the present disclosure, different cells/TRPs could broadcast different PCIs and/or one or more cells/TRPs (referred to/defined as non-serving cells/TRPs in the present disclosure) could broadcast different PCIs from that of the serving cell/TRP (i.e., the serving cell PCI) and/or one or more cells/TRPs are not associated with valid SCI (e.g., provided by the higher layer parameter ServCellIndex). In the present disclosure, a non-serving cell PCI can also be referred to as an additional PCI, another PCI or a different PCI (with respect to the serving cell PCI).

The UE could be configured by the network one or more transmission configuration information (TCI) states, which indicate the QCL information/assumptions for one or more RSs/channels such as PDCCHs and/or PDSCHs. The TCI state update/indication for PDCCH and/or PDSCH can also be referred to as beam indication. For instance, for data transmissions on the shared channel (such as the physical downlink shared channel in NR, i.e., PDSCH), the corresponding beam indication procedure under the 3GPP Rel. 15/16 TCI framework can be summarized as follows: a UE can be first higher layer configured by the network (e.g., via high layer RRC signaling) a set/pool of TCI states; the UE could then receive from the network a MAC CE command activating one or more TCI states from the set/pool of RRC configured TCI states; the UE could be indicated by the network via dynamic DCI signaling that one or more of the MAC CE activated TCI states are active for the reception of the PDSCH(s).

The present disclosure provides various design aspects/enhancements for the TCI state/beam indication in a multi-TRP system, wherein the UE could transmit the same PUSCH(s)/PUCCH(s) to different TRPs using different time domain resources and/or different frequency domain resources and/or different spatial domain filters. The solutions developed in this disclosure could reduce the TCI state (or beam) indication latency for URLLC communications.

As described in the U.S. Patent Application No. 17/584, 239 which is incorporated as reference in its entirety, wherein the indicated TCI state could be at least one of: (1) a DL TCI state and/or its corresponding/associated TCI state ID; (2) an UL TCI state and/or its corresponding/associated TCI state ID; (3) a joint DL and UL TCI state and/or its corresponding/associated TCI state ID; and (4) separate DL TCI state and UL TCI state and/or their corresponding/associated TCI state ID(s).

There could be various design options/channels to indicate to the UE a beam (i.e., a TCI state) for the transmission/reception of a PDCCH or a PDSCH. As described in the U.S. Patent Application No. 17/584, 239 which is incorporated as reference in its entirety, some examples are provided as shown below.

In one example, a MAC CE could be used to indicate to the UE a beam (i.e., a TCI state and/or a TCI state ID) for the transmission/reception of a PDCCH or a PDSCH.

In another example, a DCI could be used to indicate to the UE a beam (i.e., a TCI state and/or a TCI state ID) for the transmission/reception of a PDCCH or a PDSCH.

For example, a DL related DCI (e.g., DCI format 1_0, DCI format 1_1 or DCI format 1_2) could be used to indicate to the UE a beam (i.e., a TCI state and/or a TCI state ID) for the transmission/reception of a PDCCH or a PDSCH, wherein the DL related DCI may or may not include a DL assignment.

For another example, an UL related DCI (e.g., DCI format 0_0, DCI format 0_1, DCI format 0_2) could be used to indicate to the UE a beam (i.e., a TCI state and/or a TCI state ID) for the transmission/reception of a PDCCH or a PDSCH, wherein the UL related DCI may or may not include an UL scheduling grant.

Yet for another example, a custom/purpose designed DCI format could be used to indicate to the UE a beam (i.e., a TCI state and/or a TCI state ID) for the transmission/reception of a PDCCH or a PDSCH.

Rel-17 introduced the unified TCI framework, where a unified or master or main TCI state is signaled to the UE. The unified or master or main TCI state can be one of: (1) in case of joint TCI state indication, wherein a same beam is used for DL and UL channels, a joint TCI state that can be used at least for UE-dedicated DL channels and UE-dedicated UL channels; (2) in case of separate TCI state indication, wherein different beams are used for DL and UL channels, a DL TCI state can be used at least for UE-dedicated DL channels; and (3) in case of separate TCI state indication, wherein different beams are used for DL and UL channels, a UL TCI state can be used at least for UE-dedicated UL channels.

The unified (master or main) TCI state is TCI state of UE-dedicated reception on PDSCH/PDCCH or dynamic-grant/configured-grant based PUSCH and all of dedicated PUCCH resources.

In the present disclosure, the TCI state/beam indication for the PUSCH(s)/PUCCH(s) repetition in a multi-TRP system is discussed under the Rel. 17 unified TCI framework, wherein one or more DL/UL TCI states could be separately/jointly indicated in various channels such as MAC CE and/or DCI (e.g., DCI format 1_1 or 1_2 with or without DL assignment). The UE could transmit the same PUSCH(s)/PUCCH(s) to different TRPs in the multi-TRP system using different time domain resources and/or different frequency domain resources and/or different spatial domain filters.

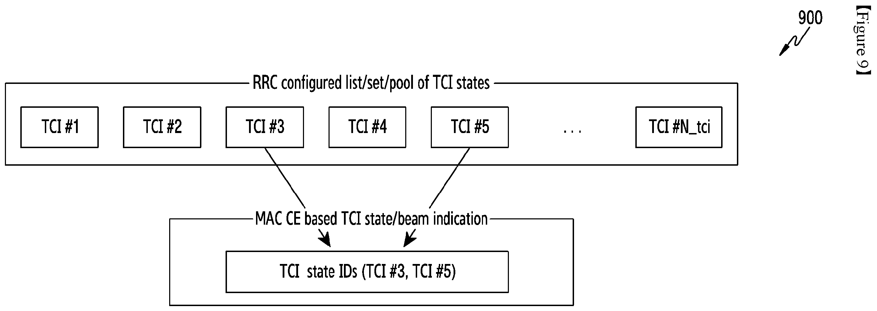

FIGURE 9 illustrates an example of MAC CE based unified TCI state/beam indication for a multiple TRP operation 900 according to embodiments of the present disclosure. An embodiment of the MAC CE based unified TCI state/beam indication for a multiple TRP operation 900 shown in FIGURE 9 is for illustration only.

As illustrated in FIGURE 9, an example of MAC CE based Rel. 17 unified TCI state/beam indication for the multi-TRP operation is presented. As illustrated in FIGURE 9, the UE could be first higher layer configured by the network, e.g., via the higher layer RRC signaling, a list/pool of N_tci TCI states. Each TCI state contains at least a QCL source RS with a QCL type, e.g., QCL-typeA/B/C/D. The UE could then receive from the network one or more MAC CE commands to indicate one or more beam(s) (i.e., the Rel. 17 unified TCI state(s)) for UE-dedicated reception on PDSCH/PDCCH or dynamic-grant/configured-grant based PUSCH and all of dedicated PUCCH resources associated with one or more TRPs in a multi-TRP system. For instance, the UE could receive from the network a single MAC CE command for beam indication to indicate M>1 Rel. 17 unified TCI states/beams (e.g., M>1 joint DL and UL TCI states or M>1 separate UL TCI states) for the same PUSCH(s)/PUCCH(s) transmitted to/associated with different TRPs in the multi-TRP system.

The MAC CE for beam indication could include at least a Rel. 17 unified TCI state ID. As discussed above, the Rel. 17 unified TCI state corresponding to the TCI state ID could be at least one of: (1) a DL TCI state; (2) an UL TCI state; (3) a joint DL and UL TCI state; and (4) separate DL TCI state and UL TCI state.

The association/mapping between the TCI state(s)/beam(s) indicated in the MAC CE command(s) and the TRPs in the multi-TRP system needs to be specified. There could be various means to associate/map the TCI state(s)/beam(s) indicated in the MAC CE command(s) for beam indication and the TRPs in the multi-TRP system.

In one example, for N>1 TCI states/beams indication in a single MAC CE command for beam indication, the UE could be explicitly indicated by the network, e.g., via higher layer RRC signaling and/or MAC CE command and/or dynamic DCI signaling, the exact association/mapping between the TCI states/beams indicated in the MAC CE command for beam indication and the TRPs in the multi-TRP system. For example, the UE could be first higher layer configured by the network a list/set/pool of TRP-specific ID/index values such as PCIs. The first TCI state and/or the TCI state with the lowest TCI state ID value indicated in the MAC CE command for beam indication could correspond to the first entry/TRP in the list/set/pool of TRP-specific ID/index values, the second TCI state and/or the TCI state with the second lowest TCI state ID value indicated in the MAC CE command for beam indication could correspond to the second entry/TRP in the list/set/pool of TRP-specific ID/index values, and so on, and the last TCI state and/or the TCI state with the highest TCI state ID value indicated in the MAC CE command for beam indication could correspond to the last entry/TRP in the list/set/pool of TRP-specific ID/index values.

For another example, the UE could be first higher layer configured by the network a list/set/pool of TRP-specific ID/index values such as PCIs. The UE could then receive from the network one or more MAC CE activation commands/-bitmaps to activate one or more TRP-specific ID/index values from the higher layer configured list/set/pool of TRP-specific ID/index values. The first TCI state and/or the TCI state with the lowest TCI state ID value indicated in the MAC CE command for beam indication could correspond to the first MAC CE(s)/bitmap(s) activated TRP-specific ID/index value, the second TCI state and/or the TCI state with the second lowest TCI state ID value indicated in the MAC CE command for beam indication could correspond to the second MAC CE(s)/bitmap(s) activated TRP-specific ID/index value, and so on, and the last TCI state and/or the TCI state with the highest TCI state ID value indicated in the MAC CE command for beam indication could correspond to the last MAC CE(s)/bitmap(s) activated TRP-specific ID/index value. Other exact association/mapping relationships between the TCI states/beams indicated in the MAC CE command for beam indication and the TRPs in the multi-TRP system and/or the corresponding indication method(s), e.g., via higher layer RRC signaling and/or MAC CE command and/or dynamic DCI signaling, are also possible.

In one example, for N>1 TCI states/beams indication in a single MAC CE command for beam indication, the UE could be implicitly indicated by the network the association/mapping between the TCI states/beams indicated in the MAC CE command for beam indication and the TRPs in the multi-TRP system. The UE could be higher layer configured by the network a list/set/pool of TRP-specific ID/index values such as PCIs. The UE could also receive from the network one or more MAC CE activation commands/bitmaps to activate one or more TRP-specific ID/index values from the higher layer configured list/set/pool of TRP-specific ID/index values. For example, the first TCI state and/or the TCI state with the lowest TCI state ID value indicated in the MAC CE command for beam indication could correspond to the TRP with the lowest/lowest MAC CE activated TRP-specific ID/index value such as the lowest PCI value and/or the first TRP (e.g., TRP #1), the second TCI state and/or the TCI state with the second lowest TCI state ID value indicated in the MAC CE command for beam indication could correspond to the TRP with the second lowest/second lowest MAC CE activated TRP-specific ID/index value such as the second lowest PCI value and/or the second TRP (e.g., TRP #2), and so on, and the last TCI state and/or the TCI state with the highest TCI state ID value indicated in the MAC CE command for beam indication could correspond to the TRP with the highest/highest MAC CE activated TRP-specific ID/index value such as the highest PCI value and/or the last TRP (e.g., TRP #N).

For another example, the first TCI state and/or the TCI state with the lowest TCI state ID value indicated in the MAC CE command for beam indication could correspond to the TRP with the highest/highest MAC CE activated TRP-specific ID/index value such as the highest PCI value and/or the last TRP (e.g., TRP #N), the second TCI state and/or the TCI state with the second lowest TCI state ID value indicated in the MAC CE command for beam indication could correspond to the TRP with the second highest/second highest MAC CE activated TRP-specific ID/index value such as the second highest PCI value and/or the second last TRP (e.g., TRP #N-1), and so on, and the last TCI state and/or the TCI state with the highest TCI state ID value indicated in the MAC CE command for beam indication could correspond to the TRP with the lowest/lowest MAC CE activated TRP-specific ID/index value such as the lowest PCI value and/or the first TRP (e.g., TRP #1). Other implicit indication methods of the association/mapping between the N>1 TCI states/beams indicated in the MAC CE command for beam indication and the TRPs in the multi-TRP system are also possible.

In one example, for N>1 TCI states/beams indication in a single MAC CE command for beam indication, the UE could be explicitly indicated by the network, e.g., via higher layer RRC signaling and/or MAC CE command and/or dynamic DCI signaling, the exact association/mapping between the TCI states/beams indicated in the MAC CE command for beam indication and the CORESETPoolIndex values. For example, the UE could be first higher layer configured by the network a list/set/pool of CORESETPoolIndex values - e.g., a set of two CORESETPoolIndex values 0 and 1. The first TCI state and/or the TCI state with the lowest TCI state ID value indicated in the MAC CE command for beam indication could correspond to the first entry/CORESETPoolIndex value in the list/set/pool of CORESETPoolIndex values, the second TCI state and/or the TCI state with the second lowest TCI state ID value indicated in the MAC CE command for beam indication could correspond to the second entry/CORESETPoolIndex value in the list/set/pool of CORESETPoolIndex values, and so on, and the last TCI state and/or the TCI state with the highest TCI state ID value indicated in the MAC CE command for beam indication could correspond to the last entry/CORESETPoolIndex value in the list/set/pool of CORESETPoolIndex values.

For another example, the UE could be first higher layer configured by the network a list/set/pool of CORESETPoolIndex values - e.g., a set of two CORESETPoolIndex values 0 and 1. The UE could then receive from the network one or more MAC CE activation commands/bitmaps to activate one or more CORESETPoolIndex values from the higher layer configured list/set/pool of CORESETPoolIndex values. The first TCI state and/or the TCI state with the lowest TCI state ID value indicated in the MAC CE command for beam indication could correspond to the first MAC CE(s)/bitmap(s) activated CORESETPoolIndex value, the second TCI state and/or the TCI state with the second lowest TCI state ID value indicated in the MAC CE command for beam indication could correspond to the second MAC CE(s)/bitmap(s) activated CORESETPoolIndex value, and so on, and the last TCI state and/or the TCI state with the highest TCI state ID value indicated in the MAC CE command for beam indication could correspond to the last MAC CE(s)/bitmap(s) activated CORESETPoolIndex value. Other exact association/mapping relationships between the TCI states/beams indicated in the MAC CE command for beam indication and the CORESETPoolIndex values and/or the corresponding indication method(s), e.g., via higher layer RRC signaling and/or MAC CE command and/or dynamic DCI signaling, are also possible.

In one example, for N>1 TCI states/beams indication in a single MAC CE command for beam indication, the UE could be implicitly indicated by the network the association/mapping between the TCI states/beams indicated in the MAC CE command for beam indication and the CORESETPoolIndex values. The UE could be higher layer configured by the network a list/set/pool of CORESETPoolIndex values - e.g., a set of two CORESETPoolIndex values 0 and 1. The UE could also receive from the network one or more MAC CE activation commands/bitmaps to activate one or more CORESETPoolIndex values from the higher layer configured list/set/pool of CORESETPoolIndex values. For example, the first TCI state and/or the TCI state with the lowest TCI state ID value indicated in the MAC CE command for beam indication could correspond to the lowest/lowest MAC CE activated CORESETPoolIndex value such as "0", the second TCI state and/or the TCI state with the second lowest TCI state ID value indicated in the MAC CE command for beam indication could correspond to the second lowest/second lowest MAC CE activated CORESETPoolIndex value such as "1", and so on, and the last TCI state and/or the TCI state with the highest TCI state ID value indicated in the MAC CE command for beam indication could correspond to the highest/highest MAC CE activated CORESETPoolIndex value such as "N-1".

For another example, the first TCI state and/or the TCI state with the lowest TCI state ID value indicated in the MAC CE command for beam indication could correspond to the highest/highest MAC CE activated CORESETPoolIndex value such as "N-1", the second TCI state and/or the TCI state with the second lowest TCI state ID value indicated in the MAC CE command for beam indication could correspond to the second highest/second highest MAC CE activated CORESETPoolIndex value such as "N-2", and so on, and the last TCI state and/or the TCI state with the highest TCI state ID value indicated in the MAC CE command for beam indication could correspond to the lowest/lowest MAC CE activated CORESETPoolIndex value such as "0". Other implicit indication methods of the association/mapping between the N>1 TCI states/beams indicated in the MAC CE command for beam indication and the CORESETPoolIndex values are also possible.

In one example, for N>1 TCI states/beams indication in a single MAC CE command for beam indication, a TCI state, e.g., the higher layer parameter TCI-State, indicated in the MAC CE command for beam indication could include/comprise/incorporate at least one ID/index value. For example, this ID/index value could be a (absolute) TRP-specific ID/index value such as PCI value, TRP ID value, TRP index value and etc., based on a list/set/pool of TRP-specific ID/index values, e.g., higher layer configured to the UE and/or higher layer configured to the UE and activated by one or more MAC CE activation commands/bitmaps. For another example, this ID/index value could be an (relative) index within the list/set/pool of TRP-specific ID/index values, e.g., higher layer configured to the UE and/or higher layer configured to the UE and activated by one or more MAC CE activation commands/bitmaps. For yet another example, this ID/index value could be a CORESETPoolIndex value.

For a list/set/pool of N>1 MAC CE commands for beam indication with each MAC CE command indicating a single TCI state/beam, a unique entity ID/index could be included/incorporated in each MAC CE command for beam indication.

In one example, the UE could be explicitly indicated by the network, e.g., via higher layer RRC signaling and/or MAC CE command and/or dynamic DCI signaling, the exact association/mapping between the MAC CE commands for beam indication (and therefore, the TCI states/beams indicated therein) and the TRPs in the multi-TRP system. For example, the UE could be first higher layer configured by the network a list/set/pool of TRP-specific ID/index values such as PCIs. The first MAC CE command for beam indication in the list/set/pool of N>1 MAC CE commands for beam indication and/or the MAC CE command for beam indication indicating the lowest entity ID/index value and/or the MAC CE command for beam indication indicating the TCI state with the lowest TCI state ID value could correspond to the first entry/TRP in the list/set/pool of TRP-specific ID/index values, the second MAC CE command for beam indication in the list/set/pool of N>1 MAC CE commands for beam indication and/or the MAC CE command for beam indication indicating the second lowest entity ID/index value and/or the MAC CE command for beam indication indicating the TCI state with the second lowest TCI state ID value could correspond to the second entry/TRP in the list/set/pool of TRP-specific ID/index values, and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the TCI state with the highest TCI state ID value could correspond to the last entry/TRP in the list/set/pool of TRP-specific ID/index values.

For another example, the UE could be first higher layer configured by the network a list/set/pool of TRP-specific ID/index values such as PCIs. The UE could then receive from the network one or more MAC CE activation commands/-bitmaps to activate one or more TRP-specific ID/index values from the higher layer configured list/set/pool of TRP-specific ID/index values. The first MAC CE command for beam indication in the list/set/pool of N>1 MAC CE commands for beam indication and/or the MAC CE command indicating the lowest entity ID/index value and/or the MAC CE command for beam indication indicating the TCI state with the lowest TCI state ID value could correspond to the first MAC CE(s)/bitmap(s) activated TRP-specific ID/index values, the second MAC CE command for beam indication in the list/set/pool of N>1 MAC CE commands for beam indication and/or the MAC CE command for beam indication indicting the second lowest entity ID/index value and/or the MAC CE command for beam indication indicating the TCI state with the second lowest TCI state ID value could correspond to the second MAC CE(s)/bitmap(s) activated TRP-specific ID/index values, and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the TCI state with the highest TCI state ID value could correspond to the last MAC CE(s)/bitmap(s) activated TRP-specific ID/index values. Other exact association/mapping relationships between the MAC CE commands for beam indication (and therefore, the TCI states/beams indicated therein) and the TRPs in the multi-TRP system and/or the corresponding indication method(s), e.g., via higher layer RRC signaling and/or MAC CE command and/or dynamic DCI signaling, are also possible.

In another example, the UE could be implicitly indicated by the network the association/mapping between the MAC CE commands for beam indication (and therefore, the TCI states/beams indicated therein) and the TRPs in the multi-TRP system. The UE could be higher layer configured by the network a list/set/pool of TRP-specific ID/index values such as PCIs. The UE could also receive from the network one or more MAC CE activation commands/bitmaps to activate one or more TRP-specific ID/index values from the higher layer configured list/set/pool of TRP-specific ID/index values. For example, the first MAC CE command for beam indication in the list/set/pool of N>1 MAC CE commands for beam indication and/or the MAC CE command for beam indication indicating the lowest entity ID/index value and/or the MAC CE command for beam indication indicating the lowest TCI state ID value could correspond to the TRP with the lowest/lowest MAC CE activated TRP-specific ID/index value such as the lowest PCI value and/or the first TRP (e.g., TRP #1), the second MAC CE command for beam indication in the list/set/pool of N>1 MAC CE commands for beam indication and/or the MAC CE command for beam indication indicating the second lowest entity ID/index value and/or the MAC CE command for beam indication indicating the second lowest TCI state ID value could correspond to the TRP with the second lowest/second lowest MAC CE activated TRP-specific ID/index value such as the second lowest PCI value and/or the second TRP (e.g., TRP #2), and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the highest TCI state ID value could correspond to the TRP with the highest/highest MAC CE activated TRP-specific ID/index value such as the highest PCI value and/or the last TRP (e.g., TRP #N).

For another example, the first MAC CE command for beam indication in the list/set/pool of N>1 MAC CE commands for beam indication and/or the MAC CE command for beam indication indicating the lowest entity ID/index value and/or the MAC CE command for beam indication indicating the lowest TCI state ID value could correspond to the TRP with the highest/highest MAC CE activated TRP-specific ID/index value such as the highest PCI value and/or the last TRP (e.g., TRP #N), the second MAC CE command for beam indication in the list/set/pool of N>1 MAC CE commands for beam indication and/or the MAC CE command for beam indication indicating the second lowest entity ID/index value and/or the MAC CE command for beam indication indicating the second lowest TCI state ID value could correspond to the TRP with the second highest/second highest MAC CE activated TRP-specific ID/index value such as the second highest PCI value and/or the second last TRP (e.g., TRP #N-1), and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the highest TCI state ID value indicated could correspond to the TRP with the lowest/lowest MAC CE activated TRP-specific ID/index value such as the lowest PCI value and/or the first TRP (e.g., TRP #1). Other implicit indication methods of the association/mapping between the N>1 MAC CE commands for beam indication (and therefore, the TCI states/beams indicated therein) and the TRPs in the multi-TRP system are also possible.

In yet another example, the UE could be explicitly indicated by the network, e.g., via higher layer RRC signaling and/or MAC CE command and/or dynamic DCI signaling, the exact association/mapping between the MAC CE commands for beam indication (and therefore, the TCI states/beams indicated therein) and the TRPs in the multi-TRP system. For example, the UE could be first higher layer configured by the network a list/set/pool of CORESETPoolIndex values - e.g., a set of two CORESETPoolIndex values 0 and 1. The first MAC CE command for beam indication in the list/set/pool of N>1 MAC CE commands for beam indication and/or the MAC CE command for beam indication indicating the lowest entity ID/index value and/or the MAC CE command for beam indication indicating the TCI state with the lowest TCI state ID value could correspond to the first entry/CORESETPoolIndex value in the list/set/pool of CORESETPoolIndex values, the second MAC CE command for beam indication in the list/set/pool of N>1 MAC CE commands for beam indication and/or the MAC CE command for beam indication indicating the second lowest entity ID/index value and/or the MAC CE command for beam indication indicating the TCI state with the second lowest TCI state ID value could correspond to the second entry/CORESETPoolIndex value in the list/set/pool of CORESETPoolIndex values, and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the TCI state with the highest TCI state ID value could correspond to the last entry/CORESETPoolIndex value in the list/set/pool of CORESETPoolIndex values.

For another example, the UE could be first higher layer configured by the network a list/set/pool of CORESETPoolIndex values - e.g., a set of two CORESETPoolIndex values 0 and 1. The UE could then receive from the network one or more MAC CE activation commands/bitmaps to activate one or more CORESETPoolIndex values from the higher layer configured list/set/pool of CORESETPoolIndex values. The first MAC CE command for beam indication in the list/set/pool of N>1 MAC CE commands for beam indication and/or the MAC CE command for beam indication indicating the lowest entity ID/index value and/or the MAC CE command for beam indication indicating the TCI state with the lowest TCI state ID value could correspond to the first MAC CE(s)/bitmap(s) activated CORESETPoolIndex value, the second MAC CE command for beam indication in the list/set/pool of N>1 MAC CE commands for beam indication and/or the MAC CE command for beam indication indicating the second lowest entity ID/index value and/or the MAC CE command for beam indication indicating the TCI state with the second lowest TCI state ID value could correspond to the second MAC CE(s)/bitmap(s) activated CORESETPoolIndex value, and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the TCI state with the highest TCI state ID value could correspond to the last MAC CE(s)/bitmap(s) activated CORESETPoolIndex value. Other exact association/mapping relationships between the MAC CE commands for beam indication (and therefore, the TCI states/beams indicated therein) and the CORESETPoolIndex values and/or the corresponding indication method(s), e.g., via higher layer RRC signaling and/or MAC CE command and/or dynamic DCI signaling, are also possible.

In yet another example, the UE could be implicitly indicated by the network the association/mapping between the MAC CE commands for beam indication (and therefore, the TCI states/beams indicated therein) and the CORESETPoolIndex values. The UE could be higher layer configured by the network a list/set/pool of CORESETPoolIndex values - e.g., a set of two CORESETPoolIndex values 0 and 1. The UE could also receive from the network one or more MAC CE activation commands/bitmaps to activate one or more CORESETPoolIndex values from the higher layer configured list/set/pool of CORESETPoolIndex values. For example, the first MAC CE command for beam indication in the list/set/pool of N>1 MAC CE commands for beam indication and/or the MAC CE command for beam indication indicating the lowest entity ID/index value and/or the MAC CE command for beam indication indicating the lowest TCI state ID value could correspond to the lowest/lowest MAC CE activated CORESETPoolIndex value, the second MAC CE command for beam indication in the list/set/pool of N>1 MAC CE commands for beam indication and/or the MAC CE command for beam indication indicating the second lowest entity ID/index value and/or the MAC CE command for beam indication indicating the second lowest TCI state ID value could correspond to the second lowest/second lowest MAC CE activated CORESETPoolIndex value, and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the highest TCI state ID value could correspond to the highest/highest MAC CE activated CORESETPoolIndex value.

For another example, the first MAC CE command for beam indication in the list/set/pool of N>1 MAC CE commands for beam indication and/or the MAC CE command for beam indication indicating the lowest entity ID/index value and/or the MAC CE command for beam indication indicating the lowest TCI state ID value could correspond to the highest/highest MAC CE activated CORESETPoolIndex value, the second MAC CE command for beam indication in the list/set/pool of N>1 MAC CE commands for beam indication and/or the MAC CE command for beam indication indicating the second lowest entity ID/index value and/or the MAC CE command for beam indication indicating the second lowest TCI state ID value could correspond to the second highest/second highest MAC CE activated CORESETPoolIndex value, and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the highest TCI state ID value indicated could correspond to the lowest/lowest MAC CE activated CORESETPoolIndex value. Other implicit indication methods of the association/mapping between the N>1 MAC CE commands for beam indication (and therefore, the TCI states/beams indicated therein) and the CORESETPoolIndex values are also possible.

In yet another example, a MAC CE command for beam indication could include/comprise/incorporate at least one ID/index value. For example, this ID/index value could be a (absolute) TRP-specific ID/index value such as PCI value, TRP ID value, TRP index value and etc., based on a list/set/pool of TRP-specific ID/index values, e.g., higher layer configured to the UE and/or higher layer configured to the UE and activated by one or more MAC CE activation commands/bitmaps. For another example, this ID/index value could be an (relative) index within the list/set/pool of TRP-specific ID/index values, e.g., higher layer configured to the UE and/or higher layer configured to the UE and activated by one or more MAC CE activation commands/bitmaps. For yet another example, this ID/index value could be a CORESETPoolIndex value. The MAC CE command for beam indication may indicate/update the corresponding TCI state(s) for the TRP(s) associated with the same ID/index value, e.g., the CORESETPoolIndex value, as that indicated in the MAC CE command for beam indication.

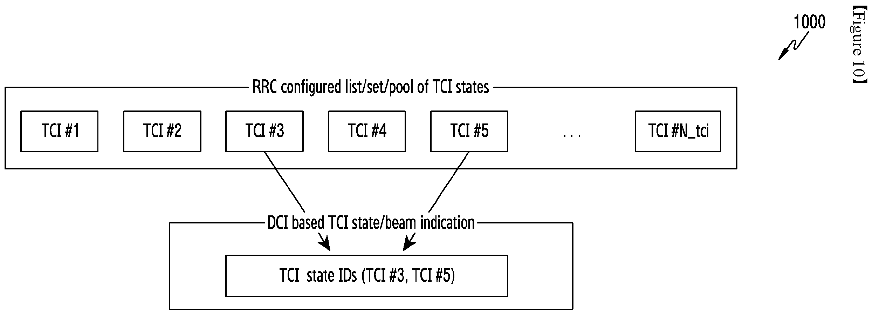

FIGURE 10 illustrates an example of DCI based unified TCI state/beam indication for a multiple TRP operation 1000 according to embodiments of the present disclosure. An embodiment of the DCI based unified TCI state/beam indication for a multiple TRP operation 1000 shown in FIGURE 10 is for illustration only.

As illustrated in FIGURE 10, an example of DCI based Rel. 17 unified TCI state/beam indication for the multi-TRP operation is presented. As illustrated in FIGURE 10, the UE could be first higher layer configured by the network, e.g., via the higher layer RRC signaling, a list/pool of N_tci TCI states. Each TCI state contains at least a QCL source RS with a QCL type, e.g., QCL-typeA/B/C/D. The UE could then receive from the network one or more DCIs (e.g., DCI format 1_1 or 1_2 with or without DL assignment) to indicate one or more beam(s) (i.e., the Rel. 17 unified TCI state(s)) for UE-dedicated reception on PDSCH/PDCCH or dynamic-grant/configured-grant based PUSCH and all of dedicated PUCCH resources associated with one or more TRPs in a multi-TRP system. For instance, the UE could receive from the network a single DCI (e.g., DCI format 1_1 or 1_2 with or without DL assignment) to indicate M>1 Rel. 17 unified TCI states/beams (e.g., M>1 joint DL and UL TCI states or M>1 separate UL TCI states) for the same PUSCH(s)/PUCCH(s) transmitted to/associated with different TRPs in the multi-TRP system.

As described above, a DCI used to indicate to the UE a beam (i.e., a TCI state and/or a TCI state ID) for the transmission/reception of a PDCCH or a PDSCH could be at least one of the following: (1)DL related DCI (e.g., DCI format 1_0, DCI format 1_1 or DCI format 1_2) could be used to indicate to the UE a beam (i.e., a TCI state and/or a TCI state ID) for the transmission/reception of a PDCCH or a PDSCH, wherein the DL related DCI may or may not include a DL assignment; (2) an UL related DCI (e.g., DCI format 0_0, DCI format 0_1, DCI format 0_2) could be used to indicate to the UE a beam (i.e., a TCI state and/or a TCI state ID) for the transmission/reception of a PDCCH or a PDSCH, wherein the UL related DCI may or may not include an UL scheduling grant; and/or (3) a custom/purpose designed DCI format could be used to indicate to the UE a beam (i.e., a TCI state and/or a TCI state ID) for the transmission/reception of a PDCCH or a PDSCH.

Furthermore, the Rel. 17 unified TCI state indicated in the DCI for beam indication could be at least one of: (1) a DL TCI state; (2) an UL TCI state; (3) a joint DL and UL TCI state; and (4) separate DL TCI state and UL TCI state.

The association/mapping between the TCI state(s)/beam(s) indicated in the DCI(s) and the TRPs in the multi-TRP system needs to be specified. There could be various means to associate/map the TCI state(s)/beam(s) indicated in the DCI(s) and the TRPs in the multi-TRP system.

In one example, for N>1 TCI states/beams indication in a single DCI, the UE could be explicitly indicated by the network, e.g., via higher layer RRC signaling and/or MAC CE command and/or dynamic DCI signaling, the exact association/mapping between the TCI states/beams indicated in the DCI and the TRPs in the multi-TRP system. For example, the UE could be first higher layer configured by the network a list/set/pool of TRP-specific ID/index values such as PCIs. The first TCI state and/or the TCI state with the lowest TCI state ID value indicated in the DCI for beam indication could correspond to the first entry/TRP in the list/set/pool of TRP-specific ID/index values, the second TCI state and/or the TCI state with the second lowest TCI state ID value indicated in the DCI for beam indication could correspond to the second entry/TRP in the list/set/pool of TRP-specific ID/index values, and so on, and the last TCI state and/or the TCI state with the highest TCI state ID value indicated in the DCI for beam indication could correspond to the last entry/TRP in the list/set/pool of TRP-specific ID/index values.

For another example, the UE could be first higher layer configured by the network a list/set/pool of TRP-specific ID/index values such as PCIs. The UE could then receive from the network one or more MAC CE activation commands/-bitmaps to activate one or more TRP-specific ID/index values from the higher layer configured list/set/pool of TRP-specific ID/index values. The first TCI state and/or the TCI state with the lowest TCI state ID value indicated in the DCI for beam indication could correspond to the first MAC CE(s)/bitmap(s) activated TRP-specific ID/index value, the second TCI state and/or the TCI state with the second lowest TCI state ID value indicated in the DCI for beam indication could correspond to the second MAC CE(s)/bitmap(s) activated TRP-specific ID/index value, and so on, and the last TCI state and/or the TCI state with the highest TCI state ID value indicated in the DCI for beam indication could correspond to the last MAC CE(s)/bitmap(s) activated TRP-specific ID/index value. Other exact association/mapping relationships between the TCI states/beams indicated in the DCI for beam indication and the TRPs in the multi-TRP system and/or the corresponding indication method(s), e.g., via higher layer RRC signaling and/or MAC CE command and/or dynamic DCI signaling, are also possible.

In one example, for N>1 TCI states/beams indication in a single DCI, the UE could be implicitly indicated by the network the association/mapping between the TCI states/beams indicated in the DCI for beam indication and the TRPs in the multi-TRP system. The UE could be higher layer configured by the network a list/set/pool of TRP-specific ID/index values such as PCIs. The UE could also receive from the network one or more MAC CE activation commands/bitmaps to activate one or more TRP-specific ID/index values from the higher layer configured list/set/pool of TRP-specific ID/index values. For example, the first TCI state and/or the TCI state with the lowest TCI state ID value indicated in the DCI for beam indication could correspond to the TRP with the lowest/lowest MAC CE activated TRP-specific ID/index value such as the lowest PCI value and/or the first TRP (e.g., TRP #1), the second TCI state and/or the TCI state with the second lowest TCI state ID value indicated in the DCI for beam indication could correspond to the TRP with the second lowest/second lowest MAC CE activated TRP-specific ID/index value such as the second lowest PCI value and/or the second TRP (e.g., TRP #2), and so on, and the last TCI state and/or the TCI state with the highest TCI state ID value indicated in the DCI for beam indication could correspond to the TRP with the highest/highest MAC CE activated TRP-specific ID/index value such as the highest PCI value and/or the last TRP (e.g., TRP #N).

For another example, the first TCI state and/or the TCI state with the lowest TCI state ID value indicated in the DCI for beam indication could correspond to the TRP with the highest/highest MAC CE activated TRP-specific ID/index value such as PCI value, the second TCI state and/or the TCI state with the second lowest TCI state ID value indicated in the DCI for beam indication could correspond to the TRP with the second highest/second highest MAC CE activated TRP-specific ID/index value such as PCI value, and so on, and the last TCI state and/or the TCI state with the highest TCI state ID value indicated in the DCI for beam indication could correspond to the TRP with the lowest/lowest MAC CE activated TRP-specific ID/index value such as PCI value. Other implicit indication methods of the association/mapping between the N>1 TCI states/beams indicated in the DCI and the TRPs in the multi-TRP system are also possible.

In one example, for N>1 TCI states/beams indication in a single DCI, the UE could be explicitly indicated by the network, e.g., via higher layer RRC signaling and/or MAC CE command and/or dynamic DCI signaling, the exact association/mapping between the TCI states/beams indicated in the DCI for beam indication and the CORESETPoolIndex values. For example, the UE could be first higher layer configured by the network a list/set/pool of CORESETPoolIndex values - e.g., a set of two CORESETPoolIndex values 0 and 1. The first TCI state and/or the TCI state with the lowest TCI state ID value indicated in the DCI for beam indication could correspond to the first entry/CORESETPoolIndex value in the list/set/pool of CORESETPoolIndex values, the second TCI state and/or the TCI state with the second lowest TCI state ID value indicated in the DCI for beam indication could correspond to the second entry/CORESETPoolIndex value in the list/set/pool of CORESETPoolIndex values, and so on, and the last TCI state and/or the TCI state with the highest TCI state ID value indicated in the DCI for beam indication could correspond to the last entry/CORESETPoolIndex value in the list/set/pool of CORESETPoolIndex values.

For another example, the UE could be first higher layer configured by the network a list/set/pool of CORESETPoolIndex values - e.g., a set of two CORESETPoolIndex values 0 and 1. The UE could then receive from the network one or more MAC CE activation commands/bitmaps to activate one or more CORESETPoolIndex values from the higher layer configured list/set/pool of CORESETPoolIndex values. The first TCI state and/or the TCI state with the lowest TCI state ID value indicated in the DCI for beam indication could correspond to the first MAC CE(s)/bitmap(s) activated CORESETPoolIndex value, the second TCI state and/or the TCI state with the second lowest TCI state ID value indicated in the DCI for beam indication could correspond to the second MAC CE(s)/bitmap(s) activated CORESETPoolIndex value, and so on, and the last TCI state and/or the TCI state with the highest TCI state ID value indicated in the DCI for beam indication could correspond to the last MAC CE(s)/bitmap(s) activated CORESETPoolIndex value. Other exact association/mapping relationships between the TCI states/beams indicated in the DCI for beam indication and the CORESETPoolIndex values and/or the corresponding indication method(s), e.g., via higher layer RRC signaling and/or MAC CE command and/or dynamic DCI signaling, are also possible.

In one example, for N>1 TCI states/beams indication in a single DCI, the UE could be implicitly indicated by the network the association/mapping between the TCI states/beams indicated in the DCI for beam indication and the CORESETPoolIndex values. The UE could be higher layer configured by the network a list/set/pool of CORESETPoolIndex values - e.g., a set of two CORESETPoolIndex values 0 and 1. The UE could also receive from the network one or more MAC CE activation commands/bitmaps to activate one or more CORESETPoolIndex values from the higher layer configured list/set/pool of CORESETPoolIndex values. For example, the first TCI state and/or the TCI state with the lowest TCI state ID value indicated in the DCI for beam indication could correspond to the lowest/lowest MAC CE activated CORESETPoolIndex value such as "0", the second TCI state and/or the TCI state with the second lowest TCI state ID value indicated in the DCI for beam indication could correspond to the second lowest/second lowest MAC CE activated CORESETPoolIndex value such as "1", and so on, and the last TCI state and/or the TCI state with the highest TCI state ID value indicated in the DCI for beam indication could correspond to the highest/highest MAC CE activated CORESETPoolIndex value such as "N-1".

For another example, the first TCI state and/or the TCI state with the lowest TCI state ID value indicated in the DCI for beam indication could correspond to the highest/highest MAC CE activated CORESETPoolIndex value, the second TCI state and/or the TCI state with the second lowest TCI state ID value indicated in the DCI for beam indication could correspond to the second highest/second highest MAC CE activated CORESETPoolIndex value, and so on, and the last TCI state and/or the TCI state with the highest TCI state ID value indicated in the DCI for beam indication could correspond to the lowest/lowest MAC CE activated CORESETPoolIndex value. Other implicit indication methods of the association/mapping between the N>1 TCI states/beams indicated in the DCI for beam indication and the CORESETPoolIndex values are also possible.

In one example, for N>1 TCI states/beams indication in a single DCI, a TCI state, e.g., the higher layer parameter TCI-State, indicated in the DCI for beam indication could include/comprise/incorporate at least one ID/index value. For example, this ID/index value could be a (absolute) TRP-specific ID/index value such as PCI value, TRP ID value, TRP index value and etc., based on a list/set/pool of TRP-specific ID/index values, e.g., higher layer configured to the UE and/or higher layer configured to the UE and activated by one or more MAC CE activation commands/bitmaps. For another example, this ID/index value could be an (relative) index within the list/set/pool of TRP-specific ID/index values, e.g., higher layer configured to the UE and/or higher layer configured to the UE and activated by one or more MAC CE activation commands/bitmaps. For yet another example, this ID/index value could be a CORESETPoolIndex value.

For N>1 DCIs with each DCI indicating a single TCI state/beam, the UE could be explicitly indicated by the network, e.g., via higher layer RRC signaling and/or MAC CE command and/or dynamic DCI signaling, the exact association/mapping between the DCIs for beam indication (and therefore, the TCI states/beams indicated therein) and the TRPs in the multi-TRP system. For example, the UE could be first higher layer configured by the network a list/set/pool of TRP-specific ID/index values such as PCIs. The DCI for beam indication associated with the lowest CORESETPoolIndex value (indicated in the corresponding higher layer parameter ControlResourceSet) and/or the DCI for beam indication indicating the TCI state with the lowest TCI state ID value could correspond to the first entry/TRP in the list/set/pool of TRP-specific ID/index values, the DCI for beam indication associated with the second lowest CORESETPoolIndex value (indicated in the corresponding higher layer parameter ControlResourceSet) and/or the DCI for beam indication indicating the TCI state with the second lowest TCI state ID value could correspond to the second entry/TRP in the list/set/pool of TRP-specific ID/index values, and so on, and the DCI for beam indication associated with the highest CORESETPoolIndex value (indicated in the corresponding higher layer parameter ControlResourceSet) and/or the DCI for beam indication indicating the TCI state with the highest TCI state ID value could correspond to the last entry/TRP in the list/set/pool of TRP-specific ID/index values.

For another example, the UE could be first higher layer configured by the network a list/set/pool of TRP-specific ID/index values such as PCIs. The UE could then receive from the network one or more MAC CE activation commands/-bitmaps to activate one or more TRP-specific ID/index values from the higher layer configured list/set/pool of TRP-specific ID/index values. The DCI for beam indication associated with the lowest CORESETPoolIndex value (indicated in the corresponding higher layer parameter ControlResourceSet) and/or the DCI for beam indication indicating the TCI state with the lowest TCI state ID value could correspond to the first MAC CE(s)/bitmap(s) activated TRP-specific ID/index values, the DCI for beam indication associated with the second lowest CORESETPoolIndex value (indicated in the corresponding higher layer parameter ControlResourceSet) and/or the DCI for beam indication indicating the TCI state with the second lowest TCI state ID value could correspond to the second MAC CE(s)/bitmap(s) activated TRP-specific ID/index values, and so on, and the DCI for beam indication associated with the highest CORESETPoolIndex value (indicated in the corresponding higher layer parameter ControlResourceSet) and/or the DCI for beam indication indicating the TCI state with the highest TCI state ID value could correspond to the last MAC CE(s)/bitmap(s) activated TRP-specific ID/index values. Other exact association/mapping relationships between the DCIs for beam indication (and therefore, the TCI states/beams indicated therein) and the TRPs in the multi-TRP system and/or the corresponding indication method(s), e.g., via higher layer RRC signaling and/or MAC CE command and/or dynamic DCI signaling, are also possible.

In another example, the UE could be implicitly indicated by the network the association/mapping between the DCIs for beam indication (and therefore, the TCI states/beams indicated therein) and the TRPs in the multi-TRP system.

The UE could be higher layer configured by the network a list/set/pool of TRP-specific ID/index values such as PCIs. The UE could also receive from the network one or more MAC CE activation commands/bitmaps to activate one or more TRP-specific ID/index values from the higher layer configured list/set/pool of TRP-specific ID/index values. For example, the DCI for beam indication associated with the lowest CORESETPoolIndex value (indicated in the corresponding higher layer parameter ControlResourceSet) and/or the DCI for beam indication indicating the lowest TCI state ID value could correspond to the TRP with the lowest/lowest MAC CE activated TRP-specific ID/index value such as the lowest PCI value and/or the first TRP (e.g., TRP #1), the DCI for beam indication associated with the second lowest CORESETPoolIndex value (indicated in the corresponding higher layer parameter ControlResourceSet) and/or the DCI for beam indication indicating the second lowest TCI state ID value could correspond to the TRP with the second lowest/second lowest MAC CE activated TRP-specific ID/index value such as the second lowest PCI value and/or the second TRP (e.g., TRP #2), and so on, and the DCI for beam indication associated with the highest CORESETPoolIndex value (indicated in the corresponding higher layer parameter ControlResourceSet) and/or the DCI for beam indication indicating the highest TCI state ID value could correspond to the TRP with the highest/highest MAC CE activated TRP-specific ID/index value such as the highest PCI value and/or the last TRP (e.g., TRP #N).

For another example, the DCI for beam indication associated with the lowest CORESETPoolIndex value (indicated in the corresponding higher layer parameter ControlResourceSet) and/or the DCI for beam indication indicating the lowest TCI state ID value could correspond to the TRP with the highest/highest MAC CE activated TRP-specific ID/index value such as PCI value, the DCI for beam indication associated with the second lowest CORESETPoolIndex value (indicated in the corresponding higher layer parameter ControlResourceSet) and/or the DCI for beam indication indicating the second lowest TCI state ID value could correspond to the TRP with the second highest/second highest MAC CE activated TRP-specific ID/index value such as PCI value, and so on, and the DCI for beam indication associated with the highest CORESETPoolIndex value (indicated in the corresponding higher layer parameter ControlResourceSet) and/or the DCI for beam indication indicating the highest TCI state ID value could correspond to the TRP with the lowest/lowest MAC CE activated TRP-specific ID/index value such as PCI value. Other implicit indication methods of the association/mapping between the N>1 DCIs for beam indication (and therefore, the TCI states/beams indicated therein) and the TRPs in the multi-TRP system are also possible.

In yet another example, a DCI for beam indication could include/comprise/incorporate at least one ID/index value. For example, this ID/index value could be a (absolute) TRP-specific ID/index value such as PCI value, TRP ID value, TRP index value and etc., based on a list/set/pool of TRP-specific ID/index values, e.g., higher layer configured to the UE and/or higher layer configured to the UE and activated by one or more MAC CE activation commands/bitmaps. For another example, this ID/index value could be an (relative) index within the list/set/pool of TRP-specific ID/index values, e.g., higher layer configured to the UE and/or higher layer configured to the UE and activated by one or more MAC CE activation commands/bitmaps. For yet another example, this ID/index value could be a CORESETPoolIndex value. The DCI for beam indication may indicate/update the corresponding TCI state(s) for the TRP(s) associated with the same ID/index value, e.g., the CORESETPoolIndex value, as that indicated in the DCI for beam indication.

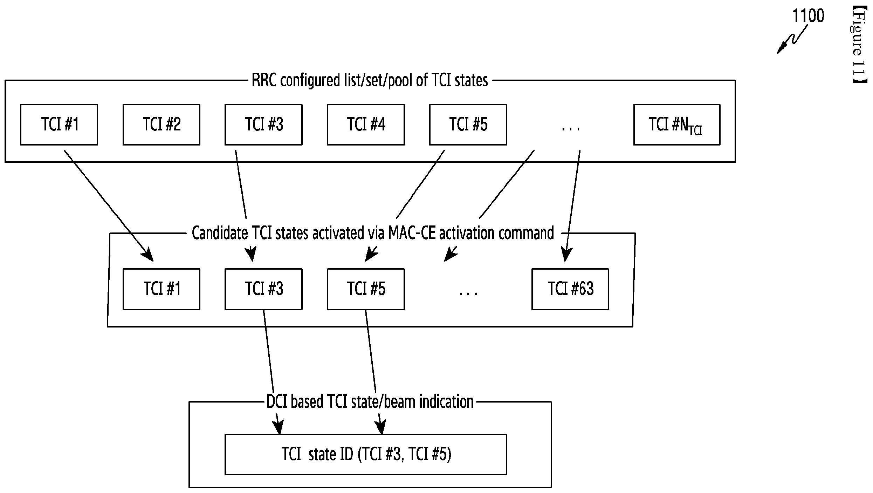

FIGURE 11 illustrates an example of DCI based TCI state/beam indication (with MAC CE activated TCI states) for a multiple TRP operation 1100 according to embodiments of the present disclosure. An embodiment of the DCI based TCI state/beam indication (with MAC CE activated TCI states) for a multiple TRP operation 1100 shown in FIGURE 11 is for illustration only.

As illustrated in FIGURE 11, an example of Rel. 17 DCI based TCI state/beam indication (with MAC CE activated TCI states) for the multi-TRP operation is presented. As illustrated in FIGURE 11, the UE could be first higher layer configured by the network, e.g., via the higher layer RRC signaling, a list/pool of N_tci TCI states. Each TCI state contains at least a QCL source RS with a QCL type, e.g., QCL-typeA/B/C/D. The UE could then receive from the network one or more MAC CE activation commands activating one or more TCI states from the higher layer configured list/pool of TCI states, e.g., up to eight TCI states could be activated by a MAC CE activation command. The UE could receive from the network one or more DCIs to indicate one or more beam(s) (i.e., the Rel. 17 unified TCI state(s)) from the MAC CE activated TCI state(s)/beam(s) for UE-dedicated reception on PDSCH/PDCCH or dynamic-grant/configured-grant based PUSCH and all of dedicated PUCCH resources associated with one or more TRPs in a multi-TRP system. For instance, the UE could receive from the network a single DCI to indicate M'>1 Rel. 17 unified TCI states/beams (e.g., M'>1 joint DL and UL TCI states or M'>1 separate UL TCI states) from the MAC CE activated TCI states/beams for the same PUSCH(s)/PUCCH(s) transmitted to/associated with different TRPs in the multi-TRP system.

As mentioned in the present disclosure, a DCI used to indicate to the UE a beam (i.e., a TCI state and/or a TCI state ID) for the transmission/reception of a PDCCH or a PDSCH could be at least one of the following: (1) a DL related DCI (e.g., DCI format 1_0, DCI format 1_1 or DCI format 1_2) could be used to indicate to the UE a beam (i.e., a TCI state and/or a TCI state ID) for the transmission/reception of a PDCCH or a PDSCH, wherein the DL related DCI may or may not include a DL assignment; (2) an UL related DCI (e.g., DCI format 0_0, DCI format 0_1, DCI format 0_2) could be used to indicate to the UE a beam (i.e., a TCI state and/or a TCI state ID) for the transmission/reception of a PDCCH or a PDSCH, wherein the UL related DCI may or may not include an UL scheduling grant; and/or (3) a custom/purpose designed DCI format could be used to indicate to the UE a beam (i.e., a TCI state and/or a TCI state ID) for the transmission/reception of a PDCCH or a PDSCH.

Furthermore, the Rel. 17 unified TCI state indicated in the DCI for beam indication could be at least one of: (1) a DL TCI state; (2) an UL TCI state; (3) a joint DL and UL TCI state; and (4) separate DL TCI state and UL TCI state.

The association/mapping between the DCI(s) indicated TCI state(s)/beam(s) - from the MAC CE activated TCI state(s)/beam(s) - and the TRPs in the multi-TRP system needs to be specified. There could be various means to associate/map the DCI(s) indicated TCI state(s)/beam(s) - from the MAC CE activated TCI state(s)/beam(s) - and the TRPs in the multi-TRP system.

In one example, for N'>1 TCI states/beams indication in a single DCI, the UE could be explicitly indicated by the network, e.g., via higher layer RRC signaling and/or MAC CE command and/or dynamic DCI signaling, the exact association/mapping between the DCI indicated TCI states/beams (selected from the MAC CE activated TCI states/beams) and the TRPs in the multi-TRP system. For example, the UE could be first higher layer configured by the network a list/set/pool of TRP-specific ID/index values such as PCIs. The first TCI state and/or the TCI state with the lowest TCI state ID value indicated in the DCI for beam indication could correspond to the first entry/TRP in the list/set/pool of TRP-specific ID/index values, the second TCI state and/or the TCI state with the second lowest TCI state ID value indicated in the DCI for beam indication could correspond to the second entry/TRP in the list/set/pool of TRP-specific ID/index values, and so on, and the last TCI state and/or the TCI state with the highest TCI state ID value indicated in the DCI for beam indication could correspond to the last entry/TRP in the list/set/pool of TRP-specific ID/index values.

For another example, the UE could be first higher layer configured by the network a list/set/pool of TRP-specific ID/index values such as PCIs. The UE could then receive from the network one or more MAC CE activation commands/bitmaps to activate one or more TRP-specific ID/index values from the higher layer configured list/set/pool of TRP-specific ID/index values. The first TCI state and/or the TCI state with the lowest TCI state ID value indicated in the DCI for beam indication could correspond to the first MAC CE(s)/bitmap(s) activated TRP-specific ID/index value, the second TCI state and/or the TCI state with the second lowest TCI state ID value indicated in the DCI for beam indication could correspond to the second MAC CE(s)/bitmap(s) activated TRP-specific ID/index value, and so on, and the last TCI state and/or the TCI state with the highest TCI state ID value indicated in the DCI for beam indication could correspond to the last MAC CE(s)/bitmap(s) activated TRP-specific ID/index value. Other exact association/mapping relationships between the DCI indicated TCI states/beams (selected from the MAC CE activated TCI states/beams) and the TRPs in the multi-TRP system and/or the corresponding indication method(s), e.g., via higher layer RRC signaling and/or MAC CE command and/or dynamic DCI signaling, are also possible.

In one example, for N'>1 TCI states/beams indication in a single DCI, the UE could be implicitly indicated by the network the association/mapping between the DCI indicated TCI states/beams (selected from the MAC CE activated TCI states/beams) and the TRPs in the multi-TRP system. The UE could be higher layer configured by the network a list/set/pool of TRP-specific ID/index values such as PCIs. The UE could also receive from the network one or more MAC CE activation commands/bitmaps to activate one or more TRP-specific ID/index values from the higher layer configured list/set/pool of TRP-specific ID/index values. For example, the first TCI state and/or the TCI state with the lowest TCI state ID value indicated in the DCI for beam indication could correspond to the TRP with the lowest/lowest MAC CE activated TRP-specific ID/index value such as the lowest PCI value and/or the first TRP (e.g., TRP #1), the second TCI state and/or the TCI state with the second lowest TCI state ID value indicated in the DCI for beam indication could correspond to the TRP with the second lowest/second lowest MAC CE activated TRP-specific ID/index value such as the second lowest PCI value and/or the second TRP (e.g., TRP #2), and so on, and the last TCI state and/or the TCI state with the highest TCI state ID value indicated in the DCI for beam indication could correspond to the TRP with the highest/highest MAC CE activated TRP-specific ID/index value such as the highest PCI value and/or the last TRP (e.g., TRP #N').

For another example, the first TCI state and/or the TCI state with the lowest TCI state ID value indicated in the DCI for beam indication could correspond to the TRP with the highest/highest MAC CE activated TRP-specific ID/index value such as the highest PCI value and/or the last TRP (e.g., TRP #N'), the second TCI state and/or the TCI state with the second lowest TCI state ID value indicated in the DCI for beam indication could correspond to the TRP with the second highest/second highest MAC CE activated TRP-specific ID/index value such as the second highest PCI value and/or the second last TRP (e.g., TRP #N'-1), and so on, and the last TCI state and/or the TCI state with the highest TCI state ID value indicated in the DCI for beam indication could correspond to the TRP with the lowest/lowest MAC CE activated TRP-specific ID/index value such as the lowest PCI value and/or the first TRP (e.g., TRP #1). Other implicit indication methods of the association/mapping between the N'>1 DCI indicated TCI states/beams (selected from the MAC CE activated TCI states/beams) and the TRPs in the multi-TRP system are also possible.

In one example, for N'>1 TCI states/beams indication in a single DCI, the UE could be explicitly indicated by the network, e.g., via higher layer RRC signaling and/or MAC CE command and/or dynamic DCI signaling, the exact association/mapping between the DCI indicated TCI states/beams (selected from the MAC CE activated TCI states/beams) and the CORESETPoolIndex values. For example, the UE could be first higher layer configured by the network a list/set/pool of CORESETPoolIndex values - e.g., a set of two CORESETPoolIndex values 0 and 1. The first TCI state and/or the TCI state with the lowest TCI state ID value indicated in the DCI for beam indication could correspond to the first entry/CORESETPoolIndex value in the list/set/pool of CORESETPoolIndex values, the second TCI state and/or the TCI state with the second lowest TCI state ID value indicated in the DCI for beam indication could correspond to the second entry/CORESETPoolIndex value in the list/set/pool of CORESETPoolIndex values, and so on, and the last TCI state and/or the TCI state with the highest TCI state ID value indicated in the DCI for beam indication could correspond to the last entry/CORESETPoolIndex value in the list/set/pool of CORESETPoolIndex values.

For another example, the UE could be first higher layer configured by the network a list/set/pool of CORESETPoolIndex values - e.g., a set of two CORESETPoolIndex values 0 and 1. The UE could then receive from the network one or more MAC CE activation commands/bitmaps to activate one or more CORESETPoolIndex values from the higher layer configured list/set/pool of CORESETPoolIndex values. The first TCI state and/or the TCI state with the lowest TCI state ID value indicated in the DCI for beam indication could correspond to the first MAC CE(s)/bitmap(s) activated CORESETPoolIndex value, the second TCI state and/or the TCI state with the second lowest TCI state ID value indicated in the DCI for beam indication could correspond to the second MAC CE(s)/bitmap(s) activated CORESETPoolIndex value, and so on, and the last TCI state and/or the TCI state with the highest TCI state ID value indicated in the DCI for beam indication could correspond to the last MAC CE(s)/bitmap(s) activated CORESETPoolIndex value. Other exact association/mapping relationships between the DCI indicated TCI states/beams (selected from the MAC CE activated TCI states/beams) and the CORESETPoolIndex values and/or the corresponding indication method(s), e.g., via higher layer RRC signaling and/or MAC CE command and/or dynamic DCI signaling, are also possible.

In one example, for N'>1 TCI states/beams indication in a single DCI, the UE could be implicitly indicated by the network the association/mapping between the DCI indicated TCI states/beams (selected from the MAC CE activated TCI states/beams) and the CORESETPoolIndex values. The UE could be higher layer configured by the network a list/set/pool of CORESETPoolIndex values - e.g., a set of two CORESETPoolIndex values 0 and 1. The UE could also receive from the network one or more MAC CE activation commands/bitmaps to activate one or more CORESETPoolIndex values from the higher layer configured list/set/pool of CORESETPoolIndex values. For example, the first TCI state and/or the TCI state with the lowest TCI state ID value indicated in the DCI for beam indication could correspond to the lowest/lowest MAC CE activated CORESETPoolIndex value such as "0", the second TCI state and/or the TCI state with the second lowest TCI state ID value indicated in the DCI for beam indication could correspond to the second lowest/second lowest MAC CE activated CORESETPoolIndex value such as "1", and so on, and the last TCI state and/or the TCI state with the highest TCI state ID value indicated in the DCI for beam indication could correspond to the highest/highest MAC CE activated CORESETPoolIndex value such as "N-1".

For another example, the first TCI state and/or the TCI state with the lowest TCI state ID value indicated in the DCI for beam indication could correspond to the highest/highest MAC CE activated CORESETPoolIndex value, the second TCI state and/or the TCI state with the second lowest TCI state ID value indicated in the DCI for beam indication could correspond to the second highest/second highest MAC CE activated CORESETPoolIndex value, and so on, and the last TCI state and/or the TCI state with the highest TCI state ID value indicated in the DCI for beam indication could correspond to the lowest/lowest MAC CE activated CORESETPoolIndex value. Other implicit indication methods of the association/mapping between the N'>1 DCI indicated TCI states/beams (selected from the MAC CE activated TCI states/beams) and the CORESETPoolIndex values are also possible.

In one example, for N'>1 TCI states/beams indication in a single DCI, a TCI state (selected from the MAC CE activated TCI states/beams), e.g., the higher layer parameter TCI-State, indicated in the MAC CE command for beam indication could include/comprise/incorporate at least one ID/index value. For example, this ID/index value could be a (absolute) TRP-specific ID/index value such as PCI value, TRP ID value, TRP index value and etc., based on a list/set/pool of TRP-specific ID/index values, e.g., higher layer configured to the UE and/or higher layer configured to the UE and activated by one or more MAC CE activation commands/bitmaps. For another example, this ID/index value could be an (relative) index within the list/set/pool of TRP-specific ID/index values, e.g., higher layer configured to the UE and/or higher layer configured to the UE and activated by one or more MAC CE activation commands/bitmaps. For yet another example, this ID/index value could be a CORESETPoolIndex value.

In one example, for N'>1 DCIs with each DCI indicating a single TCI state/beam, the UE could be explicitly indicated by the network, e.g., via higher layer RRC signaling and/or MAC CE command and/or dynamic DCI signaling, the exact association/mapping between the DCIs for beam indication (and therefore, the TCI states/beams indicated therein - selected from the MAC CE activated TCI states/beams) and the TRPs in the multi-TRP system. For example, the UE could be first higher layer configured by the network a list/set/pool of TRP-specific ID/index values such as PCIs. The DCI for beam indication associated with the lowest CORESETPoolIndex value (indicated in the corresponding higher layer parameter ControlResourceSet) and/or the DCI for beam indication indicating the TCI state with the lowest TCI state ID value could correspond to the first entry/TRP in the list/set/pool of TRP-specific ID/index values, the DCI for beam indication associated with the second lowest CORESETPoolIndex value (indicated in the corresponding higher layer parameter ControlResourceSet) and/or the DCI for beam indication indicating the TCI state with the second lowest TCI state ID value could correspond to the second entry/TRP in the list/set/pool of TRP-specific ID/index values, and so on, and

22

the DCI for beam indication associated with the highest CORESETPoolIndex value (indicated in the corresponding higher layer parameter ControlResourceSet) and/or the DCI for beam indication indicating the TCI state with the highest TCI state ID value could correspond to the last entry/TRP in the list/set/pool of TRP-specific ID/index values.

For another example, the UE could be first higher layer configured by the network a list/set/pool of TRP-specific ID/index values such as PCIs. The UE could then receive from the network one or more MAC CE activation commands/bitmaps to activate one or more TRP-specific ID/index values from the higher layer configured list/set/pool of TRP-specific ID/index values. The DCI for beam indication associated with the lowest CORESETPoolIndex value (indicated in the corresponding higher layer parameter ControlResourceSet) and/or the DCI for beam indication indicating the TCI state with the lowest TCI state ID value could correspond to the first MAC CE(s)/bitmap(s) activated TRP-specific ID/index values, the DCI for beam indication associated with the second lowest CORESETPoolIndex value (indicated in the corresponding higher layer parameter ControlResourceSet) and/or the DCI for beam indication indicating the TCI state with the second lowest TCI state ID value could correspond to the second MAC CE(s)/bitmap(s) activated TRP-specific ID/index values, and so on, and the DCI for beam indication associated with the highest CORESETPoolIndex value (indicated in the corresponding higher layer parameter ControlResourceSet) and/or the DCI for beam indication indicating the TCI state with the highest TCI state ID value could correspond to the last MAC CE(s)/bitmap(s) activated TRP-specific ID/index values. Other exact association/mapping relationships between the DCIs for beam indication (and therefore, the TCI states/beams indicated therein - selected from the MAC CE activated TCI states/beams) and the TRPs in the multi-TRP system and/or the corresponding indication method(s), e.g., via higher layer RRC signaling and/or MAC CE command and/or dynamic DCI signaling, are also possible.

In one example, for N'>1 DCIs with each DCI indicating a single TCI state/beam, the UE could be implicitly indicated by the network the association/mapping between the DCIs for beam indication (and therefore, the TCI states/beams indicated therein - selected from the MAC CE activated TCI states/beams) and the TRPs in the multi-TRP system. The UE could be higher layer configured by the network a list/set/pool of TRP-specific ID/index values such as PCIs. The UE could also receive from the network one or more MAC CE activation commands/bitmaps to activate one or more TRP-specific ID/index values from the higher layer configured list/set/pool of TRP-specific ID/index values. For example, the DCI for beam indication associated with the lowest CORESETPoolIndex value (indicated in the corresponding higher layer parameter ControlResourceSet) and/or the DCI for beam indication indicating the lowest TCI state ID value could correspond to the TRP with the lowest/lowest MAC CE activated TRP-specific ID/index value such as the lowest PCI value and/or the first TRP (e.g., TRP #1), the DCI for beam indication associated with the second lowest CORESETPoolIndex value (indicated in the corresponding higher layer parameter ControlResourceSet) and/or the DCI for beam indication indicating the second lowest TCI state ID value could correspond to the TRP with the second lowest/second lowest MAC CE activated TRP-specific ID/index value such as the second lowest PCI value and/or the second TRP (e.g., TRP #2), and so on, and the DCI for beam indication associated with the highest CORESETPoolIndex value (indicated in the corresponding higher layer parameter ControlResourceSet) and/or the DCI for beam indication indicating the highest TCI state ID value could correspond to the TRP with the highest/highest MAC CE activated TRP-specific ID/index value such as the highest PCI value and/or the last TRP (e.g., TRP #N').

For another example, the DCI for beam indication associated with the lowest CORESETPoolIndex value (indicated in the corresponding higher layer parameter ControlResourceSet) and/or the DCI for beam indication indicating the lowest TCI state ID value could correspond to the TRP with the highest/highest MAC CE activated TRP-specific ID/index value such as the highest PCI value and/or the last TRP (e.g., TRP #N'), the DCI for beam indication associated with the second lowest CORESETPoolIndex value (indicated in the corresponding higher layer parameter ControlResourceSet) and/or the DCI for beam indication indicating the second lowest TCI state ID value could correspond to the TRP with the second highest/second highest MAC CE activated TRP-specific ID/index value such as the second highest PCI value and/or the second last TRP (e.g., TRP #N'-1), and so on, and the DCI for beam indication associated with the highest CORESETPoolIndex value (indicated in the corresponding higher layer parameter ControlResourceSet) and/or the DCI for beam indication indicating the highest TCI state ID value could correspond to the TRP with the lowest/lowest MAC CE activated TRP-specific ID/index value such as the lowest PCI value and/or the first TRP (e.g., TRP #1). Other implicit indication methods of the association/mapping between the N'>1 DCIs for beam indication (and therefore, the TCI states/beams indicated therein - selected from the MAC CE activated TCI states/beams) and the TRPs in the multi-TRP system are also possible.

In one example, for N'>1 DCIs with each DCI indicating a single TCI state/beam, a DCI for beam indication (indicating the TCI state(s)/beam(s) selected from the MAC CE activated TCI states/beams) could include/comprise/incorporate at least one ID/index value. For example, this ID/index value could be a (absolute) TRP-specific ID/index value such as PCI value, TRP ID value, TRP index value and etc., based on a list/set/pool of TRP-specific ID/index values, e.g., higher layer configured to the UE and/or higher layer configured to the UE and activated by one or more MAC CE activation commands/bitmaps. For another example, this ID/index value could be an (relative) index within the list/set/pool of TRP-specific ID/index values, e.g., higher layer configured to the UE and/or higher layer configured to the UE and activated by one or more MAC CE activation commands/bitmaps. For yet another example, this ID/index value could be a CORESETPoolIndex value. The DCI for beam indication (indicating the TCI state(s)/beam(s) selected from the MAC CE activated TCI states/beams) may indicate/update the corresponding TCI state(s) for the TRP(s) associated with the same ID/index value, e.g., the CORESETPoolIndex value, as that indicated in the DCI for beam indication (indicating the TCI state(s)/beam(s) selected from the MAC CE activated TCI states/beams).

When a UE is provided by the network, e.g., via the higher layer parameter TCI-State_r17, M>1 joint DL and UL Rel. 17 unified TCI states or M>1 separate UL Rel. 17 unified TCI states or a first combination of M>1 joint DL and UL Rel. 17 unified TCI states and separate UL Rel. 17 unified TCI states or N>1 separate DL Rel. 17 unified TCI states or a second combination of N>1 joint DL and UL Rel. 17 unified TCI states and separate DL Rel. 17 unified TCI states via MAC CE or DCI (e.g., DCI format 1_1 or 1_2 with or without DL assignment) based signaling, for PUSCH repetition Type A, in case K>1 consecutive slots, the same symbol allocation is applied across the K consecutive slots and the PUSCH is limited to a single transmission layer. The UE may repeat the TB across the K consecutive slots applying the same symbol allocation in each slot, and the association of the first and second joint DL and UL TCI states or the first and second separate UL TCI states (M=2) or the first and second separate DL TCI states (N=2) or the first and second TCI states in the first combination of TCI states or the first and second TCI states in the second combination of TCI states to each slot is determined as shown in following examples.

In one example, if configured by the network, the first joint DL and UL TCI state or the first separate UL TCI state or the first separate DL TCI state or the first TCI state in the first combination of TCI states or the first TCI state in the second combination of TCI states or the joint DL and UL TCI state with the lowest TCI state ID or the separate UL TCI state with the lowest TCI state ID or the separate DL TCI state with the lowest TCI state ID or the TCI state in the first combination of TCI states with the lowest TCI state ID or the TCI state in the second combination of TCI states with the lowest TCI state ID could be associated with all K consecutive slots,

In another example, if configured by the network, the second joint DL and UL TCI state or the second separate UL TCI state or the second separate DL TCI state or the second TCI state in the first combination of TCI states or the second TCI state in the second combination of TCI states or the joint DL and UL TCI state with the highest TCI state ID or the separate UL TCI state with the highest TCI state ID or the separate DL TCI state with the highest TCI state ID or the TCI state in the first combination of TCI states with the highest TCI state ID or the TCI state in the second combination of TCI states with the highest TCI state ID could be associated with all K consecutive slots,

In yet another example, if configured by the network, e.g., when/if the UE is indicated/configured/provided by the network, e.g., in higher layer RRC signalling/parameter and/or MAC CE command and/or dynamic DCI based L1 signalling (e.g., DCI format 0_1/0_2 that schedules the PUSCH), an indicator (e.g., a two-bit indicator new or repurposed in the corresponding DCI format 0_1/0_2) set to '0' or '1' or '00' or '01' or '10' or '1 1' indicating that one or both of the indicated (UL or joint) TCI states (e.g., in the beam indication DCI 1_1/1_2 via one or more TCI codepoints of one or more TCI fields) are used/applied for the PUSCH transmission(s), the association between the first and second joint DL and UL TCI states or the first and second separate UL TCI states (M=2) or the first and second separate DL TCI states (N=2) or the first and second TCI states in the first combination of TCI states or the first and second TCI states in the second combination of TCI states, e.g., indicated by one or more TCI codepoints of one or more TCI fields in the beam indication DCI (e.g., DCI format 1_1/1_2 with or without DL assignment) and/or unified TCI states activation MAC CE, with K consecutive slots is determined as shown in following examples.

In one example, when $K = 2$, the first and second joint DL and UL TCI states or the first and second separate UL TCI states or the first and second separate DL TCI states or the first and second TCI states in the first combination of TCI states or the first and second TCI states in the second combination of TCI states are applied to the first and second slot of 2 consecutive slots, respectively.

In another example, when $K > 2$ and *cyclicMapping* in *PUSCH-Config* is enabled, the first and second joint DL and UL TCI states or the first and second separate UL TCI states or the first and second separate DL TCI states or the first and second TCI states in the first combination of TCI states or the first and second TCI states in the second combination of TCI states are applied to the first and second slot of $K$ consecutive slots, respectively, and the same TCI state mapping pattern continues to the remaining slots of $K$ consecutive slots.

In yet another example, when $K > 2$ and *sequentialMapping* in *PUSCH-Config* is enabled, the first joint DL and UL TCI state or the first separate UL TCI state or the first separate DL TCI state or the first TCI state in the first combination of TCI states or the first TCI state in the second combination of TCI states or the joint DL and UL TCI state with the lowest TCI state ID or the separate UL TCI state with the lowest TCI state ID or the separate DL TCI state with the lowest TCI state ID or the TCI state in the first combination of TCI states with the lowest TCI state ID or the TCI state in the second combination of TCI states with the lowest TCI state ID is applied to the first and second slots of $K$ consecutive slots, and the second joint DL and UL TCI state or the second separate UL TCI state or the second separate DL TCI state or or the second TCI state in the first combination of TCI states or the second TCI state in the second combination of TCI states or the joint DL and UL TCI state with the highest TCI state ID or the separate UL TCI state with the highest TCI state ID or the separate DL TCI state with the highest TCI state ID or the TCI state in the first combination of TCI states with the highest TCI state ID or the TCI state in the second combination of TCI states with the highest TCI state ID is applied to the third and fourth slot of $K$

consecutive slots, and the same TCI state mapping pattern continues to the remaining slots of $K$ consecutive slots.

In yet another example, if configured by the network, e.g., when/if the UE is indicated/configured/provided by the network, e.g., in higher layer RRC signalling/parameter and/or MAC CE command and/or dynamic DCI based L1 signalling (e.g., DCI format 0_1/0_2 that schedules the PUSCH), an indicator (e.g., a two-bit indicator new or repurposed in the corresponding DCI format 0_1/0_2) set to '0' or '1' or '00' or '01' or '10' or '1 1' indicating that one or both of the indicated (UL or joint) TCI states (e.g., in the beam indication DCI 1_1/1_2 via one or more TCI codepoints of one or more TCI fields) are used/applied for the PUSCH transmission(s), the association between the first and second joint DL and UL TCI states or the first and second separate UL TCI states (M=2) or the first and second separate DL TCI states (N=2) or the first and second TCI states in the first combination of TCI states or the first and second TCI states in the second combination of TCI states, e.g., indicated by one or more TCI codepoints of one or more TCI fields in the beam indication DCI (e.g., DCI format 1_1/1_2 with or without DL assignment) and/or unified TCI states activation MAC CE, with $K$ consecutive slots can be alternatively determined as shown in following examples.

In one example, when $K = 2$, the second and first joint DL and UL TCI states or the second and first separate UL TCI states or the second and first separate DL TCI states or the second and first TCI states in the first combination of TCI states or the second and first TCI states in the second combination of TCI states are applied to the first and second slot of 2 consecutive slots, respectively.

In another example, when $K > 2$ and *cyclicMapping* in *PUSCH-Config* is enabled, the second and first joint DL and UL TCI states or the second and first separate UL TCI states or the second and first separate DL TCI states or the second and first TCI states in the first combination of TCI states or the second and first TCI states in the second combination of TCI states are applied to the first and second slot of $K$ consecutive slots, respectively, and the same TCI state mapping pattern continues to the remaining slots of $K$ consecutive slots.

In yet another example, when $K > 2$ and *sequentialMapping* in *PUSCH-Config* is enabled, the second joint DL and UL TCI state or the second separate UL TCI state or the second separate DL TCI state or the second TCI state in the first combination of TCI states or the second TCI state in the second combination of TCI states or the joint DL and UL TCI state with the highest TCI state ID or the separate UL TCI state with the highest TCI state ID or the separate DL TCI state with the highest TCI state ID or the TCI state in the first combination of TCI states with the highest TCI state ID or the TCI state in the second combination of TCI states with the highest TCI state ID is applied to the first and second slots of $K$ consecutive slots, and the first joint DL and UL TCI state or the first separate UL TCI state or the first separate DL TCI state or the first TCI state in the first combination of TCI states or the first TCI state in the second combination of TCI states or the joint DL and UL TCI state with the lowest TCI state ID or the separate UL TCI state with the lowest TCI state ID or the separate DL TCI state with the lowest TCI state ID or the TCI state in the first combination of TCI states with the lowest TCI state ID or the TCI state in the second combination of TCI states with the lowest TCI state ID is applied to the third and fourth slot of $K$ consecutive slots, and the same TCI state mapping pattern continues to the remaining slots of $K$ consecutive slots.

In yet another example, for example, for $K$=M, the indicated M>1 joint DL and UL TCI states could be one-to-one mapped to/associated with the K consecutive slots; for instance, the m-th joint DL and UL TCI state or the joint DL and UL TCI state with the m-th lowest (or highest) TCI state ID (m=1,..., M) is applied to the k-th slot of $K$ consecutive slots (k=1,..., $K$). For another example, for $K$=M, the indicated M>1 separate UL TCI states could be one-to-one mapped to/associated with the $K$ consecutive slots; for instance, the m-th separate UL TCI state or the separate UL TCI state with the m-th lowest (or highest) TCI state ID (m=1,..., M) is applied to the k-th slot of $K$ consecutive slots (k=1,..., $K$). Yet for another example, for $K$=N, the indicated N>1 separate DL TCI states could be one-to-one mapped to/associated with the K consecutive slots; for instance, the n-th separate DL TCI state or the separate DL TCI state with the n-th lowest (or highest) TCI state ID (n=1,... , N) is applied to the k-th slot of $K$ consecutive slots (k=1,... , $K$). Yet for another example, for $K$=M, the indicated first combination of M>1 joint DL and UL TCI states and separate UL TCI states could be one-to-one mapped to/associated with the $K$ consecutive slots; for instance, the m-th TCI state in the first combination of TCI states or the TCI state in the first combination of TCI states with the m-th lowest (or highest) TCI state ID (m=1,..., M) is applied to the k-th slot of $K$ consecutive slots (k=1,... , $K$). Yet for another example, for $K$=N, the indicated second combination of N>1 joint DL and UL TCI states and separate DL TCI states could be one-to-one mapped to/associated with the K consecutive slots; for instance, the n-th TCI state in the second combination of TCI states or the TCI state in the second combination of TCI states with the n-th lowest (or highest) TCI state ID (n=1,..., N) is applied to the k-th slot of $K$ consecutive slots (k=1,..., $K$).

For PUSCH repetition Type B, when a UE is provided by the network, e.g., via unified TCI states activation MAC CE or one or more TCI codepoints of one or more TCI fields in the beam indication DCI (e.g., DCI format 1_1/1_2 with or without DL assignment), M>1 joint DL and UL Rel. 17 unified TCI states or M>1 separate UL Rel. 17 unified TCI states or the first combination of M>1 joint DL and UL Rel. 17 unified TCI states and separate UL Rel. 17 unified TCI states or N>1 separate DL Rel. 17 unified TCI states or the second combination of N>1 joint DL and UL Rel. 17 unified TCI states and separate DL Rel. 17 unified TCI states, and/or when/if the UE is configured by the network, e.g., when/if the UE is indicated/configured/provided by the network, e.g., in higher layer RRC signalling/parameter and/or MAC CE command and/or dynamic DCI based L1 signalling (e.g., DCI format 0_1/0_2 that schedules the PUSCH), an indicator (e.g., a two-bit indicator new or repurposed in the corresponding DCI format 0_1/0_2) set to '0' or '1' or '00' or '01' or '10' or '11' indicating that one or both of the indicated (UL or joint) TCI states/pairs of TCI states (e.g., in the beam indication DCI 1_1/1_2 via one or more TCI codepoints of one or more TCI fields) are used/applied for the PUSCH transmission(s), the Rel. 17 unified TCI state (e.g., joint DL and UL TCI state or separate UL TCI state or separate DL TCI state) association to nominal PUSCH repetitions follows the same method as the Rel. 17 unified TCI state (e.g., joint DL and UL TCI state or separate UL TCI state or separate DL TCI state) association to slots in PUSCH Type A repetition as discussed above by considering nominal repetitions instead of slots.

For PUSCH scheduled by DCI format 0_0 on a cell, if the UE is not configured/provided with PUCCH resources on the active UL BWP and the UE is in RRC connected mode,

In one example, when the UE is provided by the network, e.g., via the higher layer parameter TCI-State_r17, a joint DL and UL TCI state or a separate UL TCI state via MAC CE or DCI (e.g., DCI format 1_1 or 1_2 with or without DL assignment) based signalling, the UE may transmit PUSCH according to the RS configured with qcl-Type set to "typeD" corresponding to the QCL assumption in the indicated joint DL and UL TCI state or separate UL TCI state. Furthermore, for a DL pathloss estimate $PL_{b,f,c}(q_d)$ in dB calculated by the UE using RS index $q_d$ for the active DL BWP of carrier $f$ of serving cell c, the UE could determine the RS resource index $q_d$ providing a periodic RS resource configured with qcl-Type set to "typeD" corresponding to the QCL assumption in the indicated joint DL and UL TCI state or separate UL TCI state.

In another example, for PUSCH repetition Type A, when a UE is provided by the network, e.g., via the higher layer parameter TCI-State_r17, M>1 joint DL and UL TCI states or M>1 separate UL TCI states or M>1 joint DL and UL TCI states and separate UL TCI states via MAC CE or DCI (e.g., DCI format 1_1 or 1_2 with or without DL assignment) based signaling, the UE may transmit PUSCH in K consecutive slots according to (1) the RSs configured with qcl-Type set to "typeD" corresponding to the QCL assumptions in the indicated M>1 joint DL and UL TCI states or M>1 separate UL TCI states or M>1 joint DL and UL TCI states and separate UL TCI states, and (2) the association between the M>1 joint DL and UL TCI states or M>1 separate UL TCI states or M>1 joint DL and UL TCI states and separate UL TCI states and the $K>1$ consecutive slots following those specified in examples mentioned in the present disclosure.

Furthermore, for a DL pathloss estimate $PL_{b,f,c}(q_d)$ in dB calculated by the UE using RS index $q_d$ for the active DL BWP of carrier $f$ of serving cell c, the UE could determine the RS resource index $q_d$ providing a periodic RS resource configured with qcl-Type set to "typeD" corresponding to the QCL assumption in one of the indicated M>1 joint DL and UL TCI states or M>1 separate UL TCI states or M>1 joint DL and UL TCI states and separate UL TCI states - e.g., the indicated joint DL and UL TCI state or separate UL TCI state associated with the k-th slot in the $K>1$ consecutive slots ($k \in \{1,..., K\}$) following those specified in examples mentioned in the present disclosure.

In yet another example, for PUSCH repetition Type B, when a UE is provided by the network, e.g., via the higher layer parameter TCI-State_r17, M>1 joint DL and UL TCI states or M>1 separate UL TCI states or M>1 joint DL and UL TCI states and separate UL TCI states via MAC CE or DCI (e.g., DCI format 1_1 or 1_2 with or without DL assignment) based signaling, the UE may transmit K nominal PUSCH repetitions according to (1) the RSs configured with qcl-Type set to "typeD" corresponding to the QCL assumptions in the indicated M>1 joint DL and UL TCI states or M>1 separate UL TCI states or M>1 joint DL and UL TCI states and separate UL TCI states, and (2) the association between the M>1 joint DL and UL TCI states or M>1 separate UL TCI states or M>1 joint DL and UL TCI states and separate UL TCI states and the $K>1$ nominal PUSCH repetitions following those specified in examples in the present disclosure by considering nominal repetitions instead of slots.

Furthermore, for a DL pathloss estimate $PL_{b,f,c}(q_d)$ in dB calculated by the UE using RS index $q_d$ for the active DL BWP of carrier $f$ of serving cell c, the UE could determine the RS resource index $q_d$ providing a periodic RS resource configured with qcl-Type set to "typeD" corresponding to the QCL assumption in one of the indicated M>1 joint DL and UL TCI states or M>1 separate UL TCI states or M>1 joint DL and UL TCI states and separate UL TCI states - e.g., the indicated joint DL and UL TCI state or separate UL TCI state associated with the k-th nominal PDSCH repetition in the $K>1$ nominal PDSCH repetitions ($k \in \{1,... , K\}$) following those specified in examples in the present disclosure by considering nominal repetitions instead of slots.

In one example, for PUSCH scheduled by DCI format 0_0 on a cell, if the UE is configured/provided with PUCCH resources on the active UL BWP and the UE is in RRC connected mode, when the UE is not provided by the network joint DL and UL TCI state or separate UL TCI state, and is provided by the network, e.g., via the higher layer parameter TCI-State_r17, a separate DL TCI state via MAC CE or DCI (e.g., DCI format 1_1 or 1_2 with or without DL assignment) based signalling, the UE may transmit PUSCH according to the RS configured with qcl-Type set to "typeD" corresponding to the QCL assumption in the indicated separate DL TCI state. Furthermore, for a DL pathloss estimate $PL_{b,f,c}(q_d)$ in dB calculated by the UE using RS index $q_d$ for the active DL BWP of carrier $f$ of serving cell c, the UE could determine the RS resource index $q_d$ providing a periodic RS resource configured with qcl-Type set to "typeD" corresponding to the QCL assumption in the indicated separate DL TCI state.

In one example, for PUSCH scheduled by DCI format 0_0 on a cell, if the UE is configured/provided with PUCCH resources on the active UL BWP and the UE is in RRC connected mode, for PUSCH repetition Type A, when a UE is not provided by the network joint DL and UL TCI state or separate UL TCI state, and is provided by the network, e.g., via the higher layer parameter TCI-State_r17, N>1 separate DL TCI states via MAC CE or DCI (e.g., DCI format 1_1 or 1_2 with or without DL assignment) based signaling, the UE may transmit PUSCH in $K$ consecutive slots according to (1) the RSs configured with qcl-Type set to "typeD" corresponding to the QCL assumptions in the indicated N>1 separate DL TCI states, and (2) the association between the N>1 separate DL TCI states and the $K$>1 consecutive slots following those specified in examples in the present disclosure. Furthermore, for a DL pathloss estimate $PL_{b,f,c}(q_d)$ in dB calculated by the UE using RS index $q_d$ for the active DL BWP of carrier $f$ of serving cell c, the UE could determine the RS resource index $q_d$ providing a periodic RS resource configured with qcl-Type set to "typeD" corresponding to the QCL assumption in one of the indicated N>1 separate DL TCI states - e.g., the indicated separate DL TCI state associated with the k-th slot in the $K$>1 consecutive slots ($k \in \{1,..., K\}$) following those specified in examples of the present disclosure.

In one example, for PUSCH scheduled by DCI format 0_0 on a cell, if the UE is configured/provided with PUCCH resources on the active UL BWP and the UE is in RRC connected mode, for PUSCH repetition Type B, when a UE is not provided by the network joint DL and UL TCI state or separate UL TCI state, and is provided by the network, e.g., via the higher layer parameter TCI-State r17, N>1 separate DL TCI states via MAC CE or DCI (e.g., DCI format 1_1 or 1_2 with or without DL assignment) based signaling, the UE may transmit K nominal PUSCH repetitions according to (1) the RSs configured with qcl-Type set to "typeD" corresponding to the QCL assumptions in the indicated N>1 separate DL TCI states, and (2) the association between the N>1 separate DL TCI states and the K>1 nominal PUSCH repetitions following those specified in examples of the present disclosure by considering nominal repetitions instead of slots.

Furthermore, for a DL pathloss estimate $PL_{b,f,c}(q_d)$ in dB calculated by the UE using RS index $q_d$ for the active DL BWP of carrier $f$ of serving cell c, the UE could determine the RS resource index $q_d$ providing a periodic RS resource configured with qcl-Type set to "typeD" corresponding to the QCL assumption in one of the indicated N>1 separate DL TCI state - e.g., the indicated separate DL TCI state associated with the k-th nominal PDSCH repetition in the $K$> 1 nominal PDSCH repetitions ($k \in \{1,..., K\}$) following those specified in examples of the present disclosure by considering nominal repetitions instead of slots.

When a UE is provided by the network, e.g., via unified TCI states activation MAC CE and/or one or more TCI codepoints of one or more TCI fields in the beam indication DCI (e.g., DCI format 1_1/1_2 with or without DL assignment), M>1 joint DL and UL Rel. 17 unified TCI states or M>1 separate UL Rel. 17 unified TCI states, and/or when/if the UE is configured by the network, e.g., the UE is indicated/configured/provided by the network, e.g., in higher layer RRC signalling/parameter and/or MAC CE command and/or dynamic DCI based L1 signalling (e.g., the higher layer parameter PUCCH-Config that configures the PUCCH), an indicator (e.g., a two-bit indicator) set to '0' or '1' or '00' or '01' or '10' or '11' indicating that one or both of the indicated (UL or joint) TCI states/pairs of TCI states (e.g., in the beam indication DCI 1_1/1_2 via one or more TCI codepoints of one or more TCI fields) are used/applied for the PUCCH transmission(s), and when the UE is configured a number of slots $N_{\mathrm{PUCCH}}^{\mathrm{repeat}}$, for repetitions of a PUCCH transmission, the UE: (1) uses the first and second joint DL and UL TCI states or separate UL TCI states (M=2) for first and second repetitions of the PUCCH transmission, respectively, when $N_{\mathrm{PUCCH}}^{\mathrm{repeat}}=2$ ; and/or (2) alternates between the first and second joint DL and UL TCI states or separate UL TCI states (M=2), respectively, per $N_{\mathrm{PUCCH}}^{\mathrm{switch}}$ repetitions of the PUCCH transmission, where $N_{\mathrm{PUCCH}}^{\mathrm{switch}} = 1$ if *mappingPattern* = "cyclicMapping"; else, $N_{\mathrm{PUCCH}}^{\mathrm{switch}} = 2$ .

To improve reliability and/or reduce latency of a wireless communications system, the PUCCH(s)/PUSCH(s) could be repeatedly transmitted from the UE to the network using different time domain resources (e.g., different symbols, mini-slots, slots, etc.) - TDM strategy, and/or different frequency domain resources (e.g., different resource elements, resource blocks, etc.) - FDM strategy, and/or different spatial domain filters (i.e., different beams) - SDM strategy.

The present disclosure provides various design aspects/enhancements for uplink power control, wherein the UE could transmit the same PUSCH(s)/PUCCH(s) to different TRPs using different time domain resources and/or different frequency domain resources and/or different spatial domain filters.

As described in the U.S. Patent Application No. 17/584,239 which is incorporated as reference in its entirety, wherein the indicated TCI state could be at least one of: (1) a DL TCI state and/or its corresponding/associated TCI state ID; (2) an UL TCI state and/or its corresponding/associated TCI state ID; (3) a joint DL and UL TCI state and/or its corresponding/associated TCI state ID; and (4) separate DL TCI state and UL TCI state and/or their corresponding/associated TCI state ID(s).

There could be various design options/channels to indicate to the UE a beam (i.e., a TCI state) for the transmission/reception of a PDCCH or a PDSCH. As described in the U.S. Patent Application No. 17/584, 239 which is incorporated as reference in its entirety, in one example, a MAC CE could be used to indicate to the UE a beam (i.e., a TCI state and/or a TCI state ID) for the transmission/reception of a PDCCH or a PDSCH and in another example, a DCI could be used to indicate to the UE a beam (i.e., a TCI state and/or a TCI state ID) for the transmission/reception of a PDCCH or a PDSCH.

In such examples, for example, a DL related DCI (e.g., DCI format 1_0, DCI format 1_1 or DCI format 1_2) could be used to indicate to the UE a beam (i.e., a TCI state and/or a TCI state ID) for the transmission/reception of a PDCCH or a PDSCH, wherein the DL related DCI may or may not include a DL assignment.

In such examples, for another example, an UL related DCI (e.g., DCI format 0_0, DCI format 0_1, DCI format 0_2) could be used to indicate to the UE a beam (i.e., a TCI state and/or a TCI state ID) for the transmission/reception of a PDCCH or a PDSCH, wherein the UL related DCI may or may not include an UL scheduling grant.

In such examples, yet for another example, a custom/purpose designed DCI format could be used to indicate to the UE a beam (i.e., a TCI state and/or a TCI state ID) for the transmission/reception of a PDCCH or a PDSCH.

Rel-17 introduced the unified TCI framework, where a unified or master or main TCI state is signaled to the UE. The unified or master or main TCI state can be one of: (1) in case of joint TCI state indication, wherein a same beam is used for DL and UL channels, a joint TCI state that can be used at least for UE-dedicated DL channels and UE-dedicated UL channels; (2) in case of separate TCI state indication, wherein different beams are used for DL and UL channels, a DL TCI state can be used at least for UE-dedicated DL channels; and (3) in case of separate TCI state indication, wherein different beams are used for DL and UL channels, a UL TCI state can be used at least for UE-dedicated UL channels.

The unified (master or main) TCI state is TCI state of UE-dedicated reception on PDSCH/PDCCH or dynamic-grant/configured-grant based PUSCH and all of dedicated PUCCH resources.

In the present disclosure, the TCI state/beam indication for the PUSCH(s)/PUCCH(s) repetition in a multi-TRP system is discussed under the Rel. 17 unified TCI framework, wherein one or more DL/UL TCI states could be separately/jointly indicated in various channels such as MAC CE and/or DCI (e.g., DCI format 1_1 or 1_2 with or without DL assignment). The UE could transmit the same PUSCH(s)/PUCCH(s) to different TRPs in the multi-TRP system using different time domain resources and/or different frequency domain resources and/or different spatial domain filters.

As illustrated in FIGURE 9, an example of MAC CE based Rel. 17 unified TCI state/beam indication for the multi-TRP operation is presented. As illustrated in FIGURE 9, the UE could be first higher layer configured by the network, e.g., via the higher layer RRC signaling, a list/pool of N_tci TCI states. Each TCI state contains at least a QCL source RS with a QCL type, e.g., QCL-typeA/B/C/D. The UE could then receive from the network one or more MAC CE commands to indicate one or more beam(s) (i.e., the Rel. 17 unified TCI state(s)) for UE-dedicated reception on PDSCH/PDCCH or dynamic-grant/configured-grant based PUSCH and all of dedicated PUCCH resources associated with one or more TRPs in a multi-TRP system. For instance, the UE could receive from the network a single MAC CE command for beam indication to indicate M>1 Rel. 17 unified TCI states/beams (e.g., M>1 joint DL and UL TCI states or M>1 separate UL TCI states) for the same PUSCH(s)/PUCCH(s) transmitted to/associated with different TRPs in the multi-TRP system.

The MAC CE for beam indication could include at least a Rel. 17 unified TCI state ID. As discussed above, the Rel. 17 unified TCI state corresponding to the TCI state ID could be at least one of: (1) a DL TCI state; (2) an UL TCI state; (3) a joint DL and UL TCI state; and (4) separate DL TCI state and UL TCI state.

The association/mapping between the TCI state(s)/beam(s) indicated in the MAC CE command(s) and the TRPs in the multi-TRP system needs to be specified. There could be various means to associate/map the TCI state(s)/beam(s) indicated in the MAC CE command(s) for beam indication and the TRPs in the multi-TRP system.

In one example, for N>1 TCI states/beams indication in a single MAC CE command for beam indication, the UE could be explicitly indicated by the network, e.g., via higher layer RRC signaling and/or MAC CE command and/or dynamic DCI signaling, the exact association/mapping between the TCI states/beams indicated in the MAC CE command for beam indication and the TRPs in the multi-TRP system. For example, the UE could be first higher layer configured by the network a list/set/pool of TRP-specific ID/index values such as PCIs. The first TCI state and/or the TCI state with the lowest TCI state ID value indicated in the MAC CE command for beam indication could correspond to the first entry/TRP in the list/set/pool of TRP-specific ID/index values, the second TCI state and/or the TCI state with the second lowest TCI state ID value indicated in the MAC CE command for beam indication could correspond to the second entry/TRP in the list/set/pool of TRP-specific ID/index values, and so on, and the last TCI state and/or the TCI state with the highest TCI state ID value indicated in the MAC CE command for beam indication could correspond to the last entry/TRP in the list/set/pool of TRP-specific ID/index values.

For another example, the UE could be first higher layer configured by the network a list/set/pool of TRP-specific ID/index values such as PCIs. The UE could then receive from the network one or more MAC CE activation commands/-bitmaps to activate one or more TRP-specific ID/index values from the higher layer configured list/set/pool of TRP-specific ID/index values. The first TCI state and/or the TCI state with the lowest TCI state ID value indicated in the MAC CE command for beam indication could correspond to the first MAC CE(s)/bitmap(s) activated TRP-specific ID/index value, the second TCI state and/or the TCI state with the second lowest TCI state ID value indicated in the MAC CE command for beam indication could correspond to the second MAC CE(s)/bitmap(s) activated TRP-specific ID/index value, and so on, and the last TCI state and/or the TCI state with the highest TCI state ID value indicated in the MAC CE command for beam indication could correspond to the last MAC CE(s)/bitmap(s) activated TRP-specific ID/index value. Other exact association/mapping relationships between the TCI states/beams indicated in the MAC CE command for beam indication and the TRPs in the multi-TRP system and/or the corresponding indication method(s), e.g., via higher layer RRC signaling and/or MAC CE command and/or dynamic DCI signaling, are also possible.

In one example, for N>1 TCI states/beams indication in a single MAC CE command for beam indication, the UE could be implicitly indicated by the network the association/mapping between the TCI states/beams indicated in the MAC CE command for beam indication and the TRPs in the multi-TRP system. The UE could be higher layer configured by the network a list/set/pool of TRP-specific ID/index values such as PCIs. The UE could also receive from the network one or more MAC CE activation commands/bitmaps to activate one or more TRP-specific ID/index values from the higher layer configured list/set/pool of TRP-specific ID/index values. For example, the first TCI state and/or the TCI state with the lowest TCI state ID value indicated in the MAC CE command for beam indication could correspond to the TRP with the lowest/lowest MAC CE activated TRP-specific ID/index value such as the lowest PCI value and/or the first TRP (e.g., TRP #1), the second TCI state and/or the TCI state with the second lowest TCI state ID value indicated in the MAC CE command for beam indication could correspond to the TRP with the second lowest/second lowest MAC CE activated TRP-specific ID/index value such as the second lowest PCI value and/or the second TRP (e.g., TRP #2), and so on, and the last TCI state and/or the TCI state with the highest TCI state ID value indicated in the MAC CE command for beam indication could correspond to the TRP with the highest/highest MAC CE activated TRP-specific ID/index value such as the highest PCI value and/or the last TRP (e.g., TRP #N).

For another example, the first TCI state and/or the TCI state with the lowest TCI state ID value indicated in the MAC CE command for beam indication could correspond to the TRP with the highest/highest MAC CE activated TRP-specific ID/index value such as the highest PCI value and/or the last TRP (e.g., TRP #N), the second TCI state and/or the TCI state with the second lowest TCI state ID value indicated in the MAC CE command for beam indication could correspond to the TRP with the second highest/second highest MAC CE activated TRP-specific ID/index value such as the second highest PCI value and/or the second last TRP (e.g., TRP #N-1), and so on, and the last TCI state and/or the TCI state with the highest TCI state ID value indicated in the MAC CE command for beam indication could correspond to the TRP with the lowest/lowest MAC CE activated TRP-specific ID/index value such as the lowest PCI value and/or the first TRP (e.g., TRP #1). Other implicit indication methods of the association/mapping between the N>1 TCI states/beams indicated in the MAC CE command for beam indication and the TRPs in the multi-TRP system are also possible.

In one example, for N>1 TCI states/beams indication in a single MAC CE command for beam indication, the UE could be explicitly indicated by the network, e.g., via higher layer RRC signaling and/or MAC CE command and/or dynamic DCI signaling, the exact association/mapping between the TCI states/beams indicated in the MAC CE command for beam indication and the CORESETPoolIndex values. For example, the UE could be first higher layer configured by the network a list/set/pool of CORESETPoolIndex values - e.g., a set of two CORESETPoolIndex values 0 and 1. The first TCI state and/or the TCI state with the lowest TCI state ID value indicated in the MAC CE command for beam indication could correspond to the first entry/CORESETPoolIndex value in the list/set/pool of CORESETPoolIndex values, the second TCI state and/or the TCI state with the second lowest TCI state ID value indicated in the MAC CE command for beam indication could correspond to the second entry/CORESETPoolIndex value in the list/set/pool of CORESETPoolIndex values, and so on, and the last TCI state and/or the TCI state with the highest TCI state ID value indicated in the MAC CE command for beam indication could correspond to the last entry/CORESETPoolIndex value in the list/set/pool of CORESETPoolIndex values.

For another example, the UE could be first higher layer configured by the network a list/set/pool of CORESETPoolIndex values - e.g., a set of two CORESETPoolIndex values 0 and 1. The UE could then receive from the network one or more MAC CE activation commands/bitmaps to activate one or more CORESETPoolIndex values from the higher layer configured list/set/pool of CORESETPoolIndex values. The first TCI state and/or the TCI state with the lowest TCI state ID value indicated in the MAC CE command for beam indication could correspond to the first MAC CE(s)/bitmap(s) activated CORESETPoolIndex value, the second TCI state and/or the TCI state with the second lowest TCI state ID value indicated in the MAC CE command for beam indication could correspond to the second MAC CE(s)/bitmap(s) activated CORESETPoolIndex value, and so on, and the last TCI state and/or the TCI state with the highest TCI state ID value indicated in the MAC CE command for beam indication could correspond to the last MAC CE(s)/bitmap(s) activated CORESETPoolIndex value. Other exact association/mapping relationships between the TCI states/beams indicated in the MAC CE command for beam indication and the CORESETPoolIndex values and/or the corresponding indication method(s), e.g., via higher layer RRC signaling and/or MAC CE command and/or dynamic DCI signaling, are also possible.

In one example, for N>1 TCI states/beams indication in a single MAC CE command for beam indication, the UE could be implicitly indicated by the network the association/mapping between the TCI states/beams indicated in the MAC CE command for beam indication and the CORESETPoolIndex values. The UE could be higher layer configured by the network a list/set/pool of CORESETPoolIndex values - e.g., a set of two CORESETPoolIndex values 0 and 1. The UE could also receive from the network one or more MAC CE activation commands/bitmaps to activate one or more CORESETPoolIndex values from the higher layer configured list/set/pool of CORESETPoolIndex values. For example, the first TCI state and/or the TCI state with the lowest TCI state ID value indicated in the MAC CE command for beam indication could correspond to the lowest/lowest MAC CE activated CORESETPoolIndex value such as "0", the second TCI state and/or the TCI state with the second lowest TCI state ID value indicated in the MAC CE command for beam indication could correspond to the second lowest/second lowest MAC CE activated CORESETPoolIndex value such as "1", and so on, and the last TCI state and/or the TCI state with the highest TCI state ID value indicated in the MAC CE command for beam indication could correspond to the highest/highest MAC CE activated CORESETPoolIndex value such as "N-1".

For another example, the first TCI state and/or the TCI state with the lowest TCI state ID value indicated in the MAC CE command for beam indication could correspond to the highest/highest MAC CE activated CORESETPoolIndex value such as "N-1", the second TCI state and/or the TCI state with the second lowest TCI state ID value indicated in the MAC CE command for beam indication could correspond to the second highest/second highest MAC CE activated CORESETPoolIndex value such as "N-2", and so on, and the last TCI state and/or the TCI state with the highest TCI state ID value indicated in the MAC CE command for beam indication could correspond to the lowest/lowest MAC CE activated CORESETPoolIndex value such as "0". Other implicit indication methods of the association/mapping between the N>1 TCI states/beams indicated in the MAC CE command for beam indication and the CORESETPoolIndex values are also possible.

In one example, for N>1 TCI states/beams indication in a single MAC CE command for beam indication, a TCI state, e.g., the higher layer parameter TCI-State, indicated in the MAC CE command for beam indication could include/comprise/incorporate at least one ID/index value. For example, this ID/index value could be a (absolute) TRP-specific ID/index value such as PCI value, TRP ID value, TRP index value and etc., based on a list/set/pool of TRP-specific ID/index values, e.g., higher layer configured to the UE and/or higher layer configured to the UE and activated by one or more MAC CE activation commands/bitmaps. For another example, this ID/index value could be an (relative) index within the list/set/pool of TRP-specific ID/index values, e.g., higher layer configured to the UE and/or higher layer configured to the UE and activated by one or more MAC CE activation commands/bitmaps. For yet another example, this ID/index value could be a CORESETPoolIndex value.

For a list/set/pool of N>1 MAC CE commands for beam indication with each MAC CE command indicating a single TCI state/beam, a unique entity ID/index could be included/incorporated in each MAC CE command for beam indication.

In one example, the UE could be explicitly indicated by the network, e.g., via higher layer RRC signaling and/or MAC CE command and/or dynamic DCI signaling, the exact association/mapping between the MAC CE commands for beam indication (and therefore, the TCI states/beams indicated therein) and the TRPs in the multi-TRP system. For example, the UE could be first higher layer configured by the network a list/set/pool of TRP-specific ID/index values such as PCIs. The first MAC CE command for beam indication in the list/set/pool of N>1 MAC CE commands for beam indication and/or the MAC CE command for beam indication indicating the lowest entity ID/index value and/or the MAC CE command for beam indication indicating the TCI state with the lowest TCI state ID value could correspond to the first entry/TRP in the list/set/pool of TRP-specific ID/index values, the second MAC CE command for beam indication in the list/set/pool of N>1 MAC CE commands for beam indication and/or the MAC CE command for beam indication indicating the second lowest entity ID/index value and/or the MAC CE command for beam indication indicating the TCI state with the second lowest TCI state ID value could correspond to the second entry/TRP in the list/set/pool of TRP-specific ID/index values, and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the TCI state with the highest TCI state ID value could correspond to the last entry/TRP in the list/set/pool of TRP-specific ID/index values.

For another example, the UE could be first higher layer configured by the network a list/set/pool of TRP-specific ID/index values such as PCIs. The UE could then receive from the network one or more MAC CE activation commands/-bitmaps to activate one or more TRP-specific ID/index values from the higher layer configured list/set/pool of TRP-specific ID/index values. The first MAC CE command for beam indication in the list/set/pool of N>1 MAC CE commands for beam indication and/or the MAC CE command indicating the lowest entity ID/index value and/or the MAC CE command for beam indication indicating the TCI state with the lowest TCI state ID value could correspond to the first MAC CE(s)/bitmap(s) activated TRP-specific ID/index values, the second MAC CE command for beam indication in the list/set/pool of N>1 MAC CE commands for beam indication and/or the MAC CE command for beam indication indicting the second lowest entity ID/index value and/or the MAC CE command for beam indication indicating the TCI state with the second lowest TCI state ID value could correspond to the second MAC CE(s)/bitmap(s) activated TRP-specific ID/index values, and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the TCI state with the highest TCI state ID value could correspond to the last MAC CE(s)/bitmap(s) activated TRP-specific ID/index values. Other exact association/mapping relationships between the MAC CE commands for beam indication (and therefore, the TCI states/beams indicated therein) and the TRPs in the multi-TRP system and/or the corresponding indication method(s), e.g., via higher layer RRC signaling and/or MAC CE command and/or dynamic DCI signaling, are also possible.

In another example, the UE could be implicitly indicated by the network the association/mapping between the MAC CE commands for beam indication (and therefore, the TCI states/beams indicated therein) and the TRPs in the multi-TRP system. The UE could be higher layer configured by the network a list/set/pool of TRP-specific ID/index values such as PCIs. The UE could also receive from the network one or more MAC CE activation commands/bitmaps to activate one or more TRP-specific ID/index values from the higher layer configured list/set/pool of TRP-specific ID/index values. For example, the first MAC CE command for beam indication in the list/set/pool of N>1 MAC CE commands for beam indication and/or the MAC CE command for beam indication indicating the lowest entity ID/index value and/or the MAC CE command for beam indication indicating the lowest TCI state ID value could correspond to the TRP with the lowest/lowest MAC CE activated TRP-specific ID/index value such as the lowest PCI value and/or the first TRP (e.g., TRP #1), the second MAC CE command for beam indication in the list/set/pool of N>1 MAC CE commands for beam indication and/or the MAC CE command for beam indication indicating the second lowest entity ID/index value and/or the MAC CE command for beam indication indicating the second lowest TCI state ID value could correspond to the TRP with the second lowest/second lowest MAC CE activated TRP-specific ID/index value such as the second lowest PCI value and/or the second TRP (e.g., TRP #2), and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the highest TCI state ID value could correspond to the TRP with the highest/highest MAC CE activated TRP-specific ID/index value such as the highest PCI value and/or the last TRP (e.g., TRP #N).

For another example, the first MAC CE command for beam indication in the list/set/pool of N>1 MAC CE commands for beam indication and/or the MAC CE command for beam indication indicating the lowest entity ID/index value and/or the MAC CE command for beam indication indicating the lowest TCI state ID value could correspond to the TRP with the highest/highest MAC CE activated TRP-specific ID/index value such as the highest PCI value and/or the last TRP (e.g., TRP #N), the second MAC CE command for beam indication in the list/set/pool of N>1 MAC CE commands for beam indication and/or the MAC CE command for beam indication indicating the second lowest entity ID/index value and/or the MAC CE command for beam indication indicating the second lowest TCI state ID value could correspond to the TRP with the second highest/second highest MAC CE activated TRP-specific ID/index value such as the second highest PCI value and/or the second last TRP (e.g., TRP #N-1), and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the highest TCI state ID value indicated could correspond to the TRP with the lowest/lowest MAC CE activated TRP-specific ID/index value such as the lowest PCI value and/or the first TRP (e.g., TRP #1). Other implicit indication methods of the association/mapping between the N>1 MAC CE commands for beam indication (and therefore, the TCI states/beams indicated therein) and the TRPs in the multi-TRP system are also possible.

In yet another example, the UE could be explicitly indicated by the network, e.g., via higher layer RRC signaling and/or MAC CE command and/or dynamic DCI signaling, the exact association/mapping between the MAC CE commands for beam indication (and therefore, the TCI states/beams indicated therein) and the TRPs in the multi-TRP system. For example, the UE could be first higher layer configured by the network a list/set/pool of CORESETPoolIndex values - e.g., a set of two CORESETPoolIndex values 0 and 1. The first MAC CE command for beam indication in the list/set/pool of N>1 MAC CE commands for beam indication and/or the MAC CE command for beam indication indicating the lowest entity ID/index value and/or the MAC CE command for beam indication indicating the TCI state with the lowest TCI state ID value could correspond to the first entry/CORESETPoolIndex value in the list/set/pool of CORESETPoolIndex values, the second MAC CE command for beam indication in the list/set/pool of N>1 MAC CE commands for beam indication and/or the MAC CE command for beam indication indicating the second lowest entity ID/index value and/or the MAC CE command for beam indication indicating the TCI state with the second lowest TCI state ID value could correspond to the second entry/CORESETPoolIndex value in the list/set/pool of CORESETPoolIndex values, and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the TCI state with the highest TCI state ID value could correspond to the last entry/CORESETPoolIndex value in the list/set/pool of CORESETPoolIndex values. For another example, the UE could be first higher layer configured by the network a list/set/pool of CORESETPoolIndex values - e.g., a set of two CORESETPoolIndex values 0 and 1.

The UE could then receive from the network one or more MAC CE activation commands/bitmaps to activate one or more CORESETPoolIndex values from the higher layer configured list/set/pool of CORESETPoolIndex values. The first MAC CE command for beam indication in the list/set/pool of N>1 MAC CE commands for beam indication and/or the MAC CE command for beam indication indicating the lowest entity ID/index value and/or the MAC CE command for beam indication indicating the TCI state with the lowest TCI state ID value could correspond to the first MAC CE(s)/bitmap(s) activated CORESETPoolIndex value, the second MAC CE command for beam indication in the list/set/pool of N>1 MAC CE commands for beam indication and/or the MAC CE command for beam indication indicating the second lowest entity ID/index value and/or the MAC CE command for beam indication indicating the TCI state with the second lowest TCI state ID value could correspond to the second MAC CE(s)/bitmap(s) activated CORESETPoolIndex value, and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the TCI state with the highest TCI state ID value could correspond to the last MAC CE(s)/bitmap(s) activated CORESETPoolIndex value. Other exact association/mapping relationships between the MAC CE commands for beam indication (and therefore, the TCI states/beams indicated therein) and the CORESETPoolIndex values and/or the corresponding indication method(s), e.g., via higher layer RRC signaling and/or MAC CE command and/or dynamic DCI signaling, are also possible.

In yet another example, the UE could be implicitly indicated by the network the association/mapping between the MAC CE commands for beam indication (and therefore, the TCI states/beams indicated therein) and the CORESETPoolIndex values. The UE could be higher layer configured by the network a list/set/pool of CORESETPoolIndex values - e.g., a set of two CORESETPoolIndex values 0 and 1. The UE could also receive from the network one or more MAC CE activation commands/bitmaps to activate one or more CORESETPoolIndex values from the higher layer configured list/set/pool of CORESETPoolIndex values. For example, the first MAC CE command for beam indication in the list/set/pool of N>1 MAC CE commands for beam indication and/or the MAC CE command for beam indication indicating the lowest entity ID/index value and/or the MAC CE command for beam indication indicating the lowest TCI state ID value could correspond to the lowest/lowest MAC CE activated CORESETPoolIndex value, the second MAC CE command for beam indication in the list/set/pool of N>1 MAC CE commands for beam indication and/or the MAC CE command for beam indication indicating the second lowest entity ID/index value and/or the MAC CE command for beam indication indicating the second lowest TCI state ID value could correspond to the second lowest/second lowest MAC CE activated CORESETPoolIndex value, and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the highest TCI state ID value could correspond to the highest/highest MAC CE activated CORESETPoolIndex value.

For another example, the first MAC CE command for beam indication in the list/set/pool of N>1 MAC CE commands for beam indication and/or the MAC CE command for beam indication indicating the lowest entity ID/index value and/or the MAC CE command for beam indication indicating the lowest TCI state ID value could correspond to the highest/highest MAC CE activated CORESETPoolIndex value, the second MAC CE command for beam indication in the list/set/pool of N>1 MAC CE commands for beam indication and/or the MAC CE command for beam indication indicating the second lowest entity ID/index value and/or the MAC CE command for beam indication indicating the second lowest TCI state ID value could correspond to the second highest/second highest MAC CE activated CORESETPoolIndex value, and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the highest TCI state ID value indicated could correspond to the lowest/lowest MAC CE activated CORESETPoolIndex value. Other implicit indication methods of the association/mapping between the N>1 MAC CE commands for beam indication (and therefore, the TCI states/beams indicated therein) and the CORESETPoolIndex values are also possible.

In yet another example, a MAC CE command for beam indication could include/comprise/incorporate at least one ID/index value. For example, this ID/index value could be a (absolute) TRP-specific ID/index value such as PCI value, TRP ID value, TRP index value and etc., based on a list/set/pool of TRP-specific ID/index values, e.g., higher layer configured to the UE and/or higher layer configured to the UE and activated by one or more MAC CE activation commands/bitmaps. For another example, this ID/index value could be an (relative) index within the list/set/pool of TRP-specific ID/index values, e.g., higher layer configured to the UE and/or higher layer configured to the UE and activated by one or more MAC CE activation commands/bitmaps. For yet another example, this ID/index value could be a CORESETPoolIndex value. The MAC CE command for beam indication may indicate/update the corresponding TCI state(s) for the TRP(s) associated with the same ID/index value, e.g., the CORESETPoolIndex value, as that indicated in the MAC CE command for beam indication.

As illustrated in FIGURE 10, an example of DCI based Rel. 17 unified TCI state/beam indication for the multi-TRP operation is presented. As illustrated in FIGURE 10, the UE could be first higher layer configured by the network, e.g., via the higher layer RRC signaling, a list/pool of $N\_tci$ TCI states. Each TCI state contains at least a QCL source RS with a QCL type, e.g., QCL-typeA/B/C/D. The UE could then receive from the network one or more DCIs (e.g., DCI format 1_1 or 1_2 with or without DL assignment) to indicate one or more beam(s) (i.e., the Rel. 17 unified TCI state(s)) for UE-dedicated reception on PDSCH/PDCCH or dynamic-grant/configured-grant based PUSCH and all of dedicated PUCCH resources associated with one or more TRPs in a multi-TRP system. For instance, the UE could receive from the network a single DCI (e.g., DCI format 1_1 or 1_2 with or without DL assignment) to indicate M>1 Rel. 17 unified TCI states/beams (e.g., M>1 joint DL and UL TCI states or M>1 separate UL TCI states) for the same PUSCH(s)/PUCCH(s) transmitted to/associated with different TRPs in the multi-TRP system.

As described above, a DCI used to indicate to the UE a beam (i.e., a TCI state and/or a TCI state ID) for the transmission/reception of a PDCCH or a PDSCH could be at least one of the following: (1) a DL related DCI (e.g., DCI format 1_0, DCI format 1_1 or DCI format 1_2) could be used to indicate to the UE a beam (i.e., a TCI state and/or a TCI state ID) for the transmission/reception of a PDCCH or a PDSCH, wherein the DL related DCI may or may not include a DL assignment; (2) an UL related DCI (e.g., DCI format 0_0, DCI format 0_1, DCI format 0_2) could be used to indicate to the UE a beam (i.e., a TCI state and/or a TCI state ID) for the transmission/reception of a PDCCH or a PDSCH, wherein the UL related DCI may or may not include an UL scheduling grant; (3) a custom/purpose designed DCI format could be used to indicate to the UE a beam (i.e., a TCI state and/or a TCI state ID) for the transmission/reception of a PDCCH or a PDSCH.

Furthermore, the Rel. 17 unified TCI state indicated in the DCI for beam indication could be at least one of: (1) a DL TCI state; (2) an UL TCI state; (3) a joint DL and UL TCI state; and (4) separate DL TCI state and UL TCI state.

The association/mapping between the TCI state(s)/beam(s) indicated in the DCI(s) and the TRPs in the multi-TRP system needs to be specified. There could be various means to associate/map the TCI state(s)/beam(s) indicated in the DCI(s) and the TRPs in the multi-TRP system.

In one example, for N>1 TCI states/beams indication in a single DCI, the UE could be explicitly indicated by the network, e.g., via higher layer RRC signaling and/or MAC CE command and/or dynamic DCI signaling, the exact association/mapping between the TCI states/beams indicated in the DCI and the TRPs in the multi-TRP system. For example, the UE could be first higher layer configured by the network a list/set/pool of TRP-specific ID/index values such as PCIs. The first TCI state and/or the TCI state with the lowest TCI state ID value indicated in the DCI for beam indication could correspond to the first entry/TRP in the list/set/pool of TRP-specific ID/index values, the second TCI state and/or the TCI state with the second lowest TCI state ID value indicated in the DCI for beam indication could correspond to the second entry/TRP in the list/set/pool of TRP-specific ID/index values, and so on, and the last TCI state and/or the TCI state with the highest TCI state ID value indicated in the DCI for beam indication could correspond to the last entry/TRP in the list/set/pool of TRP-specific ID/index values.

For another example, the UE could be first higher layer configured by the network a list/set/pool of TRP-specific ID/index values such as PCIs. The UE could then receive from the network one or more MAC CE activation commands/-bitmaps to activate one or more TRP-specific ID/index values from the higher layer configured list/set/pool of TRP-specific ID/index values. The first TCI state and/or the TCI state with the lowest TCI state ID value indicated in the DCI for beam indication could correspond to the first MAC CE(s)/bitmap(s) activated TRP-specific ID/index value, the second TCI state and/or the TCI state with the second lowest TCI state ID value indicated in the DCI for beam indication could correspond to the second MAC CE(s)/bitmap(s) activated TRP-specific ID/index value, and so on, and the last TCI state and/or the TCI state with the highest TCI state ID value indicated in the DCI for beam indication could correspond to the last MAC CE(s)/bitmap(s) activated TRP-specific ID/index value. Other exact association/mapping relationships between the TCI states/beams indicated in the DCI for beam indication and the TRPs in the multi-TRP system and/or the corresponding indication method(s), e.g., via higher layer RRC signaling and/or MAC CE command and/or dynamic DCI signaling, are also possible.

In one example, for N>1 TCI states/beams indication in a single DCI, the UE could be implicitly indicated by the network the association/mapping between the TCI states/beams indicated in the DCI for beam indication and the TRPs in the multi-TRP system. The UE could be higher layer configured by the network a list/set/pool of TRP-specific ID/index values such as PCIs. The UE could also receive from the network one or more MAC CE activation commands/bitmaps to activate one or more TRP-specific ID/index values from the higher layer configured list/set/pool of TRP-specific ID/index values. For example, the first TCI state and/or the TCI state with the lowest TCI state ID value indicated in the DCI for beam indication could correspond to the TRP with the lowest/lowest MAC CE activated TRP-specific ID/index value such as the lowest PCI value and/or the first TRP (e.g., TRP #1), the second TCI state and/or the TCI state with the second lowest TCI state ID value indicated in the DCI for beam indication could correspond to the TRP with the second lowest/second lowest MAC CE activated TRP-specific ID/index value such as the second lowest PCI value and/or the second TRP (e.g., TRP #2), and so on, and the last TCI state and/or the TCI state with the highest TCI state ID value indicated in the DCI for beam indication could correspond to the TRP with the highest/highest MAC CE activated TRP-specific ID/index value such as the highest PCI value and/or the last TRP (e.g., TRP #N).

For another example, the first TCI state and/or the TCI state with the lowest TCI state ID value indicated in the DCI for beam indication could correspond to the TRP with the highest/highest MAC CE activated TRP-specific ID/index value such as PCI value, the second TCI state and/or the TCI state with the second lowest TCI state ID value indicated in the DCI for beam indication could correspond to the TRP with the second highest/second highest MAC CE activated TRP-specific ID/index value such as PCI value, and so on, and the last TCI state and/or the TCI state with the highest TCI state ID value indicated in the DCI for beam indication could correspond to the TRP with the lowest/lowest MAC CE activated TRP-specific ID/index value such as PCI value. Other implicit indication methods of the association/mapping between the N>1 TCI states/beams indicated in the DCI and the TRPs in the multi-TRP system are also possible.

In one example, for N>1 TCI states/beams indication in a single DCI, the UE could be explicitly indicated by the network, e.g., via higher layer RRC signaling and/or MAC CE command and/or dynamic DCI signaling, the exact association/mapping between the TCI states/beams indicated in the DCI for beam indication and the CORESETPoolIndex values. For example, the UE could be first higher layer configured by the network a list/set/pool of CORESETPoolIndex values - e.g., a set of two CORESETPoolIndex values 0 and 1. The first TCI state and/or the TCI state with the lowest TCI state ID value indicated in the DCI for beam indication could correspond to the first entry/CORESETPoolIndex value in the list/set/pool of CORESETPoolIndex values, the second TCI state and/or the TCI state with the second lowest TCI state ID value indicated in the DCI for beam indication could correspond to the second entry/CORESETPoolIndex value in the list/set/pool of CORESETPoolIndex values, and so on, and the last TCI state and/or the TCI state with the highest TCI state ID value indicated in the DCI for beam indication could correspond to the last entry/CORESETPoolIndex value in the list/set/pool of CORESETPoolIndex values.

For another example, the UE could be first higher layer configured by the network a list/set/pool of CORESETPoolIndex values - e.g., a set of two CORESETPoolIndex values 0 and 1. The UE could then receive from the network one or more MAC CE activation commands/bitmaps to activate one or more CORESETPoolIndex values from the higher layer configured list/set/pool of CORESETPoolIndex values. The first TCI state and/or the TCI state with the lowest TCI state ID value indicated in the DCI for beam indication could correspond to the first MAC CE(s)/bitmap(s) activated CORESETPoolIndex value, the second TCI state and/or the TCI state with the second lowest TCI state ID value indicated in the DCI for beam indication could correspond to the second MAC CE(s)/bitmap(s) activated CORESETPoolIndex value, and so on, and the last TCI state and/or the TCI state with the highest TCI state ID value indicated in the DCI for beam indication could correspond to the last MAC CE(s)/bitmap(s) activated CORESETPoolIndex value. Other exact association/mapping relationships between the TCI states/beams indicated in the DCI for beam indication and the CORESETPoolIndex values and/or the corresponding indication method(s), e.g., via higher layer RRC signaling and/or MAC CE command and/or dynamic DCI signaling, are also possible.

In one example, for N>1 TCI states/beams indication in a single DCI, the UE could be implicitly indicated by the network the association/mapping between the TCI states/beams indicated in the DCI for beam indication and the CORESETPoolIndex values. The UE could be higher layer configured by the network a list/set/pool of CORESETPoolIndex values - e.g., a set of two CORESETPoolIndex values 0 and 1. The UE could also receive from the network one or more MAC CE activation commands/bitmaps to activate one or more CORESETPoolIndex values from the higher layer configured list/set/pool of CORESETPoolIndex values. For example, the first TCI state and/or the TCI state with the lowest TCI state ID value indicated in the DCI for beam indication could correspond to the lowest/lowest MAC CE activated CORESETPoolIndex value such as "0", the second TCI state and/or the TCI state with the second lowest TCI state ID value indicated in the DCI for beam indication could correspond to the second lowest/second lowest MAC CE activated CORESETPoolIndex value such as "1", and so on, and the last TCI state and/or the TCI state with the highest TCI state ID value indicated in the DCI for beam indication could correspond to the highest/highest MAC CE activated CORESETPoolIndex value such as "N-1".

For another example, the first TCI state and/or the TCI state with the lowest TCI state ID value indicated in the DCI for beam indication could correspond to the highest/highest MAC CE activated CORESETPoolIndex value, the second TCI state and/or the TCI state with the second lowest TCI state ID value indicated in the DCI for beam indication could correspond to the second highest/second highest MAC CE activated CORESETPoolIndex value, and so on, and the last TCI state and/or the TCI state with the highest TCI state ID value indicated in the DCI for beam indication could correspond to the lowest/lowest MAC CE activated CORESETPoolIndex value. Other implicit indication methods of the association/mapping between the N>1 TCI states/beams indicated in the DCI for beam indication and the CORESETPoolIndex values are also possible.

In one example, for N>1 TCI states/beams indication in a single DCI, a TCI state, e.g., the higher layer parameter TCI-State, indicated in the DCI for beam indication could include/comprise/incorporate at least one ID/index value. For example, this ID/index value could be a (absolute) TRP-specific ID/index value such as PCI value, TRP ID value, TRP index value and etc., based on a list/set/pool of TRP-specific ID/index values, e.g., higher layer configured to the UE and/or higher layer configured to the UE and activated by one or more MAC CE activation commands/bitmaps. For another example, this ID/index value could be an (relative) index within the list/set/pool of TRP-specific ID/index values, e.g., higher layer configured to the UE and/or higher layer configured to the UE and activated by one or more MAC CE activation commands/bitmaps. For yet another example, this ID/index value could be a CORESETPoolIndex value.

In one example, for N>1 DCIs with each DCI indicating a single TCI state/beam, the UE could be explicitly indicated by the network, e.g., via higher layer RRC signaling and/or MAC CE command and/or dynamic DCI signaling, the exact association/mapping between the DCIs for beam indication (and therefore, the TCI states/beams indicated therein) and the TRPs in the multi-TRP system. For example, the UE could be first higher layer configured by the network a list/set/pool of TRP-specific ID/index values such as PCIs. The DCI for beam indication associated with the lowest CORESETPoolIndex value (indicated in the corresponding higher layer parameter ControlResourceSet) and/or the DCI for beam indication indicating the TCI state with the lowest TCI state ID value could correspond to the first entry/TRP in the list/set/pool of TRP-specific ID/index values, the DCI for beam indication associated with the second lowest CORESETPoolIndex value (indicated in the corresponding higher layer parameter ControlResourceSet) and/or the DCI for beam indication indicating the TCI state with the second lowest TCI state ID value could correspond to the second entry/TRP in the list/set/pool of TRP-specific ID/index values, and so on, and the DCI for beam indication associated with the highest CORESETPoolIndex value (indicated in the corresponding higher layer parameter ControlResourceSet) and/or the DCI for beam indication indicating the TCI state with the highest TCI state ID value could correspond to the last entry/TRP in the list/set/pool of TRP-specific ID/index values.

For another example, the UE could be first higher layer configured by the network a list/set/pool of TRP-specific ID/index values such as PCIs. The UE could then receive from the network one or more MAC CE activation commands/bitmaps to activate one or more TRP-specific ID/index values from the higher layer configured list/set/pool of TRP-specific ID/index values. The DCI for beam indication associated with the lowest CORESETPoolIndex value (indicated in the corresponding higher layer parameter ControlResourceSet) and/or the DCI for beam indication indicating the TCI state with the lowest TCI state ID value could correspond to the first MAC CE(s)/bitmap(s) activated TRP-specific ID/index values, the DCI for beam indication associated with the second lowest CORESETPoolIndex value (indicated in the corresponding higher layer parameter ControlResourceSet) and/or the DCI for beam indication indicating the TCI state with the second lowest TCI state ID value could correspond to the second MAC CE(s)/bitmap(s) activated TRP-specific ID/index values, and so on, and the DCI for beam indication associated with the highest CORESETPoolIndex value (indicated in the corresponding higher layer parameter ControlResourceSet) and/or the DCI for beam indication indicating the TCI state with the highest TCI state ID value could correspond to the last MAC CE(s)/bitmap(s) activated TRP-specific ID/index values. Other exact association/mapping relationships between the DCIs for beam indication (and therefore, the TCI states/beams indicated therein) and the TRPs in the multi-TRP system and/or the corresponding indication method(s), e.g., via higher layer RRC signaling and/or MAC CE command and/or dynamic DCI signaling, are also possible.

In one example, for N>1 DCIs with each DCI indicating a single TCI state/beam, the UE could be implicitly indicated by the network the association/mapping between the DCIs for beam indication (and therefore, the TCI states/beams indicated therein) and the TRPs in the multi-TRP system. The UE could be higher layer configured by the network a list/set/pool of TRP-specific ID/index values such as PCIs. The UE could also receive from the network one or more MAC CE activation commands/bitmaps to activate one or more TRP-specific ID/index values from the higher layer configured list/set/pool of TRP-specific ID/index values. For example, the DCI for beam indication associated with the lowest CORESETPoolIndex value (indicated in the corresponding higher layer parameter ControlResourceSet) and/or the DCI for beam indication indicating the lowest TCI state ID value could correspond to the TRP with the lowest/lowest MAC CE activated TRP-specific ID/index value such as the lowest PCI value and/or the first TRP (e.g., TRP #1), the DCI for beam indication associated with the second lowest CORESETPoolIndex value (indicated in the corresponding higher layer parameter ControlResourceSet) and/or the DCI for beam indication indicating the second lowest TCI state ID value could correspond to the TRP with the second lowest/second lowest MAC CE activated TRP-specific ID/index value such as the second lowest PCI value and/or the second TRP (e.g., TRP #2), and so on, and the DCI for beam indication associated with the highest CORESETPoolIndex value (indicated in the corresponding higher layer parameter ControlResourceSet) and/or the DCI for beam indication indicating the highest TCI state ID value could correspond to the TRP with the highest/highest MAC CE activated TRP-specific ID/index value such as the highest PCI value and/or the last TRP (e.g., TRP #N).

For another example, the DCI for beam indication associated with the lowest CORESETPoolIndex value (indicated in the corresponding higher layer parameter ControlResourceSet) and/or the DCI for beam indication indicating the lowest TCI state ID value could correspond to the TRP with the highest/highest MAC CE activated TRP-specific ID/index value such as PCI value, the DCI for beam indication associated with the second lowest CORESETPoolIndex value (indicated in the corresponding higher layer parameter ControlResourceSet) and/or the DCI for beam indication indicating the second lowest TCI state ID value could correspond to the TRP with the second highest/second highest MAC CE activated TRP-specific ID/index value such as PCI value, and so on, and the DCI for beam indication associated with the highest CORESETPoolIndex value (indicated in the corresponding higher layer parameter ControlResourceSet) and/or the DCI for beam indication indicating the highest TCI state ID value could correspond to the TRP with the lowest/lowest MAC CE activated TRP-specific ID/index value such as PCI value. Other implicit indication methods of the association/mapping between the N>1 DCIs for beam indication (and therefore, the TCI states/beams indicated therein) and the TRPs in the multi-TRP system are also possible.

In one example, for N>1 DCIs with each DCI indicating a single TCI state/beam, a DCI for beam indication could include/comprise/incorporate at least one ID/index value. For example, this ID/index value could be a (absolute) TRP-specific ID/index value such as PCI value, TRP ID value, TRP index value and etc., based on a list/set/pool of TRP-specific ID/index values, e.g., higher layer configured to the UE and/or higher layer configured to the UE and activated by one or more MAC CE activation commands/bitmaps. For another example, this ID/index value could be an (relative) index within the list/set/pool of TRP-specific ID/index values, e.g., higher layer configured to the UE and/or higher layer configured to the UE and activated by one or more MAC CE activation commands/bitmaps. For yet another example, this ID/index value could be a CORESETPoolIndex value. The DCI for beam indication may indicate/update the corresponding TCI state(s) for the TRP(s) associated with the same ID/index value, e.g., the CORESETPoolIndex value, as that indicated in the DCI for beam indication

As illustrated in FIGURE 11, an example of Rel. 17 DCI based TCI state/beam indication (with MAC CE activated TCI states) for the multi-TRP operation is presented. As illustrated in FIGURE 11, the UE could be first higher layer configured by the network, e.g., via the higher layer RRC signaling, a list/pool of N_tci TCI states. Each TCI state contains at least a QCL source RS with a QCL type, e.g., QCL-typeA/B/C/D. The UE could then receive from the network one or more MAC CE activation commands activating one or more TCI states from the higher layer configured list/pool of TCI states, e.g., up to eight TCI states could be activated by a MAC CE activation command. The UE could receive from the network one or more DCIs to indicate one or more beam(s) (i.e., the Rel. 17 unified TCI state(s)) from the MAC CE activated TCI state(s)/beam(s) for UE-dedicated reception on PDSCH/PDCCH or dynamic-grant/configured-grant based PUSCH and all of dedicated PUCCH resources associated with one or more TRPs in a multi-TRP system. For instance, the UE could receive from the network a single DCI to indicate M'>1 Rel. 17 unified TCI states/beams (e.g., M'>1 joint DL and UL TCI states or M'>1 separate UL TCI states) from the MAC CE activated TCI states/beams for the same PUSCH(s)/PUCCH(s) transmitted to/associated with different TRPs in the multi-TRP system.

As described above, a DCI used to indicate to the UE a beam (i.e., a TCI state and/or a TCI state ID) for the transmission/reception of a PDCCH or a PDSCH could be at least one of the following: (1) a DL related DCI (e.g., DCI format 1_0, DCI format 1_1 or DCI format 1_2) could be used to indicate to the UE a beam (i.e., a TCI state and/or a TCI state ID) for the transmission/reception of a PDCCH or a PDSCH, wherein the DL related DCI may or may not include a DL assignment; (2) an UL related DCI (e.g., DCI format 0_0, DCI format 0_1, DCI format 0_2) could be used to indicate to the UE a beam (i.e., a TCI state and/or a TCI state ID) for the transmission/reception of a PDCCH or a PDSCH, wherein the UL related DCI may or may not include an UL scheduling grant; and/or (3) a custom/purpose designed DCI format could be used to indicate to the UE a beam (i.e., a TCI state and/or a TCI state ID) for the transmission/reception of a PDCCH or a PDSCH.

Furthermore, the Rel. 17 unified TCI state indicated in the DCI for beam indication could be at least one of: (1) a DL TCI state; (2) an UL TCI state; (3) a joint DL and UL TCI state; and (4) separate DL TCI state and UL TCI state.

The association/mapping between the DCI(s) indicated TCI state(s)/beam(s) - from the MAC CE activated TCI state(s)/beam(s) - and the TRPs in the multi-TRP system needs to be specified. There could be various means to associate/map the DCI(s) indicated TCI state(s)/beam(s) - from the MAC CE activated TCI state(s)/beam(s) - and the TRPs in the multi-TRP system.

In one example, for N'>1 TCI states/beams indication in a single DCI, the UE could be explicitly indicated by the network, e.g., via higher layer RRC signaling and/or MAC CE command and/or dynamic DCI signaling, the exact association/mapping between the DCI indicated TCI states/beams (selected from the MAC CE activated TCI states/-beams) and the TRPs in the multi-TRP system. For example, the UE could be first higher layer configured by the network a list/set/pool of TRP-specific ID/index values such as PCIs. The first TCI state and/or the TCI state with the lowest TCI state ID value indicated in the DCI for beam indication could correspond to the first entry/TRP in the list/set/pool of TRP-specific ID/index values, the second TCI state and/or the TCI state with the second lowest TCI state ID value indicated in the DCI for beam indication could correspond to the second entry/TRP in the list/set/pool of TRP-specific ID/index values, and so on, and the last TCI state and/or the TCI state with the highest TCI state ID value indicated in the DCI for beam indication could correspond to the last entry/TRP in the list/set/pool of TRP-specific ID/index values.

For another example, the UE could be first higher layer configured by the network a list/set/pool of TRP-specific ID/index values such as PCIs. The UE could then receive from the network one or more MAC CE activation commands/-bitmaps to activate one or more TRP-specific ID/index values from the higher layer configured list/set/pool of TRP-specific ID/index values. The first TCI state and/or the TCI state with the lowest TCI state ID value indicated in the DCI for beam indication could correspond to the first MAC CE(s)/bitmap(s) activated TRP-specific ID/index value, the second TCI state and/or the TCI state with the second lowest TCI state ID value indicated in the DCI for beam indication could correspond to the second MAC CE(s)/bitmap(s) activated TRP-specific ID/index value, and so on, and the last TCI state and/or the TCI state with the highest TCI state ID value indicated in the DCI for beam indication could correspond to the last MAC CE(s)/bitmap(s) activated TRP-specific ID/index value. Other exact association/mapping relationships between the DCI indicated TCI states/beams (selected from the MAC CE activated TCI states/beams) and the TRPs in the multi-TRP system and/or the corresponding indication method(s), e.g., via higher layer RRC signaling and/or MAC CE command and/or dynamic DCI signaling, are also possible.

In one example, for N'>1 TCI states/beams indication in a single DCI, the UE could be implicitly indicated by the network the association/mapping between the DCI indicated TCI states/beams (selected from the MAC CE activated TCI states/beams) and the TRPs in the multi-TRP system. The UE could be higher layer configured by the network a list/set/pool of TRP-specific ID/index values such as PCIs. The UE could also receive from the network one or more MAC CE activation commands/bitmaps to activate one or more TRP-specific ID/index values from the higher layer configured list/set/pool of TRP-specific ID/index values. For example, the first TCI state and/or the TCI state with the lowest TCI state ID value indicated in the DCI for beam indication could correspond to the TRP with the lowest/lowest MAC CE activated TRP-specific ID/index value such as the lowest PCI value and/or the first TRP (e.g., TRP #1), the second TCI state and/or the TCI state with the second lowest TCI state ID value indicated in the DCI for beam indication could correspond to the TRP with the second lowest/second lowest MAC CE activated TRP-specific ID/index value such as the second lowest PCI value and/or the second TRP (e.g., TRP #2), and so on, and the last TCI state and/or the TCI state with the highest TCI state ID value indicated in the DCI for beam indication could correspond to the TRP with the highest/highest MAC CE activated TRP-specific ID/index value such as the highest PCI value and/or the last TRP (e.g., TRP #N').

For another example, the first TCI state and/or the TCI state with the lowest TCI state ID value indicated in the DCI for beam indication could correspond to the TRP with the highest/highest MAC CE activated TRP-specific ID/index value such as the highest PCI value and/or the last TRP (e.g., TRP #N'), the second TCI state and/or the TCI state with the second lowest TCI state ID value indicated in the DCI for beam indication could correspond to the TRP with the second highest/second highest MAC CE activated TRP-specific ID/index value such as the second highest PCI value and/or the second last TRP (e.g., TRP #N'-1), and so on, and the last TCI state and/or the TCI state with the highest TCI state ID value indicated in the DCI for beam indication could correspond to the TRP with the lowest/lowest MAC CE activated TRP-specific ID/index value such as the lowest PCI value and/or the first TRP (e.g., TRP #1). Other implicit indication methods of the association/mapping between the N'>1 DCI indicated TCI states/beams (selected from the MAC CE activated TCI states/beams) and the TRPs in the multi-TRP system are also possible.

In one example, for N'>1 TCI states/beams indication in a single DCI, the UE could be explicitly indicated by the network, e.g., via higher layer RRC signaling and/or MAC CE command and/or dynamic DCI signaling, the exact association/mapping between the DCI indicated TCI states/beams (selected from the MAC CE activated TCI states/-beams) and the CORESETPoolIndex values. For example, the UE could be first higher layer configured by the network a list/set/pool of CORESETPoolIndex values - e.g., a set of two CORESETPoolIndex values 0 and 1. The first TCI state and/or the TCI state with the lowest TCI state ID value indicated in the DCI for beam indication could correspond to the first entry/CORESETPoolIndex value in the list/set/pool of CORESETPoolIndex values, the second TCI state and/or the TCI state with the second lowest TCI state ID value indicated in the DCI for beam indication could correspond to the second entry/CORESETPoolIndex value in the list/set/pool of CORESETPoolIndex values, and so on, and the last TCI state and/or the TCI state with the highest TCI state ID value indicated in the DCI for beam indication could correspond to the last entry/CORESETPoolIndex value in the list/set/pool of CORESETPoolIndex values.

For another example, the UE could be first higher layer configured by the network a list/set/pool of CORESETPoolIndex values - e.g., a set of two CORESETPoolIndex values 0 and 1. The UE could then receive from the network one or more MAC CE activation commands/bitmaps to activate one or more CORESETPoolIndex values from the higher layer configured list/set/pool of CORESETPoolIndex values. The first TCI state and/or the TCI state with the lowest TCI state ID value indicated in the DCI for beam indication could correspond to the first MAC CE(s)/bitmap(s) activated CORESETPoolIndex value, the second TCI state and/or the TCI state with the second lowest TCI state ID value indicated in the DCI for beam indication could correspond to the second MAC CE(s)/bitmap(s) activated CORESETPoolIndex value, and so on, and the last TCI state and/or the TCI state with the highest TCI state ID value indicated in the DCI for beam indication could correspond to the last MAC CE(s)/bitmap(s) activated CORESETPoolIndex value. Other exact association/mapping relationships between the DCI indicated TCI states/beams (selected from the MAC CE activated TCI states/beams) and the CORESETPoolIndex values and/or the corresponding indication method(s), e.g., via higher layer RRC signaling and/or MAC CE command and/or dynamic DCI signaling, are also possible.

In one example, for N'>1 TCI states/beams indication in a single DCI, the UE could be implicitly indicated by the network the association/mapping between the DCI indicated TCI states/beams (selected from the MAC CE activated TCI states/beams) and the CORESETPoolIndex values. The UE could be higher layer configured by the network a list/set/pool of CORESETPoolIndex values - e.g., a set of two CORESETPoolIndex values 0 and 1. The UE could also receive from the network one or more MAC CE activation commands/bitmaps to activate one or more CORESETPoolIndex values from the higher layer configured list/set/pool of CORESETPoolIndex values. For example, the first TCI state and/or the TCI state with the lowest TCI state ID value indicated in the DCI for beam indication could correspond to the lowest/lowest MAC CE activated CORESETPoolIndex value such as "0", the second TCI state and/or the TCI state with the second lowest TCI state ID value indicated in the DCI for beam indication could correspond to the second lowest/second lowest MAC CE activated CORESETPoolIndex value such as "1", and so on, and the last TCI state and/or the TCI state with the highest TCI state ID value indicated in the DCI for beam indication could correspond to the highest/highest MAC CE activated CORESETPoolIndex value such as "N-1".

For another example, the first TCI state and/or the TCI state with the lowest TCI state ID value indicated in the DCI for beam indication could correspond to the highest/highest MAC CE activated CORESETPoolIndex value, the second TCI state and/or the TCI state with the second lowest TCI state ID value indicated in the DCI for beam indication could correspond to the second highest/second highest MAC CE activated CORESETPoolIndex value, and so on, and the last TCI state and/or the TCI state with the highest TCI state ID value indicated in the DCI for beam indication could correspond to the lowest/lowest MAC CE activated CORESETPoolIndex value. Other implicit indication methods of the association/mapping between the N'>1 DCI indicated TCI states/beams (selected from the MAC CE activated TCI states/beams) and the CORESETPoolIndex values are also possible.

In one example, for N'>1 TCI states/beams indication in a single DCI, a TCI state (selected from the MAC CE activated TCI states/beams), e.g., the higher layer parameter TCI-State, indicated in the MAC CE command for beam indication could include/comprise/incorporate at least one ID/index value. For example, this ID/index value could be a (absolute) TRP-specific ID/index value such as PCI value, TRP ID value, TRP index value and etc., based on a list/set/pool of TRP-specific ID/index values, e.g., higher layer configured to the UE and/or higher layer configured to the UE and activated by one or more MAC CE activation commands/bitmaps. For another example, this ID/index value could be an (relative) index within the list/set/pool of TRP-specific ID/index values, e.g., higher layer configured to the UE and/or higher layer configured to the UE and activated by one or more MAC CE activation commands/bitmaps. For yet another example, this ID/index value could be a CORESETPoolIndex value.

In one example, for N'>1 DCIs with each DCI indicating a single TCI state/beam, the UE could be explicitly indicated by the network, e.g., via higher layer RRC signaling and/or MAC CE command and/or dynamic DCI signaling, the exact association/mapping between the DCIs for beam indication (and therefore, the TCI states/beams indicated therein - selected from the MAC CE activated TCI states/beams) and the TRPs in the multi-TRP system. For example, the UE could be first higher layer configured by the network a list/set/pool of TRP-specific ID/index values such as PCIs. The DCI for beam indication associated with the lowest CORESETPoolIndex value (indicated in the corresponding higher layer parameter ControlResourceSet) and/or the DCI for beam indication indicating the TCI state with the lowest TCI state ID value could correspond to the first entry/TRP in the list/set/pool of TRP-specific ID/index values, the DCI for beam indication associated with the second lowest CORESETPoolIndex value (indicated in the corresponding higher layer parameter ControlResourceSet) and/or the DCI for beam indication indicating the TCI state with the second lowest TCI state ID value could correspond to the second entry/TRP in the list/set/pool of TRP-specific ID/index values, and so on, and the DCI for beam indication associated with the highest CORESETPoolIndex value (indicated in the corresponding higher layer parameter ControlResourceSet) and/or the DCI for beam indication indicating the TCI state with the highest TCI state ID value could correspond to the last entry/TRP in the list/set/pool of TRP-specific ID/index values.

For another example, the UE could be first higher layer configured by the network a list/set/pool of TRP-specific ID/index values such as PCIs. The UE could then receive from the network one or more MAC CE activation commands/-bitmaps to activate one or more TRP-specific ID/index values from the higher layer configured list/set/pool of TRP-specific ID/index values. The DCI for beam indication associated with the lowest CORESETPoolIndex value (indicated in the corresponding higher layer parameter ControlResourceSet) and/or the DCI for beam indication indicating the TCI state with the lowest TCI state ID value could correspond to the first MAC CE(s)/bitmap(s) activated TRP-specific ID/index values, the DCI for beam indication associated with the second lowest CORESETPoolIndex value (indicated in the corresponding higher layer parameter ControlResourceSet) and/or the DCI for beam indication indicating the TCI state with the second lowest TCI state ID value could correspond to the second MAC CE(s)/bitmap(s) activated TRP-specific ID/index values, and so on, and the DCI for beam indication associated with the highest CORESETPoolIndex value (indicated in the corresponding higher layer parameter ControlResourceSet) and/or the DCI for beam indication indicating the TCI state with the highest TCI state ID value could correspond to the last MAC CE(s)/bitmap(s) activated TRP-specific ID/index values. Other exact association/mapping relationships between the DCIs for beam indication (and therefore, the TCI states/beams indicated therein - selected from the MAC CE activated TCI states/beams) and the TRPs in the multi-TRP system and/or the corresponding indication method(s), e.g., via higher layer RRC signaling and/or MAC CE command and/or dynamic DCI signaling, are also possible.

In one example, for N'>1 DCIs with each DCI indicating a single TCI state/beam, the UE could be implicitly indicated by the network the association/mapping between the DCIs for beam indication (and therefore, the TCI states/beams indicated therein - selected from the MAC CE activated TCI states/beams) and the TRPs in the multi-TRP system. The UE could be higher layer configured by the network a list/set/pool of TRP-specific ID/index values such as PCIs. The UE could also receive from the network one or more MAC CE activation commands/bitmaps to activate one or more TRP-specific ID/index values from the higher layer configured list/set/pool of TRP-specific ID/index values. For example, the DCI for beam indication associated with the lowest CORESETPoolIndex value (indicated in the corresponding higher layer parameter ControlResourceSet) and/or the DCI for beam indication indicating the lowest TCI state ID value could correspond to the TRP with the lowest/lowest MAC CE activated TRP-specific ID/index value such as the lowest PCI value and/or the first TRP (e.g., TRP #1), the DCI for beam indication associated with the second lowest CORESETPoolIndex value (indicated in the corresponding higher layer parameter ControlResourceSet) and/or the DCI for beam indication indicating the second lowest TCI state ID value could correspond to the TRP with the second lowest/second lowest MAC CE activated TRP-specific ID/index value such as the second lowest PCI value and/or the second TRP (e.g., TRP #2), and so on, and the DCI for beam indication associated with the highest CORESETPoolIndex value (indicated in the corresponding higher layer parameter ControlResourceSet) and/or the DCI for beam indication indicating the highest TCI state ID value could correspond to the TRP with the highest/highest MAC CE activated TRP-specific ID/index value such as the highest PCI value and/or the last TRP (e.g., TRP #N').

For another example, the DCI for beam indication associated with the lowest CORESETPoolIndex value (indicated in the corresponding higher layer parameter ControlResourceSet) and/or the DCI for beam indication indicating the lowest TCI state ID value could correspond to the TRP with the highest/highest MAC CE activated TRP-specific ID/index value such as the highest PCI value and/or the last TRP (e.g., TRP #N'), the DCI for beam indication associated with the second lowest CORESETPoolIndex value (indicated in the corresponding higher layer parameter ControlResourceSet) and/or the DCI for beam indication indicating the second lowest TCI state ID value could correspond to the TRP with the second highest/second highest MAC CE activated TRP-specific ID/index value such as the second highest PCI value and/or the second last TRP (e.g., TRP #N'-1), and so on, and the DCI for beam indication associated with the highest CORESETPoolIndex value (indicated in the corresponding higher layer parameter ControlResourceSet) and/or the DCI for beam indication indicating the highest TCI state ID value could correspond to the TRP with the lowest/lowest MAC CE activated TRP-specific ID/index value such as the lowest PCI value and/or the first TRP (e.g., TRP #1). Other implicit indication methods of the association/mapping between the N'>1 DCIs for beam indication (and therefore, the TCI states/beams indicated therein - selected from the MAC CE activated TCI states/beams) and the TRPs in the multi-TRP system are also possible.

In one example, for N'>1 DCIs with each DCI indicating a single TCI state/beam, a DCI for beam indication (indicating the TCI state(s)/beam(s) selected from the MAC CE activated TCI states/beams) could include/comprise/incorporate at least one ID/index value. For example, this ID/index value could be a (absolute) TRP-specific ID/index value such as PCI value, TRP ID value, TRP index value and etc., based on a list/set/pool of TRP-specific ID/index values, e.g., higher layer configured to the UE and/or higher layer configured to the UE and activated by one or more MAC CE activation commands/bitmaps.

For another example, this ID/index value could be an (relative) index within the list/set/pool of TRP-specific ID/index values, e.g., higher layer configured to the UE and/or higher layer configured to the UE and activated by one or more MAC CE activation commands/bitmaps. For yet another example, this ID/index value could be a CORESETPoolIndex value. The DCI for beam indication (indicating the TCI state(s)/beam(s) selected from the MAC CE activated TCI states/beams) may indicate/update the corresponding TCI state(s) for the TRP(s) associated with the same ID/index value, e.g., the CORESETPoolIndex value, as that indicated in the DCI for beam indication (indicating the TCI state(s)/beam(s) selected from the MAC CE activated TCI states/beams).

When a UE is provided by the network, e.g., via the higher layer parameter TCI-State _r17, M>1 joint DL and UL Rel. 17 unified TCI states or M>1 separate UL Rel. 17 unified TCI states or a first combination of M>1 joint DL and UL Rel. 17 unified TCI states and separate UL Rel. 17 unified TCI states or N>1 separate DL Rel. 17 unified TCI states or a second combination of N>1 joint DL and UL Rel. 17 unified TCI states and separate DL Rel. 17 unified TCI states or a third combination of N>1 joint DL and UL Rel. 17 unified TCI states, separate DL Rel. 17 unified TCI states and separate UL Rel. 17 unified TCI states via MAC CE or DCI (e.g., DCI format 1_1 or 1_2 with or without DL assignment) based signaling, or when two SRS resource sets are configured in srs-ResourceSetToAddModList or srs-ResourceSetToAddModListDCI-0-2 with higher layer parameter usage in SRS-ResourceSet set to "codebook" or "noncodebook", for PUSCH repetition Type A, in case $K$>1 concesutive slots, the same symbol allocation is applied across the K consecutive slots and the PUSCH is limited to a single transmission layer.

The UE may repeat the TB across the $K$ consecutive slots applying the same symbol allocation in each slot, and the association of the first and second joint DL and UL TCI states or the first and second separate UL TCI states (M=2) or the first and second separate DL TCI states (N=2) or the first and second TCI states in the first combination of TCI states or the first and second TCI states in the second combination of TCI states or the first and second TCI states in the third combination of TCI states to each slot is determined as shown in following examples.

In one example, if configured by the network - e.g., if a DCI format 0_1 or DCI format 0_2 indicates codepoint "00" for the SRS resource set indicator, the first joint DL and UL TCI state or the first separate UL TCI state or the first separate DL TCI state or the first TCI state in the first combination of TCI states or the first TCI state in the second combination of TCI states or the first TCI state in the third combination of TCI states or the joint DL and UL TCI state with the lowest TCI state ID or the separate UL TCI state with the lowest TCI state ID or the separate DL TCI state with the lowest TCI state ID or the TCI state in the first combination of TCI states with the lowest TCI state ID or the TCI state in the second combination of TCI states with the lowest TCI state ID or the TCI state in the second combination of TCI states with the lowest TCI state ID could be associated with all K consecutive slots,

In another example, if configured by the network - e.g., if a DCI format 0_1 or DCI format 0_2 indicates codepoint "01" for the SRS resource set indicator, the second joint DL and UL TCI state or the second separate UL TCI state or the second separate DL TCI state or the second TCI state in the first combination of TCI states or the second TCI state in the second combination of TCI states or the second TCI state in the third combination of TCI states or the joint DL and UL TCI state with the highest TCI state ID or the separate UL TCI state with the highest TCI state ID or the separate DL TCI state with the highest TCI state ID or the TCI state in the first combination of TCI states with the highest TCI state ID or the TCI state in the second combination of TCI states with the highest TCI state ID or the TCI state in the third combination of TCI states with the highest TCI state ID could be associated with all K consecutive slots,

In yet another example, if configured by the network - e.g., if a DCI format 0_1 or DCI format 0_2 indicates codepoint "10" for the SRS resource set indicator, the association between the first and second joint DL and UL TCI states or the first and second separate UL TCI states (M=2) or the first and second separate DL TCI states (N=2) or the first and second TCI states in the first combination of TCI states or the first and second TCI states in the second combination of TCI states or the first and second TCI states in the third combination of TCI states with $K$ consecutive slots is determined as shown in following examples.

In one example, when $K = 2$, the first and second joint DL and UL TCI states or the first and second separate UL TCI states or the first and second separate DL TCI states or the first and second TCI states in the first combination of TCI states or the first and second TCI states in the second combination of TCI states or the first and second TCI states in the third combination of TCI states are applied to the first and second slot of 2 consecutive slots, respectively.

In one example, when $K > 2$ and *cyclicMapping* in *PUSCH-Config* is enabled, the first and second joint DL and UL TCI states or the first and second separate UL TCI states or the first and second separate DL TCI states or the first and second TCI states in the first combination of TCI states or the first and second TCI states in the second combination of TCI states or the first and second TCI states in the third combination of TCI states are applied to the first and second slot of K consecutive slots, respectively, and the same TCI state mapping pattern continues to the remaining slots of K consecutive slots.

In one example, when $K > 2$ and *sequentialMapping* in *PUSCH-Config* is enabled, the first joint DL and UL TCI state or the first separate UL TCI state or the first separate DL TCI state or the first TCI state in the first combination of TCI states or the first TCI state in the second combination of TCI states or the first TCI state in the third combination of TCI states or the joint DL and UL TCI state with the lowest TCI state ID or the separate UL TCI state with the lowest TCI state ID or the separate DL TCI state with the lowest TCI state ID or the TCI state in the first combination of TCI states with the lowest TCI state ID or the TCI state in the second combination of TCI states with the lowest TCI state ID or the TCI state in the third combination of TCI states with the lowest TCI state ID is applied to the first and second slots of $K$ consecutive slots, and the second joint DL and UL TCI state or the second separate UL TCI state or the second separate DL TCI state or or the second TCI state in the first combination of TCI states or the second TCI state in the second combination of TCI states or the second TCI state in the third combination of TCI states or the joint DL and UL TCI state with the highest TCI state ID or the separate UL TCI state with the highest TCI state ID or the separate DL TCI state with the highest TCI state ID or the TCI state in the first combination of TCI states with the highest TCI state ID or the TCI state in the second combination of TCI states with the highest TCI state ID or the TCI state in the third combination of TCI states with the highest TCI state ID is applied to the third and fourth slot of $K$ consecutive slots, and the same TCI state mapping pattern continues to the remaining slots of $K$ consecutive slots.

In one example, if configured by the network - e.g., if a DCI format 0_1 or DCI format 0_2 indicates codepoint "11" for the SRS resource set indicator, the association between the first and second joint DL and UL TCI states or the first and second separate UL TCI states (M=2) or the first and second separate DL TCI states (N=2) or the first and second TCI states in the first combination of TCI states or the first and second TCI states in the second combination of TCI states or the first and second TCI states in the third combination of TCI states with $K$ consecutive slots can be alternatively determined as shown in following examples.

In one example, when $K = 2$, the second and first joint DL and UL TCI states or the second and first separate UL TCI states or the second and first separate DL TCI states or the second and first TCI states in the first combination of TCI states or the second and first TCI states in the second combination of TCI states or the second and first TCI states in the third combination of TCI states are applied to the first and second slot of 2 consecutive slots, respectively.

In one example, when $K > 2$ and *cyclicMapping* in *PUSCH-Config* is enabled, the second and first joint DL and UL TCI states or the second and first separate UL TCI states or the second and first separate DL TCI states or the second and first TCI states in the first combination of TCI states or the second and first TCI states in the second combination of TCI states or the second and first TCI states in the third combination of TCI states are applied to the first and second slot of $K$ consecutive slots, respectively, and the same TCI state mapping pattern continues to the remaining slots of $K$ consecutive slots.

In one example, when $K > 2$ and *sequentialMapping* in *PUSCH-Config* is enabled, the second joint DL and UL TCI state or the second separate UL TCI state or the second separate DL TCI state or the second TCI state in the first combination of TCI states or the second TCI state in the second combination of TCI states or the second TCI state in the third combination of TCI states or the joint DL and UL TCI state with the highest TCI state ID or the separate UL TCI state with the highest TCI state ID or the separate DL TCI state with the highest TCI state ID or the TCI state in the first combination of TCI states with the highest TCI state ID or the TCI state in the second combination of TCI states with the highest TCI state ID or the TCI state in the third combination of TCI states with the highest TCI state ID is applied to the first and second slots of $K$ consecutive slots, and the first joint DL and UL TCI state or the first separate UL TCI state or the first separate DL TCI state or the first TCI state in the first combination of TCI states or the first TCI state in the second combination of TCI states or the first TCI state in the third combination of TCI states or the joint DL and UL TCI state with the lowest TCI state ID or the separate UL TCI state with the lowest TCI state ID or the separate DL TCI state with the lowest TCI state ID or the TCI state in the first combination of TCI states with the lowest TCI state ID or the TCI state in the second combination of TCI states with the lowest TCI state ID or the TCI state in the third combination of TCI states with the lowest TCI state ID is applied to the third and fourth slot of K consecutive slots, and the same TCI state mapping pattern continues to the remaining slots of K consecutive slots.

In yet another example, for *K*=M, the indicated M>1 joint DL and UL TCI states could be one-to-one mapped to/associated with the K consecutive slots; for instance, the m-th joint DL and UL TCI state or the joint DL and UL TCI state with the m-th lowest (or highest) TCI state ID (m=1,..., M) is applied to the k-th slot of *K* consecutive slots (k=1,..., *K*). For another example, for *K*=M, the indicated M>1 separate UL TCI states could be one-to-one mapped to/associated with the K consecutive slots; for instance, the m-th separate UL TCI state or the separate UL TCI state with the m-th lowest (or highest) TCI state ID (m=1,..., M) is applied to the k-th slot of *K* consecutive slots (k=1,... , *K*). Yet for another example, for *K*=N, the indicated N>1 separate DL TCI states could be one-to-one mapped to/associated with the *K* consecutive slots; for instance, the n-th separate DL TCI state or the separate DL TCI state with the n-th lowest (or highest) TCI state ID (n=1,..., N) is applied to the k-th slot of *K* consecutive slots (k=1,..., *K*).

Yet for another example, for *K*=M, the indicated first combination of M>1 joint DL and UL TCI states and separate UL TCI states could be one-to-one mapped to/associated with the *K* consecutive slots; for instance, the m-th TCI state in the first combination of TCI states or the TCI state in the first combination of TCI states with the m-th lowest (or highest) TCI state ID (m=1,... , M) is applied to the k-th slot of *K* consecutive slots (k=1,... , *K*). Yet for another example, for *K*=N, the indicated second combination of N>1 joint DL and UL TCI states and separate DL TCI states could be one-to-one mapped to/associated with the *K* consecutive slots; for instance, the n-th TCI state in the second combination of TCI states or the TCI state in the second combination of TCI states with the n-th lowest (or highest) TCI state ID (n=1,... , N) is applied to the k-th slot of *K* consecutive slots (k=1,... , *K*). Yet for another example, for *K*=N, the indicated third combination of N>1 joint DL and UL TCI states, separate DL TCI states and separate UL TCI states could be one-to-one mapped to/associated with the K consecutive slots; for instance, the n-th TCI state in the third combination of TCI states or the TCI state in the third combination of TCI states with the n-th lowest (or highest) TCI state ID (n=1,... , N) is applied to the k-th slot of *K* consecutive slots (k=1,... , *K*).

For PUSCH repetition Type B, when a UE is provided by the network, e.g., via the higher layer parameter TCI-State_r17, M>1 joint DL and UL Rel. 17 unified TCI states or M>1 separate UL Rel. 17 unified TCI states or the first combination of M>1 joint DL and UL Rel. 17 unified TCI states and separate UL Rel. 17 unified TCI states or N>1 separate DL Rel. 17 unified TCI states or the second combination of N>1 joint DL and UL Rel. 17 unified TCI states and separate DL Rel. 17 unified TCI states or the third combination of N>1 joint DL and UL Rel. 17 unified TCI states, separate DL Rel. 17 unified TCI states and separate UL Rel. 17 unified TCI states via MAC CE or DCI (e.g., DCI format 1_1 or 1_2 with or without DL assignment) based signaling, the Rel. 17 unified TCI state (e.g., joint DL and UL TCI state or separate UL TCI state or separate DL TCI state) association to nominal PUSCH repetitions follows the same method as the Rel. 17 unified TCI state (e.g., joint DL and UL TCI state or separate UL TCI state or separate DL TCI state) association to slots in PUSCH Type A repetition as discussed above by considering nominal repetitions instead of slots.

In one example, for PUSCH scheduled by DCI format 0_0 on a cell, if the UE is not configured/provided with PUCCH resources on the active UL BWP and the UE is in RRC connected mode, when the UE is provided by the network, e.g., via the higher layer parameter TCI-State_r17, a joint DL and UL TCI state or a separate UL TCI state via MAC CE or DCI (e.g., DCI format 1_1 or 1_2 with or without DL assignment) based signalling, the UE may transmit PUSCH according to the RS configured with qcl-Type set to "typeD" corresponding to the QCL assumption in the indicated joint DL and UL TCI state or separate UL TCI state. Furthermore, for a DL pathloss estimate $PL_{b,f,c}(q_d)$ in dB calculated by the UE using RS index $q_d$ for the active DL BWP of carrier *f* of serving cell c, the UE could determine the RS resource index $q_d$ providing a periodic RS resource configured with qcl-Type set to "typeD" corresponding to the QCL assumption in the indicated joint DL and UL TCI state or separate UL TCI state.

In one example, for PUSCH scheduled by DCI format 0_0 on a cell, if the UE is not configured/provided with PUCCH resources on the active UL BWP and the UE is in RRC connected mode, for PUSCH repetition Type A, when a UE is provided by the network, e.g., via the higher layer parameter TCI-State_r17, M>1 joint DL and UL TCI states or M>1 separate UL TCI states or M>1 joint DL and UL TCI states and separate UL TCI states via MAC CE or DCI (e.g., DCI format 1_1 or 1_2 with or without DL assignment) based signaling, the UE may transmit PUSCH in K consecutive slots according to (1) the RSs configured with qcl-Type set to "typeD" corresponding to the QCL assumptions in the indicated M>1 joint DL and UL TCI states or M>1 separate UL TCI states or M>1 joint DL and UL TCI states and separate UL TCI states, and (2) the association between the M>1 joint DL and UL TCI states or M>1 separate UL TCI states or M>1 joint DL and UL TCI states and separate UL TCI states and the K>1 consecutive slots following those specified in examples of the present disclosure.

Furthermore, for a DL pathloss estimate $PL_{b,f,c}(q_d)$ in dB calculated by the UE using RS index $q_d$ for the active DL BWP of carrier *f* of serving cell *c*, the UE could determine the RS resource index $q_d$ providing a periodic RS resource configured with qcl-Type set to "typeD" corresponding to the QCL assumption in one of the indicated M>1 joint DL and UL TCI states or M>1 separate UL TCI states or M>1 joint DL and UL TCI states and separate UL TCI states - e.g., the indicated joint DL and UL TCI state or separate UL TCI state associated with the *k*-th slot in the *K*>1 consecutive slots (k∈ {1,... , *K*}) following those specified in example of the present disclosure.

In one example, for PUSCH scheduled by DCI format 0_0 on a cell, if the UE is not configured/provided with PUCCH resources on the active UL BWP and the UE is in RRC connected mode, for PUSCH repetition Type B, when a UE is provided by the network, e.g., via the higher layer parameter TCI-State_r17, M>1 joint DL and UL TCI states or M>1 separate UL TCI states or M>1 joint DL and UL TCI states and separate UL TCI states via MAC CE or DCI (e.g., DCI format 1_1 or 1_2 with or without DL assignment) based signaling, the UE may transmit $K$ nominal PUSCH repetitions according to (1) the RSs configured with qcl-Type set to "typeD" corresponding to the QCL assumptions in the indicated M>1 joint DL and UL TCI states or M>1 separate UL TCI states or M>1 joint DL and UL TCI states and separate UL TCI states, and (2) the association between the M>1 joint DL and UL TCI states or M>1 separate UL TCI states or M>1 joint DL and UL TCI states and separate UL TCI states and the $K$>1 nominal PUSCH repetitions following those specified in examples of the present disclosure by considering nominal repetitions instead of slots.

Furthermore, for a DL pathloss estimate $PL_{b,f,c}(q_d)$ in dB calculated by the UE using RS index $q_d$ for the active DL BWP of carrier $f$ of serving cell c, the UE could determine the RS resource index $q_d$ providing a periodic RS resource configured with qcl-Type set to "typeD" corresponding to the QCL assumption in one of the indicated M>1 joint DL and UL TCI states or M>1 separate UL TCI states or M>1 joint DL and UL TCI states and separate UL TCI states - e.g., the indicated joint DL and UL TCI state or separate UL TCI state associated with the k-th nominal PDSCH repetition in the $K$>1 nominal PDSCH repetitions ($k \in \{1,... , K\}$) following those specified in examples of the present disclosure by considering nominal repetitions instead of slots.

In one example, for PUSCH scheduled by DCI format 0_0 on a cell, if the UE is configured/provided with PUCCH resources on the active UL BWP and the UE is in RRC connected mode, when the UE is not provided by the network joint DL and UL TCI state or separate UL TCI state, and is provided by the network, e.g., via the higher layer parameter TCI-State_r17, a separate DL TCI state via MAC CE or DCI (e.g., DCI format 1_1 or 1_2 with or without DL assignment) based signalling, the UE may transmit PUSCH according to the RS configured with qcl-Type set to "typeD" corresponding to the QCL assumption in the indicated separate DL TCI state. Furthermore, for a DL pathloss estimate $PL_{b,f,c}(q_d)$ in dB calculated by the UE using RS index $q_d$ for the active DL BWP of carrier $f$ of serving cell c, the UE could determine the RS resource index $q_d$ providing a periodic RS resource configured with qcl-Type set to "typeD" corresponding to the QCL assumption in the indicated separate DL TCI state.

In one example, for PUSCH scheduled by DCI format 0_0 on a cell, if the UE is configured/provided with PUCCH resources on the active UL BWP and the UE is in RRC connected mode, for PUSCH repetition Type A, when a UE is not provided by the network joint DL and UL TCI state or separate UL TCI state, and is provided by the network, e.g., via the higher layer parameter TCI-State_r17, N>1 separate DL TCI states via MAC CE or DCI (e.g., DCI format 1_1 or 1_2 with or without DL assignment) based signaling, the UE may transmit PUSCH in $K$ consecutive slots according to (1) the RSs configured with qcl-Type set to "typeD" corresponding to the QCL assumptions in the indicated N>1 separate DL TCI states, and (2) the association between the N>1 separate DL TCI states and the $K$>1 consecutive slots following those specified in examples of the present disclosure. Furthermore, for a DL pathloss estimate $PL_{b,f,c}(q_d)$ in dB calculated by the UE using RS index $q_d$ for the active DL BWP of carrier $f$ of serving cell c, the UE could determine the RS resource index $q_d$ providing a periodic RS resource configured with qcl-Type set to "typeD" corresponding to the QCL assumption in one of the indicated N>1 separate DL TCI states - e.g., the indicated separate DL TCI state associated with the k-th slot in the $K$>1 consecutive slots ($k \in \{1,..., K\}$) following those specified in examples of the present disclosure.

In one example, for PUSCH scheduled by DCI format 0_0 on a cell, if the UE is configured/provided with PUCCH resources on the active UL BWP and the UE is in RRC connected mode, for PUSCH repetition Type B, when a UE is not provided by the network joint DL and UL TCI state or separate UL TCI state, and is provided by the network, e.g., via the higher layer parameter TCI-State r17, N>1 separate DL TCI states via MAC CE or DCI (e.g., DCI format 1_1 or 1_2 with or without DL assignment) based signaling, the UE may transmit $K$ nominal PUSCH repetitions according to (1) the RSs configured with qcl-Type set to "typeD" corresponding to the QCL assumptions in the indicated N>1 separate DL TCI states, and (2) the association between the N>1 separate DL TCI states and the $K$>1 nominal PUSCH repetitions following those specified in examples of the present disclosure by considering nominal repetitions instead of slots.

Furthermore, for a DL pathloss estimate $PL_{b,f,c}(q_d)$ in dB calculated by the UE using RS index $q_d$ for the active DL BWP of carrier $f$ of serving cell c, the UE could determine the RS resource index $q_d$ providing a periodic RS resource configured with qcl-Type set to "typeD" corresponding to the QCL assumption in one of the indicated N>1 separate DL TCI state - e.g., the indicated separate DL TCI state associated with the k-th nominal PDSCH repetition in the $K$> 1 nominal PDSCH repetitions ($k \in \{1,..., K\}$) following those specified in examples of the present disclosure by considering nominal repetitions instead of slots.

When a UE is provided by the network, e.g., via the higher layer parameter TCI-State _r17, M>1 joint DL and UL Rel. 17 unified TCI states or M>1 separate UL Rel. 17 unified TCI states or the first combination of M>1 joint DL and UL Rel. 17 unified TCI states and separate UL Rel. 17 unified TCI states via MAC CE or DCI (e.g., DCI format 1_1 or 1_2 with or without DL assignment) based signaling, and when the UE is configured a number of slots, $N_{\text{PUCCH}}^{\text{repeat}}$, for repetitions of a PUCCH transmission, the UE: (1) uses the first and second joint DL and UL TCI states or the first and second separate UL TCI states (M=2) or the first and second TCI states in the first combination of TCI states for first and second repetitions of the PUCCH transmission, respectively, when $N_{\text{PUCCH}}^{\text{repeat}}=2$ ; and/or (2) alternates between the first and second joint DL and UL TCI states or the first and second separate UL TCI states (M=2) or the first or the second TCI states in the first combination of TCI states, respectively, per $N_{\text{PUCCH}}^{\text{switch}}$ repetitions of the PUCCH transmission, where $N_{\text{PUCCH}}^{\text{switch}} = 1$ if *mappingPattern* = "cyclicMapping"; else, $N_{\text{PUCCH}}^{\text{switch}} = 2$ .

If a UE transmits a PUSCH on active UL BWP b of carrier *f* of serving cell c using parameter set configuration with index *j* and PUSCH power control adjustment state with index *l*, the UE determines the PUSCH transmission power $P_{\text{PUSCH},b,f,c}(i, j, q_d, l)$ in PUSCH transmission occasion *i* as:

$$P_{\text{PUSCH},b,f,c}(i, j, q_d, l) =$$

$$\min \left\{ \begin{array}{c} P_{\text{CMAX},b,f,c}(i), \\ P_{\text{O}_{\text{PUSCH}},b,f,c}(j) + 10 \log_{10}\left(2^\mu \cdot M_{\text{RB},b,f,c}^{\text{PUSCH}}(i)\right) + \alpha_{b,f,c}(j) \cdot PL_{b,f,c}(q_d) + \Delta_{\text{TF},b,f,c}(i) + f_{b,f,c}(i,l) \end{array} \right\}$$

[dBm] where, (1) $P_{\text{CMAX},b,f,c}(i)$ is the UE configured maximum output power defined in the 3GPP standard specification for carrier *f* of serving cell c in PUSCH transmission occasion *i*; and (2) $P_{\text{O\_PUSCH},b,f,c}(j)$ is a parameter composed of the sum of a component $P_{\text{O\_NOMIMAL,PUSCH},f,c}(j)$ and a component $P_{\text{O\_UE\_PUSCH},b,f,c}(j)$ where $j \in \{0,1, ..., J - 1\}$.

For a PUSCH (re)transmission configured by the higher layer parameter ConfiguredGrantConfig, $j = 1$ , $P_{\text{O\_NOMIMAL,PUSCH},f,c}(1)$ is provided by the higher layer parameter p0-NominalWithoutGrant, or $P_{\text{O\_NOMIMAL,PUSCH},f,c}(1) = P_{\text{O\_NOMIMAL,PUSCH},f,c}(0)$ if p0-NominalWithoutGrant is not provided.

When a UE is provided by the network, e.g., via the higher layer parameter TCI-State _r17, M>1 joint DL and UL Rel. 17 unified TCI states or M>1 separate UL Rel. 17 unified TCI states or a first combination of M>1 joint DL and UL Rel. 17 unified TCI states and separate UL Rel. 17 unified TCI states or N>1 separate DL Rel. 17 unified TCI states or a second combination of N>1 joint DL and UL Rel. 17 unified TCI states and separate DL Rel. 17 unified TCI states or a third combination of N>1 joint DL and UL Rel. 17 unified TCI states, separate UL Rel. 17 unified TCI states and separate DL Rel. 17 unified TCI states via MAC CE or DCI (e.g., DCI format 1_1 or 1_2 with or without DL assignment) based signaling, or if the UE is provided two SRS resource sets in srs-ResourceSetToAddModList or srs-ResourceSetToAddModListDCI-0-2 with usage set to "codebook" or "nonCodebook", and is provided p0-PUSCH-Alpha2, for a retransmission of a configured grant Type 1 PUSCH, or for activation or retransmission of a configured grant Type 2 PUSCH, scheduled by a DCI format that includes/indicates, e.g., one or more Rel. 17 unified TCI states, and for active BWP b of carrier f of serving cell c.

In one example, if configured by the network - e.g., the SRS resource set indicator value is 00, first $P_{\text{O\_UE\_PUSCH},b,f,c}(1)$ value is provided by the value of p0-PUSCH-Alpha or p0 obtained from p0-PUSCH-Alpha in the higher layer parameter ConfiguredGrantConfig, which provides an index to first p0-Alpha-CLID-PUSCH-set/P0-PUSCH-AlphaSet associated with the indicated first joint DL and UL TCI state or first separate UL TCI state or first TCI state in the first combination of TCI states or first separate DL TCI state or first TCI state in the second combination of TCI states or first TCI state in the third combination of TCI states.

In another example, if configured by the network - e.g., the SRS resource set indicator value is 01, second $P_{\text{O\_UE\_PUSCH},b,f,c}(1)$ value is provided by the value of p0-PUSCH-Alpha2 or p0 obtained from p0-PUSCH-Alpha2 in the higher layer parameter ConfiguredGrantConfig, which provides an index to second p0-Alpha-CLID-PUSCH-set/P0-PUSCH-AlphaSet associated with the indicated second joint DL and UL TCI state or second separate UL TCI state or second TCI state in the first combination of TCI states or second separate DL TCI state or second TCI state in the second combination of TCI states or second TCI state in the third combination of TCI states.

In yet another example, if configured by the network - e.g., the SRS resource set indicator value is 10 or 11, first and second $P_{\text{O\_UE\_PUSCH},b,f,c}(1)$ values are respectively provided by the values of p0-PUSCH-Alpha or p0 obtained from p0-PUSCH-Alpha in the higher layer parameter ConfiguredGrantConfig, which provides an index to first p0-Alpha-CLID-PUSCH-set/P0-PUSCH-AlphaSet associated with the indicated first joint DL and UL TCI state or first separate UL TCI state or first TCI state in the first combination of TCI states or first separate DL TCI state or first TCI state in the second combination of TCI states or first TCI state in the third combination of TCI states, and p0-PUSCH-Alpha2 or p0 obtained from p0-PUSCH-Alpha2 in the higher layer parameter ConfiguredGrantConfig, which provides an index to second p0-Alpha-CLID-PUSCH-set/P0-PUSCH-AlphaSet associated with the indicated second joint DL and UL TCI state or second separate UL TCI state or second TCI state in the first combination of TCI states or second separate DL TCI state or second TCI state in the second combination of TCI states or second TCI state in the third combination of TCI states.

Else, $P_{\text{O\_UE\_PUSCH},b,f,c}(1)$ is provided by the value of p0-PUSCH-Alpha or p0 obtained from p0-PUSCH-Alpha in the higher layer parameter ConfiguredGrantConfig, which provides an index to p0-Alpha-CLID-PUSCH-set/P0-PUSCH-AlphaSet for active BWP $b$ of carrier $f$ of serving cell c.

For $j \in \{2, \dots, J - 1\} = S_J$, a $P_{O\_NOMIMAL,PUSCH,f,c}(j)$ value, applicable for all $j \in S_J$, is provided by p0-NominalWithGrant, or $P_{O\_NOMIMAL,PUSCH,f,c}(j) = P_{O\_NOMIMAL,PUSCH,f,c}(0)$ if p0-NominalWithGrant is not provided, for each carrier $f$ of serving cell c. When a UE is provided by the network, e.g., via the higher layer parameter TCI-State_r17, M>1 joint DL and UL Rel. 17 unified TCI states or M>1 separate UL Rel. 17 unified TCI states or a first combination of M>1 joint DL and UL Rel. 17 unified TCI states and separate UL Rel. 17 unified TCI states or N>1 separate DL Rel. 17 unified TCI states or a second combination of N>1 joint DL and UL Rel. 17 unified TCI states and separate DL Rel. 17 unified TCI states or a third combination of N>1 joint DL and UL Rel. 17 unified TCI states, separate UL Rel. 17 unified TCI states and separate DL Rel. 17 unified TCI states via MAC CE or DCI (e.g., DCI format 1_1 or 1_2 with or without DL assignment) based signaling, or if the UE is provided two SRS resource sets in srs-ResourceSetToAddModList or srs-Resource-SetToAddModListDCI-0-2 with usage set to "codebook" or "nonCodebook", and the PUSCH transmission is scheduled by a DCI format that includes/indicates, e.g., one or more Rel. 17 unified TCI states or an SRS resource set indicator field with value 10 or 11.

If the UE is provided PO-PUSCH-Set and the DCI format includes an open-loop power control parameter set indication field, the UE could determine first and second values of $P_{O\_UE\_PUSCH,b,f,c}(j)$ as first p0-Alpha-CLID-PUSCH-set/P0-PUSCH-AlphaSet in p0-AlphaSets associated with the indicated first joint DL and UL TCI state or first separate UL TCI state or first TCI state in the first combination of TCI states or first separate DL TCI state or first TCI state in the second combination of TCI states or first TCI state in the third combination of TCI states, and second p0-Alpha-CLID-PUSCH-set/P0-PUSCH-AlphaSet in p0-AlphaSets associated with the indicated second joint DL and UL TCI state or second separate UL TCI state or second TCI state in the first combination of TCI states or second separate DL TCI state or second TCI state in the second combination of TCI states or second TCI state in the third combination of TCI states, if the open-loop power control parameter set indication value is "0" or "00".

If the open-loop power control parameter set indication value is "1" or "01", in one example, first value in PO-PUSCH-Set with the lowest p0-PUSCH-SetID value in first p0-PUSCH-SetList associated with the indicated first joint DL and UL TCI state or first separate UL TCI state or first TCI state in the first combination of TCI states or first separate DL TCI state or first TCI state in the second combination of TCI states or first TCI state in the third combination of TCI states, and first value in PO-PUSCH-Set with the lowest p0-PUSCH-SetID value in second p0-PUSCH-SetList2 associated with the indicated second joint DL and UL TCI state or second separate UL TCI state or second TCI state in the first combination of TCI states or second separate DL TCI state or second TCI state in the second combination of TCI states or second TCI state in the third combination of TCI states; in another example, first value in PO-PUSCH-Set associated with the indicated first joint DL and UL TCI state or first separate UL TCI state or first TCI state in the first combination of TCI states or first separate DL TCI state or first TCI state in the second combination of TCI states or first TCI state in the third combination of TCI states in p0-PUSCH-SetList/p0-PUSCH-SetList2, and first value in PO-PUSCH-Set associated with the indicated second joint DL and UL TCI state or second separate UL TCI state or second TCI state in the first combination of TCI states or second separate DL TCI state or second TCI state in the second combination of TCI states or second TCI state in the third combination of TCI states in p0-PUSCH-SetList/p0-PUSCH-SetList2; in yet another example, first value in PO-PUSCH-Set associated with the indicated first joint DL and UL TCI state or first separate UL TCI state or first TCI state in the first combination of TCI states or first separate DL TCI state or first TCI state in the second combination of TCI states or first TCI state in the third combination of TCI states in p0-PUSCH-SetList, and first value in PO-PUSCH-Set associated with the indicated second joint DL and UL TCI state or second separate UL TCI state or second TCI state in the first combination of TCI states or second separate DL TCI state or second TCI state in the second combination of TCI states or second TCI state in the third combination of TCI states in p0-PUSCH-SetList2; in yet another example, first value in PO-PUSCH-Set associated with the indicated second joint DL and UL TCI state or second separate UL TCI state or second TCI state in the first combination of TCI states or second separate DL TCI state or second TCI state in the second combination of TCI states or second TCI state in the third combination of TCI states in p0-PUSCH-SetList, and first value in PO-PUSCH-Set associated with the indicated first joint DL and UL TCI state or first separate UL TCI state or first TCI state in the first combination of TCI states or first separate DL TCI state or first TCI state in the second combination of TCI states or first TCI state in the third combination of TCI states in p0-PUSCH-SetList2.

If the open-loop power control parameter set indication value is "10" or "11", in one example, second value in PO-PUSCH-Set with the lowest p0-PUSCH-SetID value in first p0-PUSCH-SetList associated with the indicated first joint DL and UL TCI state or first separate UL TCI state or first TCI state in the first combination of TCI states or first separate DL TCI state or first TCI state in the second combination of TCI states or first TCI state in the third combination of TCI states, and second value in PO-PUSCH-Set with the lowest p0-PUSCH-SetID value in second p0-PUSCH-SetList2 associated with the indicated second joint DL and UL TCI state or second separate UL TCI state or second TCI state in the first combination of TCI states or second separate DL TCI state or second TCI state in the second combination of TCI states or second TCI state in the third combination of TCI states; in another example, second value in PO-PUSCH-Set associated with the indicated first joint DL and UL TCI state or first separate UL TCI state or first TCI state in the first combination of TCI states or first separate DL TCI state or first TCI state in the second combination of TCI states or first TCI state in the third combination of TCI states in p0-PUSCH-SetList/p0-PUSCH-SetList2, and second value in PO-PUSCH-Set associated with the indicated second joint DL and UL TCI state or second separate UL TCI state or second TCI state in the first combination of TCI states or second separate DL TCI state or second TCI state in the second combination of TCI states or second TCI state in the third combination of TCI states in p0-PUSCH-SetList/p0-PUSCH-SetList2; in yet another example, second value in PO-PUSCH-Set associated with the indicated first joint DL and UL TCI state or first separate UL TCI state or first TCI state in the first combination of TCI states or first separate DL TCI state or first TCI state in the second combination of TCI states or first TCI state in the third combination of TCI states in p0-PUSCH-SetList, and second value in PO-PUSCH-Set associated with the indicated second joint DL and UL TCI state or second separate UL TCI state or second TCI state in the first combination of TCI states or second separate DL TCI state or second TCI state in the second combination of TCI states or second TCI state in the third combination of TCI states in p0-PUSCH-SetList2; in yet another example, second value in PO-PUSCH-Set associated with the indicated second joint DL and UL TCI state or second separate UL TCI state or second TCI state in the first combination of TCI states or second separate DL TCI state or second TCI state in the second combination of TCI states or second TCI state in the third combination of TCI states in p0-PUSCH-SetList, and second value in PO-PUSCH-Set associated with the indicated first joint DL and UL TCI state or first separate UL TCI state or first TCI state in the first combination of TCI states or first separate DL TCI state or first TCI state in the second combination of TCI states or first TCI state in the third combination of TCI states in p0-PUSCH-SetList2.

Else, the UE could determine first and second values of $P_{O\_UE\_PUSCH,b,f,c}(j)$ as first p0-Alpha-CLID-PUSCH-set/P0-PUSCH-AlphaSet in p0-AlphaSets associated with the indicated first joint DL and UL TCI state or first separate UL TCI state or first TCI state in the first combination of TCI states or first separate DL TCI state or first TCI state in the second combination of TCI states or first TCI state in the third combination of TCI states, and second p0-Alpha-CLID-PUSCH-set/P0-PUSCH-AlphaSet in p0-AlphaSets associated with the indicated second joint DL and UL TCI state or second separate UL TCI state or second TCI state in the first combination of TCI states or second separate DL TCI state or second TCI state in the second combination of TCI states or second TCI state in the third combination of TCI states.

In one example, for $\alpha_{b,f,c}(j)$, for $j = 1$, when a UE is provided by the network, e.g., via the higher layer parameter TCI-State_r17, M>1 joint DL and UL Rel. 17 unified TCI states or M>1 separate UL Rel. 17 unified TCI states or a first combination of M>1 joint DL and UL Rel. 17 unified TCI states and separate UL Rel. 17 unified TCI states or N>1 separate DL Rel. 17 unified TCI states or a second combination of N>1 joint DL and UL Rel. 17 unified TCI states and separate DL Rel. 17 unified TCI states or a third combination of N>1 joint DL and UL Rel. 17 unified TCI states, separate UL Rel. 17 unified TCI states and separate DL Rel. 17 unified TCI states via MAC CE or DCI (e.g., DCI format 1_1 or 1_2 with or without DL assignment) based signaling, or if the UE is provided two SRS resource sets in srs-ResourceSetToAddModList or srs-ResourceSetToAddModListDCI-0-2 with usage set to "codebook" or "nonCodebook", and is provided p0-PUSCH-Alpha2, for a retransmission of a configured grant Type 1 PUSCH, or for activation or retransmission of a configured grant Type 2 PUSCH, scheduled by a DCI format that includes/indicates, e.g., one or more Rel. 17 unified TCI states or an SRS resource set indicator field, and for active BWP b of carrier f of serving cell c.

In one example, if configured by the network - e.g., the SRS resource set indicator value is 00, first $\alpha_{b,f,c}(1)$ value is provided by the value of p0-PUSCH-Alpha or alpha obtained from p0-PUSCH-Alpha in the higher layer parameter ConfiguredGrantConfig, which provides an index to first p0-Alpha-CLID-PUSCH-set/P0-PUSCH-AlphaSet associated with the indicated first joint DL and UL TCI state or first separate UL TCI state or first TCI state in the first combination of TCI states or first separate DL TCI state or first TCI state in the second combination of TCI states or first TCI state in the third combination of TCI states.

In another example, if configured by the network - e.g., the SRS resource set indicator value is 01, second $\alpha_{b,f,c}(1)$ value is provided by the value of p0-PUSCH-Alpha2 or alpha obtained from p0-PUSCH-Alpha2 in the higher layer parameter ConfiguredGrantConfig, which provides an index to second p0-Alpha-CLID-PUSCH-set/P0-PUSCH-Alpha-Set associated with the indicated second joint DL and UL TCI state or second separate UL TCI state or second TCI state in the first combination of TCI states or second separate DL TCI state or second TCI state in the second combination of TCI states or second TCI state in the third combination of TCI states.

In yet another example, if configured by the network - e.g., the SRS resource set indicator value is 10 or 11, first and second $\alpha_{b,f,c}(1)$ values are respectively provided by the values of p0-PUSCH-Alpha or alpha obtained from p0-PUSCH-Alpha in the higher layer parameter ConfiguredGrantConfig, which provides an index to first p0-Alpha-CLID-PUSCH-set/P0-PUSCH-AlphaSet associated with the indicated first joint DL and UL TCI state or first separate UL TCI state or first TCI state in the first combination of TCI states or first separate DL TCI state or first TCI state in the second combination of TCI states or first TCI state in the third combination of TCI states, and p0-PUSCH-Alpha2 or alpha obtained from p0-PUSCH-Alpha2 in the higher layer parameter ConfiguredGrantConfig, which provides an index to second p0-Alpha-CLID-PUSCH-set/P0-PUSCH-AlphaSet associated with the indicated second joint DL and UL TCI state or second separate UL TCI state or second TCI state in the first combination of TCI states or second separate DL TCI state or second TCI state in the second combination of TCI states or second TCI state in the third combination of TCI states.

Else, $\alpha_{b,f,c}(1)$ is provided by the value of p0-PUSCH-Alpha or alpha obtained from p0-PUSCH-Alpha in the higher layer parameter ConfiguredGrantConfig, which provides an index to p0-Alpha-CLID-PUSCH-set/P0-PUSCH-AlphaSet for active BWP *b* of carrier *f* of serving cell c.

In one example, for $\alpha_{b,f,c}(j)$, for $j \in S_J$, when a UE is provided by the network, e.g., via the higher layer parameter TCI-State_r17, M>1 joint DL and UL Rel. 17 unified TCI states or M>1 separate UL Rel. 17 unified TCI states or a first combination of M>1 joint DL and UL Rel. 17 unified TCI states and separate UL Rel. 17 unified TCI states or N>1 separate DL Rel. 17 unified TCI states or a second combination of N>1 joint DL and UL Rel. 17 unified TCI states and separate DL Rel. 17 unified TCI states or a third combination of N>1 joint DL and UL Rel. 17 unified TCI states, separate UL Rel. 17 unified TCI states and separate DL Rel. 17 unified TCI states via MAC CE or DCI (e.g., DCI format 1_1 or 1_2 with or without DL assignment) based signaling, or if the UE is provided two SRS resource sets in srs-ResourceSetToAddModList or srs-ResourceSetToAddModListDCI-0-2 with usage set to "codebook" or "nonCodebook", and the PUSCH transmission is scheduled by a DCI format that includes/indicates, e.g., one or more Rel. 17 unified TCI states or an SRS resource set indicator field with value 10 or 11, the UE could determine first and second $\alpha_{b,f,c}(j)$ values from first p0-Alpha-CLID-PUSCH-set/P0-PUSCH-AlphaSet in p0-AlphaSets associated with the indicated first joint DL and UL TCI state or first separate UL TCI state or first TCI state in the first combination of TCI states or first separate DL TCI state or first TCI state in the second combination of TCI states or first TCI state in the third combination of TCI states, and second p0-Alpha-CLID-PUSCH-set/P0-PUSCH-AlphaSet in p0-AlphaSets associated with the indicated second joint DL and UL TCI state or second separate UL TCI state or second TCI state in the first combination of TCI states or second separate DL TCI state or second TCI state in the second combination of TCI states or second TCI state in the third combination of TCI states, respectively.

For a DL pathloss estimate $PL_{b,f,c}(q_d)$ in dB calculated by the UE using RS index $q_d$ for the active DL BWP of carrier *f* of serving cell *c,* when a UE is provided by the network, e.g., via the higher layer parameter TCI-State_r17, M>1 joint DL and UL Rel. 17 unified TCI states or M>1 separate UL Rel. 17 unified TCI states or a first combination of M>1 joint DL and UL Rel. 17 unified TCI states and separate UL Rel. 17 unified TCI states or N>1 separate DL Rel. 17 unified TCI states or a second combination of N>1 joint DL and UL Rel. 17 unified TCI states and separate DL Rel. 17 unified TCI states or a third combination of N>1 joint DL and UL Rel. 17 unified TCI states, separate UL Rel. 17 unified TCI states and separate DL Rel. 17 unified TCI states via MAC CE or DCI (e.g., DCI format 1_1 or 1_2 with or without DL assignment) based signaling, or if the UE is provided two SRS resource sets in srs-ResourceSetToAddModList or srs-Resource-SetToAddModListDCI-0-2 with usage set to "codebook" or "nonCodebook", the UE could determine first RS resource index $q_d$ providing a periodic RS resource configured with qcl-Type set to "typeD" in first joint DL and UL TCI state or first separate UL TCI state or first TCI state in the first combination of TCI states or first separate DL TCI state or first TCI state in the second combination of TCI states or first TCI state in the third combination of TCI states, and second RS resource index $q_d$ providing a periodic RS resource configured with qcl-Type set to "typeD" in second joint DL and UL TCI state or second separate UL TCI state or second TCI state in the first combination of TCI states or second separate DL TCI state or second TCI state in the second combination of TCI states or second TCI state in the third combination of TCI states.

For the PUSCH power control adjustment state $f_{b,f,c}(i, l)$ defined in the 3GPP standard specification for active BWP b of carrier *f* of serving cell c in PUSCH transmission occasion *i*, when a UE is provided by the network, e.g., via the higher layer parameter TCI-State_r17, M>1 joint DL and UL Rel. 17 unified TCI states or M>1 separate UL Rel. 17 unified TCI states or a first combination of M>1 joint DL and UL Rel. 17 unified TCI states and separate UL Rel. 17 unified TCI states or N>1 separate DL Rel. 17 unified TCI states or a second combination of N>1 joint DL and UL Rel. 17 unified TCI states and separate DL Rel. 17 unified TCI states or a third combination of N>1 joint DL and UL Rel. 17 unified TCI states, separate UL Rel. 17 unified TCI states and separate DL Rel. 17 unified TCI states via MAC CE or DCI (e.g., DCI format 1_1 or 1_2 with or without DL assignment) based signaling, or if the UE is provided two SRS resource sets in srs-ResourceSetToAddModList or srs-ResourceSetToAddModListDCI-0-2 with usage set to "codebook" or "nonCodebook", and is provided p0-PUSCH-Alpha-CLID2, for a retransmission of a configured grant Type 1 PUSCH, or for activation or retransmission of a configured grant Type 2 PUSCH, scheduled by a DCI format that includes/indicates, e.g., one or more Rel. 17 unified TCI states or a SRS resource set indicator field, and for active BWP *b* of carrier *f* of serving cell c.

In one example, if configured by the network - e.g., the SRS resource set indicator value is 00, first *l* value is provided by the value of p0-PUSCH-Alpha-CLID or powerControlLoopToUse obtained from p0-PUSCH-Alpha-CLID in the higher layer parameter ConfiguredGrantConfig, which provides an index to first p0-Alpha-CLID-PUSCH-set associated with the indicated first joint DL and UL TCI state or first separate UL TCI state or first TCI state in the first combination of TCI states or first separate DL TCI state or first TCI state in the second combination of TCI states or first TCI state in the third combination of TCI states.

In another example, if configured by the network - e.g., the SRS resource set indicator value is 01, second *l* value is provided by the value of p0-PUSCH-Alpha-CLID2 or powerControlLoopToUse obtained from p0-PUSCH-Alpha-CLID2 in the higher layer parameter ConfiguredGrantConfig, which provides an index to second p0-Alpha-CLID-PUSCH-set associated with the indicated second joint DL and UL TCI state or second separate UL TCI state or second TCI state in the first combination of TCI states or second separate DL TCI state or second TCI state in the second combination of TCI states or second TCI state in the third combination of TCI states.

In yet another example, if configured by the network - e.g., the SRS resource set indicator value is 10 or 11, first

and second *I* values are respectively provided by the values of p0-PUSCH-Alpha-CLID or powerControlLoopToUse obtained from p0-PUSCH-Alpha-CLID in the higher layer parameter ConfiguredGrantConfig, which provides an index to first p0-Alpha-CLID-PUSCH-set associated with the indicated first joint DL and UL TCI state or first separate UL TCI state or first TCI state in the first combination of TCI states or first separate DL TCI state or first TCI state in the second combination of TCI states or first TCI state in the third combination of TCI states, and p0-PUSCH-Alpha-CLID2 or powerControlLoopToUse obtained from p0-PUSCH-Alpha-CLID2 in the higher layer parameter ConfiguredGrantConfig, which provides an index to second p0-Alpha-CLID-PUSCH-set associated with the indicated second joint DL and UL TCI state or second separate UL TCI state or second TCI state in the first combination of TCI states or second separate DL TCI state or second TCI state in the second combination of TCI states or second TCI state in the third combination of TCI states.

For the PUSCH power control adjustment state $f_{b,f,c}(i, l)$ defined in the 3GPP standard specification for active BWP *b* of carrier *f* of serving cell c in PUSCH transmission occasion *i*, else, for a PUSCH (re)transmission configured by ConfiguredGrantConfig, the value $l \in \{0,1\}$ of is provided to the UE by powerControlLoopToUse in ConfiguredGrantConfig.

If the UE transmits a PUSCH associated with the first RS resource index $q_d$, the UE applies the first $P_{O\_UE\_PUSCH, b,f,c}(j)$ value, the first $\alpha_{b,f,c}(j)$ value, and $f_{b,f,c}(i, l)$ with the first *I* value for determining $P_{PUSCH,b,f,c}(i, j, q_d, l)$. If the UE transmits a PUSCH associated with the second RS resource index $q_d$, the UE applies the second $P_{O\_UE\_PUSCH,b,f,c}(j)$ value, the second $\alpha_{b,f,c}(j)$ value, and $f_{b,f,c}(i, l)$ with the second *I* value for determining $P_{PUSCH,b,f,c}(i, j, q_d, l)$.

If a UE transmits a PUCCH on active UL BWP *b* of carrier *f* in the primary cell *c* using PUCCH power control adjustment state with index *I*, the UE determines the PUSCH transmission power $P_{PUCCH,b,f,c}(i, q_u q_d, l)$ in PUSCH transmission occasion *i* as:

$$
P_{\text{PUCCH},b,f,c}(i, q_u, q_d, l) =
$$

$$
\min \left\{ \begin{array}{c} P_{\text{CMAX},f,c}(i), \\ P_{\text{O\_PUCCH},b,f,c}(q_u) + 10 \log_{10}\left(2^\mu \cdot M_{\text{RB},b,f,c}^{\text{PUCCH}}(i)\right) + PL_{b,f,c}(q_d) + \Delta_{\text{F\_PUCCH}}(F) + g_{b,f,c}(i,l) \end{array} \right\}
$$

[dBm] where: (1) $P_{\text{CMAX},f,c}(i)$ is the UE configured maximum output power defined in the 3GPP standard specification for carrier *f* of primary cell c in PUCCH transmission occasion *i*; and (2) $P_{\text{O\_PUCCH},b,f,c}(q_u)$ is a parameter composed of the sum of a component $P_{\text{O\_NOMIMAL,PUCCH}}$, provided by p0-nominal, or $P_{\text{O\_NOMIMAL,PUCCH}}$=0 dBm if p0-nominal is not provided, for carrier *f* of primary cell *c* and, if provided, a component $P_{\text{O\_UE\_PUCCH}}(q_u)$ provided by p0-PUCCH-Value in PO-PUCCH for carrier *f* of primary cell *c*, where $0 \le q_u < Q_u$. $Q_u$ is a size for a set of $P_{\text{O\_UE\_PUCCH}}$ values provided by maxNrofPUCCH-P0-PerSet. The set of $P_{\text{O\_UE\_PUCCH}}$ values is provided by p0-Set. If p0-Set is not provided to the UE, $P_{\text{O\_UE\_PUCCH}}(q_u) = 0$.

When a UE is provided by the network, e.g., via the higher layer parameter TCI-State_r17, M>1 joint DL and UL Rel. 17 unified TCI states or M>1 separate UL Rel. 17 unified TCI states or a first combination of M>1 joint DL and UL Rel. 17 unified TCI states and separate UL Rel. 17 unified TCI states or N>1 separate DL Rel. 17 unified TCI states or a second combination of N>1 joint DL and UL Rel. 17 unified TCI states and separate DL Rel. 17 unified TCI states or a third combination of N>1 joint DL and UL Rel. 17 unified TCI states, separate UL Rel. 17 unified TCI states and separate DL Rel. 17 unified TCI states via MAC CE or DCI (e.g., DCI format 1_1 or 1_2 with or without DL assignment) based signaling, following examples can be provided.

In one example, if configured by the network, first $P_{\text{O\_UE\_PUCCH},b,f,c}(q_u)$ value is provided by p0-PUCCH-Value through the link to a corresponding p0-PUCCH-Id, which provides an index to first PO-PUCCH associated with the indicated first joint DL and UL TCI state or first separate UL TCI state or first TCI state in the first combination of TCI states or first separate DL TCI state or first TCI state in the second combination of TCI states or first TCI state in the third combination of TCI states.

In another example, if configured by the network, second $P_{\text{O\_UE\_PUCCH},b,f,c}(q_u)$ value is provided by p0-PUCCH-Value through the link to a corresponding p0-PUCCH-Id, which provides an index to second P0-PUCCH2 associated with the indicated second joint DL and UL TCI state or second separate UL TCI state or second TCI state in the first combination of TCI states or second separate DL TCI state or second TCI state in the second combination of TCI states or second TCI state in the third combination of TCI states.

In yet another example, if configured by the network, first and second $P_{\text{O\_UE\_PUCCH},b,f,c}(q_u)$ values are respectively provided by p0-PUCCH-Value through the link to a corresponding p0-PUCCH-Id, which provides an index to first PO-PUCCH associated with the indicated first joint DL and UL TCI state or first separate UL TCI state or first TCI state in the first combination of TCI states or first separate DL TCI state or first TCI state in the second combination of TCI states or first TCI state in the third combination of TCI states, and p0-PUCCH-Value through the link to a corresponding p0-PUCCH-Id, which provides an index to second P0-PUCCH2 associated with the indicated second joint DL and UL TCI state or second separate UL TCI state or second TCI state in the first combination of TCI states or second separate DL TCI state or second TCI state in the second combination of TCI states or second TCI state in the third combination of TCI states.

Else, the UE could obtain the p0-PUCCH-Value value from the PO-PUCCH with p0-PUCCH-Id value equal to the minimum p0-PUCCH-Id value in p0-Set.

For a DL pathloss estimate $PL_{b,f,c}(q_d)$ in dB calculated by the UE using RS index $q_d$ for the active DL BWP of carrier $f$ of the primary cell c, when a UE is provided by the network, e.g., via the higher layer parameter TCI-State_r17, M>1 joint DL and UL Rel. 17 unified TCI states or M>1 separate UL Rel. 17 unified TCI states or a first combination of M>1 joint DL and UL Rel. 17 unified TCI states and separate UL Rel. 17 unified TCI states or N>1 separate DL Rel. 17 unified TCI states or a second combination of N>1 joint DL and UL Rel. 17 unified TCI states and separate DL Rel. 17 unified TCI states or a third combination of N>1 joint DL and UL Rel. 17 unified TCI states, separate UL Rel. 17 unified TCI states and separate DL Rel. 17 unified TCI states via MAC CE or DCI (e.g., DCI format 1_1 or 1_2 with or without DL assignment) based signaling, the UE could determine first RS resource index $q_d$ providing a periodic RS resource configured with qcl-Type set to "typeD" in first joint DL and UL TCI state or first separate UL TCI state or first TCI state in the first combination of TCI states or first separate DL TCI state or first TCI state in the second combination of TCI states or first TCI state in the third combination of TCI states, and second RS resource index $q_d$ providing a periodic RS resource configured with qcl-Type set to "typeD" in second joint DL and UL TCI state or second separate UL TCI state or second TCI state in the first combination of TCI states or second separate DL TCI state or second TCI state in the second combination of TCI states or second TCI state in the third combination of TCI states.

For the PUCCH power control adjustment state $g_{b,f,c}(i, l)$ defined in the 3GPP standard specification for active BWP b of carrier $f$ of primary cell c in PUCCH transmission occasion $i$, when a UE is provided by the network, e.g., via the higher layer parameter TCI-State_r17, M>1 joint DL and UL Rel. 17 unified TCI states or M>1 separate UL Rel. 17 unified TCI states or a first combination of M>1 joint DL and UL Rel. 17 unified TCI states and separate UL Rel. 17 unified TCI states or N>1 separate DL Rel. 17 unified TCI states or a second combination of N>1 joint DL and UL Rel. 17 unified TCI states and separate DL Rel. 17 unified TCI states or a third combination of N>1 joint DL and UL Rel. 17 unified TCI states, separate UL Rel. 17 unified TCI states and separate DL Rel. 17 unified TCI states via MAC CE or DCI (e.g., DCI format 1_1 or 1_2 with or without DL assignment) based signaling, following examples can be provided.

In one example, if configured by the network, first $l$ value is provided by closedLoopIndex through the link to a corresponding p0-PUCCH-Id, which provides an index to first PO-PUCCH associated with the indicated first joint DL and UL TCI state or first separate UL TCI state or first TCI state in the first combination of TCI states or first separate DL TCI state or first TCI state in the second combination of TCI states or first TCI state in the third combination of TCI states.

In another example, if configured by the network, second $l$ value is provided by closedLoopIndex through the link to a corresponding p0-PUCCH-Id, which provides an index to second P0-PUCCH2 associated with the indicated second joint DL and UL TCI state or second separate UL TCI state or second TCI state in the first combination of TCI states or second separate DL TCI state or second TCI state in the second combination of TCI states or second TCI state in the third combination of TCI states.

In yet another example, if configured by the network, first and second $l$ values are respectively provided by closedLoopIndex through the link to a corresponding p0-PUCCH-Id, which provides an index to first PO-PUCCH associated with the indicated first joint DL and UL TCI state or first separate UL TCI state or first TCI state in the first combination of TCI states or first separate DL TCI state or first TCI state in the second combination of TCI states or first TCI state in the third combination of TCI states, and closedLoopIndex through the link to a corresponding p0-PUCCH-Id, which provides an index to second P0-PUCCH2 associated with the indicated second joint DL and UL TCI state or second separate UL TCI state or second TCI state in the first combination of TCI states or second separate DL TCI state or second TCI state in the second combination of TCI states or second TCI state in the third combination of TCI states.

If the UE transmits a PUCCH associated with the first RS resource index $q_d$, the UE applies the first $P_{O\_UE\_PUCCH}(q_u)$ value and $g_{b,f,c}(i, l)$ with the first $l$ value for determining $P_{PUCCH,b,f,c}(i, q_u, q_d, l)$. If the UE transmits a PUCCH associated with the second RS resource index $q_d$, the UE applies the second $P_{O\_UE\_PUCCH}(q_u)$ value and $g_{b,f,c}(i, l)$ with the second $l$ value for determining $P_{PUCCH,b,f,c}(i, q_u, q_d, l)$.

In the present disclosure, the first joint DL and UL TCI state could correspond to the joint DL and UL TCI state with the lowest (or the highest) TCI state ID, the first separate UL TCI state could correspond to the separate UL TCI state with the lowest (or the highest) TCI state ID, the first TCI state in the first combination of TCI states could correspond to the TCI state in the first combination of TCI states with the lowest (or the highest) TCI state ID, the first separate DL TCI state could correspond to the separate DL TCI state with the lowest (or the highest) TCI state ID, the first TCI state in the second combination of TCI states could correspond to the TCI state in the second combination of TCI states with the lowest (or the highest) TCI state ID, or the first TCI state in the third combination of TCI states could correspond to the TCI state in the third combination of TCI states with the lowest (or the highest) TCI state ID.

Furthermore, the second joint DL and UL TCI state could correspond to the joint DL and UL TCI state with the highest (or the lowest) TCI state ID, the second separate UL TCI state could correspond to the separate UL TCI state with the highest (or the lowest) TCI state ID, the second TCI state in the first combination of TCI states could correspond to the TCI state in the first combination of TCI states with the highest (or the lowest) TCI state ID, the second separate DL TCI state could correspond to the separate DL TCI state with the highest (or the lowest) TCI state ID, the second TCI state in the second combination of TCI states could correspond to the TCI state in the second combination of TCI states with the highest (or the lowest) TCI state ID, or the second TCI state in the third combination of TCI states could correspond to the TCI state in the third combination of TCI states with the highest (or the lowest) TCI state ID.

The above flowcharts illustrate example methods that can be implemented in accordance with the principles of the present disclosure and various changes could be made to the methods illustrated in the flowcharts herein. For example, while shown as a series of steps, various steps in each figure could overlap, occur in parallel, occur in a different order, or occur multiple times. In another example, steps may be omitted or replaced by other steps.

Although the present disclosure has been described with exemplary embodiments, various changes and modifications may be suggested to one skilled in the art. It is intended that the present disclosure encompass such changes and modifications as fall within the scope of the appended claims. None of the description in this application should be read as implying that any particular element, step, or function is an essential element that must be included in the claims scope. The scope of patented subject matter is defined by the claims.

In addition to the foregoing explanations, the following enumerated Aspects 1 to 15 are also relevant for the present disclosure as part of the specification which must not be confused with the appended claims (that follow after the specification):

Aspect 1. A user equipment (UE) in a wireless communication system, the UE comprising: a transceiver configured to receive: information including a set of transmission configuration indication (TCI) states; and a configuration for a first physical uplink shared channel (PUSCH); and a processor operably coupled to the transceiver, the processor configured to: identify, according to the information, a set of uplink (UL) TCI states in a beam indication instance; identify, according to the configuration, a mapping configuration and a set of consecutive slots for transmitting on the first PUSCH; and associate TCI states in the set of UL TCI states with consecutive slots in the set of consecutive slots, respectively, based on the mapping configuration, wherein the transceiver is further configured to transmit on the first PUSCH in the consecutive slots according to the respectively associated TCI states.

Aspect 2. The UE of Aspect 1, wherein: the processor is further configured to associate first and second TCI states in the set of UL TCI states with first and second consecutive slots of two consecutive slots in the set of slots, and the transceiver is further configured to transmit on the first PUSCH in the first and second consecutive slots according to the first and second TCI states, respectively.

Aspect 3. The UE of Aspect 1, wherein: a number of slots in the set of consecutive slots is K>2, for the mapping configuration including a cyclic mapping pattern, the processor is further configured to associate first and second TCI states in the set of UL TCI states with first and second consecutive slots in the set of K consecutive slots and continue the cyclic mapping pattern for remaining slots in the set of K consecutive slots, and the transceiver is further configured to transmit on the first PUSCH in the set of K consecutive slots according to the cyclically mapped TCI states.

Aspect 4. The UE of Aspect 1, wherein: a number of slots in the set of consecutive slots is K>2, for the mapping configuration including a sequential mapping pattern, the processor is further configured to: associate a first TCI state in the set of UL TCI states with first and second consecutive slots in the set of K consecutive slots, associate a second TCI state in the set of UL TCI states with third and fourth consecutive slots in the set of K consecutive slots, and continue the sequential mapping pattern for remaining slots in the set of K consecutive slots, and the transceiver is further configured to transmit on the first PUSCH in the set of K consecutive slots according to the sequentially mapped TCI states.

Aspect 5. The UE of Aspect 1, wherein: the transceiver is further configured to receive a second configuration for a second PUSCH, the processor is further configured to: identify, according to the second configuration, a second mapping configuration and a set of nominal PUSCH repetitions for transmitting on the second PUSCH, and associate TCI states in the set of UL TCI states with the set of nominal PUSCH repetitions, respectively, based on the second mapping configuration, and the transceiver is further configured to transmit on the second PUSCH in the set of nominal PUSCH repetitions according to the respectively associated TCI states.

Aspect 6. The UE of Aspect 1, wherein: the transceiver is further configured to receive a second configuration for a number of slots for repetitions of a physical uplink control channel (PUCCH) transmission, and the processor is further configured to: use first and second TCI states in the set of UL TCI states for first and second repetitions of the PUCCH transmission, respectively, or alternate between the first and second TCI states in the set of UL TCI states for a number of repetitions of the PUCCH transmission.

Aspect 7. The UE of Aspect 1, wherein the processor is further configured to: identify a reference signal (RS) based on a TCI state in the set of UL TCI states, identify a slot in the set of consecutive slots associated with the TCI state, identify a nominal PUSCH repetition in a set of nominal PUSCH repetitions associated with the TCI state, estimate, based on the RS, a downlink (DL) pathloss for the slot, and estimate, based on the RS, a downlink (DL) pathloss for the nominal PUSCH repetition.

Aspect 8. A base station (BS) in a wireless communication system, the BS comprising: a transceiver configured to transmit: information including a set of transmission configuration indication (TCI) states; and a configuration for a first physical uplink shared channel (PUSCH); and a processor operably coupled to the transceiver, the processor configured to: identify, according to the information, a set of uplink (UL) TCI states in a beam indication instance; and identify, according to the configuration, a mapping configuration and a set of consecutive slots for receiving on the first PUSCH, wherein the mapping configuration indicates association of TCI states in the set of UL TCI states with consecutive slots in the set of consecutive slots, and wherein the transceiver is further configured to receive on the first PUSCH in the consecutive slots.

Aspect 9. The BS of Aspect 8, wherein the transceiver is further configured to: receive on the first PUSCH in the first and second consecutive slots, transmit a second configuration for a second PUSCH, and receive on the second PUSCH in the set of nominal PUSCH repetitions, wherein the processor is further configured to identify, according to the second configuration, a second mapping configuration and a set of nominal PUSCH repetitions for receiving on the second PUSCH; and wherein the mapping configuration indicates association of first and second TCI states in the set of UL TCI states with first and second consecutive slots of two consecutive slots in the set of slots, and wherein the second mapping configuration indicates association of TCI states in the set of UL TCI states with the set of nominal PUSCH repetitions, respectively.

Aspect 10. The BS of Aspect 8, wherein the transceiver is further configured to: receive on the first PUSCH in the set of K consecutive slots, transmit a second configuration for a number of slots for repetitions of a physical uplink control channel (PUCCH) transmission, and receive the repetitions of the PUCCH transmission according to the second configuration, and wherein a number of slots in the set of consecutive slots is K>2, for the mapping configuration including a cyclic mapping pattern, the mapping configuration indicates association of first and second TCI states in the set of UL TCI states with first and second consecutive slots in the set of K consecutive slots and to continue the cyclic mapping pattern for remaining slots in the set of K consecutive slots.

Aspect 11. The BS of Aspect 8, wherein the transceiver is further configured to receive on the first PUSCH in the set of K consecutive slots, and wherein a number of slots in the set of consecutive slots is K>2, for the mapping configuration including a sequential mapping pattern, the mapping configuration indicates association of a first TCI state in the set of UL TCI states with first and second consecutive slots in the set of K consecutive slots, association of a second TCI state in the set of UL TCI states with third and fourth consecutive slots in the set of K consecutive slots, and to continue the sequential mapping pattern for remaining slots in the set of K consecutive slots.

Aspect 12. The BS of Aspect 8, wherein a TCI state in the set of UL TCI states indicates a reference signal (RS) to estimate downlink (DL) pathloss for a slot in the set of consecutive slots associated with the TCI state, and wherein a TCI state in the set of UL TCI states indicates a reference signal (RS) to estimate downlink (DL) pathloss for a nominal PUSCH repetition in a set of nominal PUSCH repetitions associated with the TCI state.

Aspect 13. A method for operating a user equipment (UE), the method comprising: receiving information including a set of transmission configuration indication (TCI) states; receiving a configuration for a first physical uplink shared channel (PUSCH); identifying, according to the information, a set of uplink (UL) TCI states in a beam indication instance; identifying, according to the configuration, a mapping configuration and a set of consecutive slots for transmitting on the first PUSCH; associating TCI states in the set of UL TCI states with consecutive slots in the set of consecutive slots, respectively, based on the mapping configuration; transmitting on the first PUSCH in the consecutive slots according to the respectively associated TCI states; receiving a second configuration for a second PUSCH; identifying, according to the second configuration, a second mapping configuration and a set of nominal PUSCH repetitions for transmitting on the second PUSCH; associating TCI states in the set of UL TCI states with the set of nominal PUSCH repetitions, respectively, based on the second mapping configuration; and transmitting on the second PUSCH in the set of nominal PUSCH repetitions according to the respectively associated TCI states.

Aspect 14. The method of Aspect 13, wherein: associating TCI states in the set of UL TCI states with consecutive slots in the set of consecutive slots, respectively, comprises associating first and second TCI states in the set of UL TCI states with first and second consecutive slots of two consecutive slots in the set of slots, and transmitting on the first PUSCH in the consecutive slots according to the respectively associated TCI states comprises transmitting on the first PUSCH in the first and second consecutive slots according to the first and second TCI states, respectively.

Aspect 15. The method of Aspect 13, wherein: a number of slots in the set of consecutive slots is K>2, for the mapping configuration including a cyclic mapping pattern, associating TCI states in the set of UL TCI states with consecutive slots in the set of consecutive slots, respectively, comprises associating first and second TCI states in the set of UL TCI states with first and second consecutive slots in the set of K consecutive slots and continuing the cyclic mapping pattern for remaining slots in the set of K consecutive slots, and transmitting on the first PUSCH in the consecutive slots according to the respectively associated TCI states comprises transmitting on the first PUSCH in the set of K consecutive slots according to the cyclically mapped TCI states.

**Claims**

1. A method performed by a user equipment (UE) in a wireless communication system, the method comprising:

receiving, from a base station (BS), first information indicating at least one of a first transmission configuration indication (TCI) state, a second TCI state, or both of the first TCI state and the second TCI state for a physical uplink shared channel (PUSCH) transmission via a radio resource control (RRC) signaling;

identifying one among the first TCI state, the second TCI state, or both or the first TCI state and the second TCI state for the PUSCH transmission, based on the first information; and

transmitting, to the BS, the PUSCH based on the identification.

2. The method of claim 1,
wherein the first information includes a first indicator indicating at least one of the first TCI state, the second TCI state, or both of the first TCI state and the second TCI state for the PUSCH transmission.

3. The method of claim 1,
wherein the first TCI state and the second TCI are indicated by downlink control information (DCI) received from the BS.

4. The method of claim 1, further comprising:

receiving, from the BS, second information indicating both of the first TCI state and the second TCI state for a physical uplink control channel (PUCCH) transmission via the RRC signaling;

applying the first TCI state to a first slot of the PUCCH transmission and the second TCI state to a second slot of the PUCCH transmission; and

transmitting, to the BS, the PUCCH transmission.

5. The method of claim 4,
wherein the first TCI state and the second TCI state are alternately applied to the first slot and the second slot based on a number of switching for the PUCCH transmission.

6. A method performed by a user equipment (UE) in a wireless communication system, the method comprising:

receiving, from a base station (BS), first downlink control information (DCI) of a DCI format 0_1 or a DCI format 0_2, wherein the first DCI indicates a codepoint for a physical uplink shared channel (PUSCH) transmission;

identifying at least one of a first transmission configuration indication (TCI) state, a second TCI state, or both of the first TCI state and the second TCI state to be applied for the PUSCH transmission, based on the codepoint; and

transmitting, to the BS, the PUSCH based on the identification,

wherein, in case that the codepoint is 00, the first TCI state is applied to the PUSCH transmission,

wherein, in case that the codepoint is 01, the second TCI state is applied to the PUSCH transmission.

7. The method of claim 6,
wherein, in case that the codepoint is 10 or 11, both of the first TCI state and the second TCI state are applied to slots for the PUSCH transmission based on a number of slots for the PUSCH transmission.

8. The method of claim 7,

wherein, in case that the codepoint is 10 and the number of slots for the PUSCH transmission is 2, the first TCI state is applied to a first slot and the second TCI state is applied to a second slot,

wherein, in case that the codepoint is 10 and the number of slots for the PUSCH transmission is larger than 2 and a cyclic mapping is configured for the PUSCH transmission, the first TCI state is applied to the first slot and a third slot, and the second TCI state is applied to the second slot,

wherein, in case that the codepoint is 10 and the number of slots for the PUSCH transmission is larger than 2 and a sequential mapping is configured for the PUSCH transmission, the second TCI state is applied to the first slot and the third slot, and the first TCI state is applied to the second slot.

9. The method of claim 7,

wherein, in case that the codepoint is 11 and the number of slots for the PUSCH transmission is 2, the second TCI state is applied to a first slot and the first TCI state is applied to a second slot,

wherein, in case that the codepoint is 11 and the number of slots for the PUSCH transmission is larger than 2 and a cyclic mapping is configured for the PUSCH transmission, the second TCI state is applied to the first slot and a third slot, and the first TCI state is applied to the second slot,
wherein, in case that the codepoint is 11 and the number of slots for the PUSCH transmission is larger than 2 and a sequential mapping is configured for the PUSCH transmission, the second TCI state is applied to the first slot and the second slot, and the first TCI state is applied to the third slot and a fourth slot.

10. The method of claim 6,
wherein, in case that the PUSCH transmission is scheduled by a second DCI of a DCI format 0_0, the first TCI is applied to the PUSCH transmission.

【Figure 1】

【Figure 2】

【Figure 3】

116

【Figure 4】

【Figure 5】

【Figure 6A】

【Figure 6B】

【Figure 7】

【Figure 8】

【Figure 9】

900

RRC configured list/set/pool of TCI states

| TCI #1 | TCI #2 | TCI #3 | TCI #4 | TCI #5 | ... | TCI #N_tci |

MAC CE based TCI state/beam indication

TCI state IDs (TCI #3, TCI #5)

【Figure 10】

1000

RRC configured list/set/pool of TCI states

| TCI #1 | TCI #2 | TCI #3 | TCI #4 | TCI #5 | ... | TCI #N_tci |

DCI based TCI state/beam indication

TCI state IDs (TCI #3, TCI #5)

**[Figure 11]**

1100

RRC configured list/set/pool of TCI states

| TCI #1 | TCI #2 | TCI #3 | TCI #4 | TCI #5 | . . . | TCI #$N_{TCI}$ |

Candidate TCI states activated via MAC-CE activation command

| TCI #1 | TCI #3 | TCI #5 | . . . | TCI #63 |

DCI based TCI state/beam indication

TCI state ID (TCI #3, TCI #5)

EP 4 518 236 A1

【Figure 12】

【Figure 13】

Europäisches
Patentamt

European
Patent Office

Office européen
des brevets

# EUROPEAN SEARCH REPORT

**Application Number**

EP 25 15 2222

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 879 738 A1 (FRAUNHOFER GES FORSCHUNG [DE]) 15 September 2021 (2021-09-15)<br>* paragraphs [0004] - [0038], [0025] - [0055], [0104] - [0205] *<br>- - - - - | 1-10 | INV.<br>H04L5/00<br>H04B7/022<br>H04B7/06 |
| X | WO 2021/159065 A1 (OFINNO LLC) 12 August 2021 (2021-08-12)<br>* paragraphs [0139] - [0144], [0150] - [0188], [0230] - [0311] *<br>- - - - - | 1-3 | |
| A | US 2021/136802 A1 (CIRIK ALI [US] ET AL) 6 May 2021 (2021-05-06)<br>* paragraphs [0170] - [0360] *<br>- - - - - | 1-10 | |

**TECHNICAL FIELDS
SEARCHED (IPC)**

H04L

The present search report has been drawn up for all claims

| Place of search | Date of completion of the search | Examiner |
|---|---|---|
| The Hague | 22 January 2025 | Dhibi, Youssef |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons
.......................................................................
& : member of the same patent family, corresponding
  document

EPO FORM 1503 03.82 (P04C01)

**ANNEX TO THE EUROPEAN SEARCH REPORT
ON EUROPEAN PATENT APPLICATION NO.**

EP 25 15 2222

This annex lists the patent family members relating to the patent documents cited in  the above-mentioned European search report.
The members are as contained in the European Patent Office EDP file on
The European Patent Office is in no way liable for these particulars which are merely given for the purpose of information.

22-01-2025

| Patent document cited in search report | | Publication date | Patent family member(s) | | Publication date |
|---|---|---|---|---|---|
| EP 3879738 | A1 | 15-09-2021 | CN | 115362653 A | 18-11-2022 |
| | | | EP | 3879738 A1 | 15-09-2021 |
| | | | EP | 4118779 A1 | 18-01-2023 |
| | | | EP | 4418600 A2 | 21-08-2024 |
| | | | ES | 2988380 T3 | 20-11-2024 |
| | | | JP | 7520992 B2 | 23-07-2024 |
| | | | JP | 2023510639 A | 14-03-2023 |
| | | | JP | 2024133139 A | 01-10-2024 |
| | | | US | 2023209567 A1 | 29-06-2023 |
| | | | US | 2024032063 A1 | 25-01-2024 |
| | | | US | 2025024465 A1 | 16-01-2025 |
| | | | WO | 2021180897 A1 | 16-09-2021 |
| WO 2021159065 | A1 | 12-08-2021 | US | 2022386355 A1 | 01-12-2022 |
| | | | WO | 2021159065 A1 | 12-08-2021 |
| US 2021136802 | A1 | 06-05-2021 | CA | 3098280 A1 | 05-05-2021 |
| | | | EP | 3820052 A1 | 12-05-2021 |
| | | | US | 2021136802 A1 | 06-05-2021 |

EPO FORM P0459

For more details about this annex : see Official Journal of the European Patent Office, No. 12/82

## REFERENCES CITED IN THE DESCRIPTION

### Patent documents cited in the description

- US 63288993
- US 63290494
- US 06252122
- US 584239 A
- US 584239

### Non-patent literature cited in the description

- NR; Physical channels and modulation. *3GPP TS 38.211 v16.1.0*
- NR; Multiplexing and Channel coding. *3GPP TS 38.212 v16.1.0*
- NR; Physical Layer Procedures for Control. *3GPP TS 38.213 v16.1.0*
- NR; Physical Layer Procedures for Data. *3GPP TS 38.214 v16.1.0*
- NR; Medium Access Control (MAC) protocol specification. *3GPP TS 38.321 v16.1.0*
- NR; Radio Resource Control (RRC) Protocol Specification. *3GPP TS 38.331 v16.1.0*